## Europäisches Patentamt

## European Patent Office

## Office européen des brevets

(19)

(11) **EP 1 672 569 A1**

(12) **EUROPEAN PATENT APPLICATION**

(43) Date of publication:
**21.06.2006 Bulletin 2006/25**

(51) Int Cl.:
*G06N 1/00* (2006.01)

(21) Application number: **04106715.8**

(22) Date of filing: **20.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicants:
- **STMicroelectronics S.r.l.**
  **20041 Agrate Brianza (Milano) (IT)**
- **YAMAHA MOTOR CO., LTD.**
  **Iwata-shi**
  **Shizuoka 438-8501 (JP)**

(72) Inventors:
- **Amato, Paolo**
  **20051, Limbiate (IT)**
- **Porto, Domenico Massimiliano**
  **95123, Catania (IT)**

- **Branciforte, Marco**
  **95131, Catania (IT)**
- **Calabrò, Antonino**
  **89018, Villa San Giovanni (IT)**
- **Ulyanov, Sergei Viktorovitch**
  **26013, Crema (IT)**
- **Takahashi, Kazuki**
  **26900, Lodi (IT)**
- **Panfilov, Sergey Alexandrovich**
  **26013, Crema (IT)**
- **Litvintseva, Liudmila Vasilievna**
  **26013, Crema (IT)**
- **Ulyanov, Ilya Sergeevitch**
  **128516, Moscow (RU)**

(74) Representative: **Pellegri, Alberto et al**
  **c/o Società Italiana Brevetti S.p.A.**
  **Piazza Repubblica, 5**
  **21100 Varese (IT)**

(54) **A method of performing a quantum algorithm for simulating a genetic algorithm**

(57) In the present method of performing a quantum algorithm the superposition, entanglement and interference operators are determined for performing selection, crossover and mutation operations according to a genetic algorithm. Moreover, entanglement vectors generated by the entanglement operator of the quantum algorithm may be processed by a wise controller implementing a genetic algorithm, before being input to the interference operator.

This algorithm may be easily implemented with a hardware quantum gate or with a software computer program running on a computer. Moreover, it can be used in a method for controlling a process and a relative control device of a process which is more robust, requires very little initial information about dynamic behavior of control objects in design process of intelligent control system, or random noise insensitive (invariant) in measurement system and in control feedback loop.

**FIG. 3**

**Description**

FIELD OF THE INVENTION

The present invention relates to quantum algorithms and genetic algorithms, and more precisely to a method of performing a quantum algorithm for simulating a genetic algorithm, a relative hardware quantum gate and a relative genetic algorithm, and a novel method of designing quantum gates.

BACKGROUND OF THE INVENTION

Computation, based on the laws of classical physics, leads to different constraints on information processing than computation based on quantum mechanics.
Quantum computers promise for solving many intractable problems, but, unfortunately, there currently exist no algorithms for "programming" a quantum computer. Calculation in a quantum computer, like calculation in a conventional computer, can be described as a marriage of quantum hardware (the physical embodiment of the computing machine itself, such as quantum gates and the like), and quantum software (the computing algorithm implemented by the hardware to perform the calculation). To date, quantum software algorithms, such as Shor's algorithm, used to solve problems on a quantum computer have been developed on an ad hoc basis without any real structure or programming methodology.
This situation is somewhat analogous to attempting to design a conventional logic circuit without the use of a Karnaugh map. A logic designer, given a set of inputs and corresponding desired outputs, could design a complicated logic circuit using NAND gates without the use of a Karnaugh map. However, the unfortunate designer would be forced to design the logic circuit more or less by intuition, trial, and error. The Karnaugh map provides a structure and an algorithm for manipulating logical operations (AND, OR, etc.) in a manner that allows a designer to quickly design a logic circuit that will perform a desired logic calculation.
The lack of a programming or program design methodology for quantum computers severely limits the usefulness of the quantum computer. Moreover, it limits the usefulness of the quantum principles, such as superposition, entanglement and interference that give rise to the quantum logic used in quantum computations. These quantum principles suggest, or lend themselves, to problem-solving methods that are not typically used in conventional computers.
These quantum principles can be used with conventional computers in much the same way that genetic principles of evolution are used in genetic optimizers today. Nature, through the process of evolution, has devised a useful method for optimizing large-scale nonlinear systems. A genetic optimizer running on a computer efficiently solves many previously difficult optimization problems by simulating the process of natural evolution. Nature also uses the principles of quantum mechanics to solve problems, including optimization-type problems, searching-type problems, selection-type problems, etc. through the use of quantum logic.
However, the quantum principles, and quantum logic, have not been used with conventional computers because no method existed for programming an algorithm using the quantum logic.
Quantum algorithms are also used in quantum soft computing algorithms for controlling a process. The documents WO 01/67186, WO 2004/012139, US 6,578,018, US 2004/0024750 disclose these methods for controlling a process, in particular for optimizing a shock absorber or for controlling an internal combustion engine.
In particular, the documents US 6,578,018 and WO 01/67186 disclose methods that use quantum algorithms and genetic algorithms for training a neural network that control a fuzzy controller that generates a parameter setting signal for a classical PID controller of the process. The quantum algorithms implemented in these methods process a teaching signal generated with a genetic algorithm, and provide it to the neural network to be trained.
Actually, quantum algorithms and genetic algorithms are used as substantially separate entities in these control methods. It would be desirable to have an algorithm obtained as a merging of quantum algorithms and genetic algorithms in order to have advantage of both the quantum computing and GAs parallelism, as the partial components of general Quantum Evolutionary Programming.

SUMMARY OF THE INVENTION

A new type of algorithm has been devised, herein referred as QGA (Quantum Genetic Algorithm), which is substantially a merging of a genetic algorithm and a quantum algorithm.
QGA (as the component of general Quantum Evolutionary Programming) starts from this idea, which can take advantage of both quantum computing and GAs paradigms.
The key of this general idea is to explore the quantum effects of superposition and entanglement operators to create a generalized coherent state with the increased diversity of quantum population that store individuals and their fitness of successful solutions. Using the *complementarity* between entanglement and interference operators with a quantum searching process (based on interference and measurement operators) successful solutions from designed state can be extracted.

In particularity, especially *the major advantage* for a QGA consists in using of the increased diversity of a quantum population (due to superposition of possible solutions) in optimal searching of successful solutions in non-linear stochastic optimization problem for control objects with uncertainty/fuzzy dynamic behavior.

It has been found and is the object of this invention a method of performing a quantum algorithm. The main difference of this method with the well known quantum algorithms consists in that the superposition, entanglement and interference operators are determined for performing selection, crossover and mutation operations according to a genetic algorithm. Moreover, entanglement vectors generated by the entanglement operator of the quantum algorithm may be processed by a wise controller implementing a genetic algorithm, before being input to the interference operator.

This algorithm of the invention may be easily implemented with a hardware quantum gate or with a software computer program running on a computer. Moreover, it can be used in a method for controlling a process and a relative control device of a process which is more robust, requires very little initial information about dynamic behavior of control objects in design process of intelligent control system, or random noise insensitive (invariant) in measurement system and in control feedback loop.

Another innovative aspect of this invention consists in a method of performing a genetic algorithm, wherein the selection, crossover and mutation operations are performed by means of the quantum algorithm of this invention.

According to another innovative aspect of this invention, a method of designing quantum gates is provided. This method provides a standard procedure to be followed for designing quantum gates. By following this procedures it is easy to understand how basic gates, such as the well known two-qubits gates for performing a Hadamard rotation or an identity transformation, must be coupled together for realizing a hardware quantum gate performing classically a desired quantum algorithm.

One embodiment includes a software system and method for designing quantum gates. The quantum gates can be used in a quantum computer or a simulation of a quantum computer. In one embodiment, a quantum gate is used in a global optimization of Knowledge Base (KB) structures of intelligent control systems that are based on quantum computing and on a quantum genetic search algorithm *(QGSA).*

In another embodiment, an efficient quantum simulation system is used to simulate a quantum computer for optimization of intelligent control system structures based on quantum soft computing.

The invention is defined in the annexed claims.


BRIEF DESCRIPTION OF THE DRAWINGS

The different aspects and advantages of this invention will be even more evident through a detailed description referring to the attached drawings, wherein:

**Figure 1** shows a known structure of a quantum control system;
**Figure 2** shows a general structure of self organizing intelligent control system of this invention based on quantum soft computing;
**Figure 3** shows in detail the block 103 of Figure 2 and the method of the invention of performing a quantum algorithm;
**Figure 4** shows in detail the block 2001 of Figure 3;
**Figure 5** shows structure of QA simulation software of this invention;
**Figure 6** summarizes the method of designing quantum gates of this invention;
**Figure 7** shows how to encode bit strings to be processed with the quantum genetic algorithm of this invention;
**Figure 8** shows a crossover operation on the bit strings encoded as in Figure 7;
**Figure 9** shows how to perform a mutation operation on the bit strings encoded as in Figure 7;
**Figure 10** is a basic scheme of Quantum Algorithms;
**Figure 11** is a sample quantum circuit;
**Figure 12** is a flowchart of Quantum Algorithms;
**Figure 13** illustrates the structure of a quantum block;
**Figures 14 and 15** show logic circuits for calculating components of a vector rotated with a Hadamard rotation;
**Figures 16 and 17** show logic circuits for performing tensor products;
**Figure 18** illustrates the effect of any entanglement operator;
**Figure 19** depicts a PROM matrix for performing entanglement operations;
**Figure 20** defines the problem solved by the Deutsch-Jozsa's quantum algorithm;
**Figure 21** defines the process steps for designing a quantum gate performing the Deutsch-Jozsa's quantum algorithm;
**Figure 22** illustrates how to design a quantum gate for performing the Deutsch-Jozsa's algorithm;
**Figures 23 to 27** show five quantum circuits according to the Deutsch-Jozsa's quantum algorithm for a constant function with value 1;

**Figure 28** shows the final quantum circuit according to the Deutsch-Jozsa's quantum algorithm for a constant function with value 0;

**Figure 29** is a magnified view of the circuit in Figure 22c;

**Figure 30** shows a Deutsch-Jozsa's quantum gate;

**Figures 31a to 31d** illustrate sample probability amplitudes in a Deutsch-Jozsa's algorithm;

**Figure 32** shows the initial constant function encoding of the Deutsch-Jozsa's quantum algorithm;

**Figure 33** shows the initial balanced function encoding of the Deutsch-Jozsa's quantum algorithm;

**Figure 34** shows the step of preparation for the superposition operator in a Deutsch-Jozsa's quantum algorithm;

**Figures 35 to 38** show the step of preparation of the entanglement operator in a Deutsch-Jozsa's quantum algorithm;

**Figure 39** shows the step of preparation of the interference operator in a Deutsch-Jozsa's quantum algorithm;

**Figure 40** shows the superposition and interference operators in a Deutsch-Jozsa's quantum algorithm;

**Figure 41** described the quantum gates for the Deutsch-Jozsa's quantum algorithm;

**Figure 42** illustrates the execution of the Deutsch-Jozsa's quantum algorithm for constant functions;

**Figure 43** illustrates the execution of the Deutsch-Jozsa's quantum algorithm for balanced functions;

**Figure 44** illustrates the interpretation of results of the Deutsch-Jozsa's quantum algorithm;

**Figure 45** shows XOR gates implementing Deutsch-Jozsa's entanglement;

**Figure 46** illustrates the problem solved by the Shor's quantum algorithm;

**Figure 47** shows the process steps for designing a Shor's quantum gate according to this invention;

**Figure 48** illustrates schematically how to design a quantum gate for performing the Shor's algorithm;

**Figure 49** shows the preparation of the superposition operator of the Shor's algorithm;

**Figure 50** shows the preparation of the entanglement operator of the Shor's algorithm;

**Figure 51** shows the real and imaginary parts of the interference operator of the Shor's quantum algorithm;

**Figure 52** shows the amplitude and phase of the interference operator of the Shor's quantum algorithm;

**Figure 53** shows the real and imaginary parts of the Shor's quantum gate with a single iteration;

**Figure 54** shows the amplitude and phase of the Shor's quantum gate with a single iteration;

**Figure 55** shows the real and imaginary parts of the Shor's quantum gate with two iterations;

**Figure 56** shows the real and imaginary parts of the Shor's quantum gate with three iterations;

**Figure 57** illustrates the problem solved by the Grover's quantum algorithm;

**Figure 58** shows the process steps for designing a Grover's quantum gate according to this invention;

**Figure 59** illustrates schematically how to design a quantum gate for performing the Grover's algorithm;

**Figure 60** shows the initial constant function encoding of the Grover's quantum algorithm;

**Figure 61** shows the initial balanced function encoding of the Grover's quantum algorithm;

**Figure 62** shows the step of preparation of the superposition operator in a Grover's quantum algorithm;

**Figure 63** show the step of preparation of the entanglement operator in a Grover's quantum algorithm with a single iteration;

**Figure 64** show the step of preparation of the entanglement operator in a Grover's quantum algorithm with two and three iterations;

Figure 65 shows the step of preparation of the interference operator in a Grover's quantum algorithm;

Figure 66 shows the superposition and interference operators in a Grover's quantum algorithm;

Figure 67 shows XOR gates implementing Grover's entanglement.

Figure 68a illustrates the result interpretation step in a Grover's quantum algorithm;

Figure 68b shows sample results of the Grover's quantum algorithm;

Figure 68c shows a general scheme of a hardware for performing the Grover's quantum algorithm;

Figure 69 shows a hardware prototype for performing the Grover's quantum algorithm;

Figures 70 to 75 shows the evolution of the probability of finding an element in a database using the hardware prototyped Figure 69;

Figure 76 summarizes the probability evolution of Figures 70 to 75.

## DETAILED DESCRIPTION OF THE INVENTION

A new approach in intelligent control system design is considered: global optimization problem (GOP) solution based on quantum soft computing optimizer. This approach is the background for HW design of QGA.

In order to better explain the various aspects of this invention, the ensuing description is organized in chapters.

## 1. OVERVIEW OF INTELLIGENT CONTROL SYSTEM BASED ON QUANTUM SOFT COMPUTING

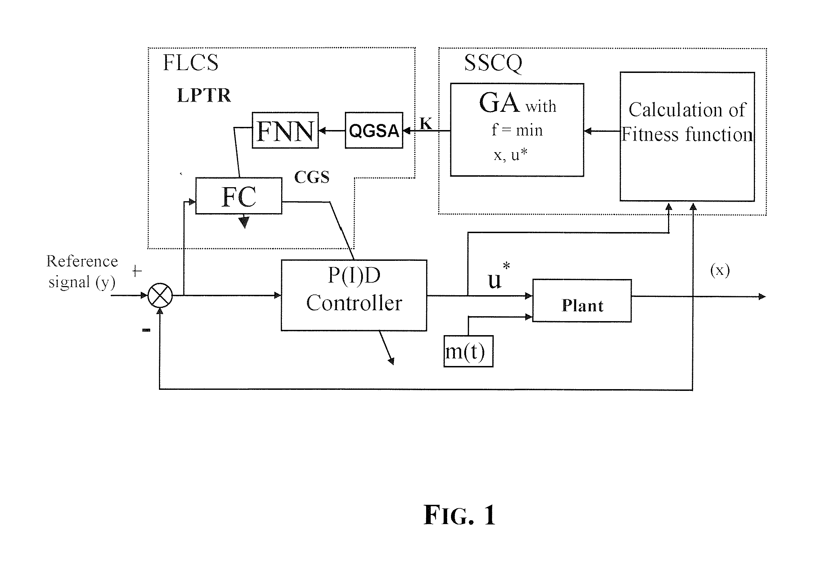

Figure 1 shows the structure of intelligent control system based on quantum soft computing described in patents US 6,578,018 B1 and in the document WO 01/67186 A1.

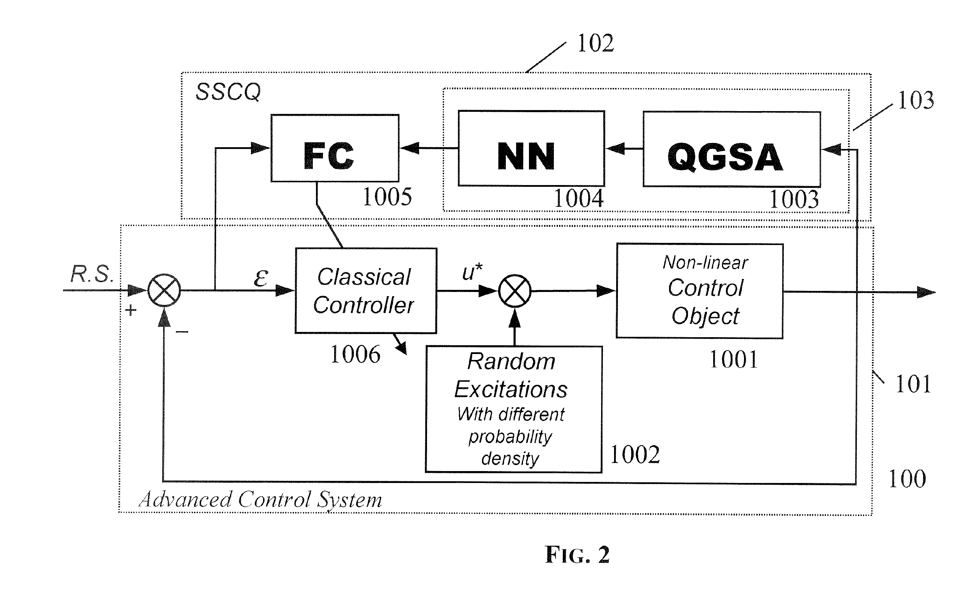

Figure 2 shows a novel general structure of an intelligent control system 100 based on quantum soft computing that includes a Simulation System of Control Quality (SSCQ) 102 and an Advanced Control System 101. The SSCQ 102 includes a Quantum Soft Computing Optimizer (QSCO) 103. The QSCO 103 includes a Quantum Genetic Search Algorithm 1003 that provides teaching signal to a Neural Network (NN) 1004. Control information from the NN 1004 is provided to a Fuzzy Controller (FC) 1005. The SSCQ 102 provides a simulation system of control laws of coefficient gains for a classical controller 1006 in the advanced control system 101. The QGSA 1003 provides an optimization process based on quantum soft computing.

The QGSA 1003 can be implemented on a quantum computer or simulated as described below using classical efficient simulation methods of quantum algorithms (QA's) on computers with classical (von Neumann) architecture.

*Structure of quantum genetic search algorithm.* The mathematical structure of the QGSA 1003 can be described as logical set of operations:

$$
Q\,G\,S=A \left\{ C,\ E_v,\ v^0 P,\ L,\ \underbrace{S \Omega \mu p}_{GA\text{-}operators},\ \underbrace{E_{nt},\ I_{nt}}_{QA\text{-}operators},\ \boxed{\Lambda} \right\} \tag{1}
$$

where C is the genetic coding scheme of individuals for a given problem; Ev is the evaluation function to compute the fitness values of individuals; $P^0$ is the initial population; L is the size of the population; $\Omega$ is the selection operator; $\chi$ is the crossover operator; $\mu$ is he mutation operator; *Sup* is the quantum linear superposition operator; *Ent* is the quantum entanglement operator (quantum super-correlation); *Int* is the interference operator. The operator A represents termination conditions that include the stopping criteria as a minimum of Shannon/von Neumann entropy, the optimum of the fitness functions, and/or minimum risk. Structure of Quantum Evolutionary Programming is a partial case of Eq. (1) and briefly is described hereinafter in chapter 3 about Quantum Evolutionary Programming (QEP).

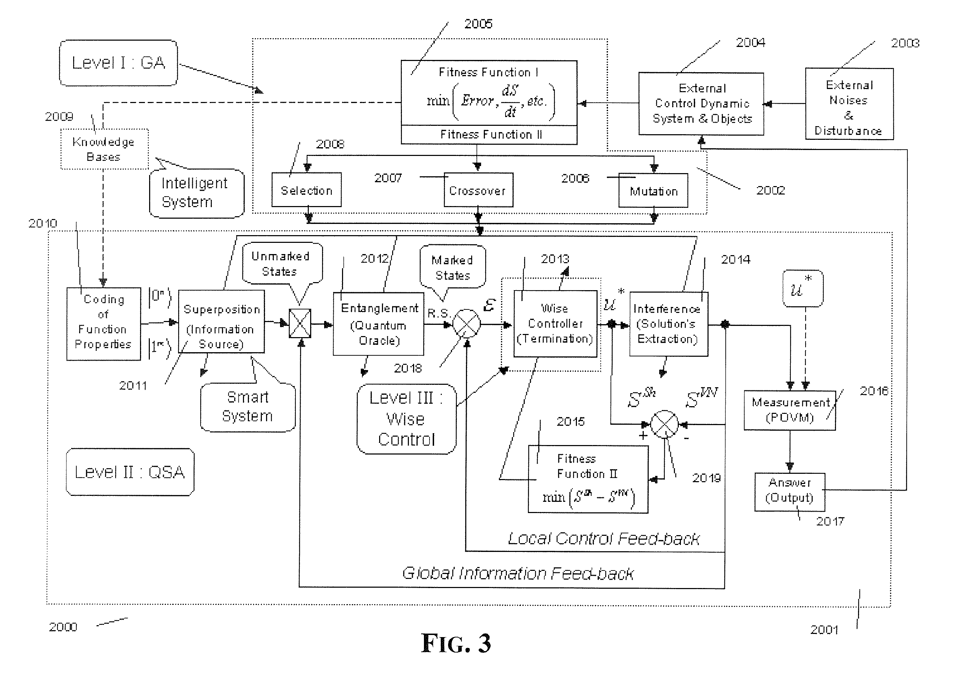

Figure 3 is a block diagram of one embodiment of the QGSA 1003 as a QGSA 2000 that provides global optimization of a KB of an intelligent smart control systems based on quantum computing. The structure of the QGSA 2000 shown in Figure 3 can be described as a logical set of operations from Eq. (1). Logical combinations of operators from Eq. (1) represent different models of QGSA.

According to Eq. (1), the QGSA 1003 (and thus the QGSA 2000) is realized using the _three_ genetic algorithm operations of selection-reproduction, crossover, and mutation, and the _three_ quantum search algorithm operations of superposition, entanglement and interference.

_On control physical level,_ in the system 2000, a disturbance block 2003 produces external disturbances (e.g., noise) on a control object model 2004 (the model 2004 includes a model of the controlled object). An output of the model block 2004 is the response of the controlled object and is provided to an input of a GA block 2002.

The GA block 2002 includes GA operators (mutation in a mutation block 2006, crossover in a crossover block 2007 and selection in a selection block 2008) and _two fitness functions:_ a Fitness Function I 2005 for the GA; and a Fitness Function II 2015 for a wise controller 2013 of QSA (Quantum Search Algorithm) termination. Output of the GA block 2002 is input for a KB block 2009 that represents the Knowledge Bases of fuzzy controllers for different types of external excitations from block 2003. An output of block 2009 is provided to a coding block 2010 which provides coding of function properties in look-up tables of fuzzy controllers.

Thus, outputs from the coding block 2010 are provided to a superposition block 2011. An output of the superposition block 2011 (after applying the superposition operator) represents a joint Knowledge Base for fuzzy control. The output from the superposition block 2011 is provided to an entanglement block 2012 that realizes the entanglement operator and chooses marked states using an oracle model. An output of the entanglement block 2012 includes marked states that are provided to a comparator 2018. The output of the comparator 2018 is an error signal that is provided to the wise controller 2013. The wise controller 2013 solves the termination problem of the QSA. Output from the wise controller 2013 is provided to an interference block 2014 that describes the interference operator of the QSA. The interference block 2014 extracts the solutions. Outputs of the wise controller 2013 and the interference block 2014 are used to calculate the corresponding values of Shannon and von Neumann entropies.

The differences of Shannon and von Neumann entropies are calculated by a comparator 2019 and provided to the Fitness Function II 2015. The wise controller 2013 provides an optimal signal for termination of the QSA with measurement in a measurement block 2016 "good" solutions as answers in an output of Block 2017.

_On gate level,_ in the QGSA 2000, a superposition block 2011 provides a superposition of classical states to an entanglement block 2012. The entanglement block 2012 provides the entangled states to an interference block 2014. In one embodiment, the interference block 2014 uses a Quantum Fast Fourier Transform (QFFT) to generate interference.

The interference block 2014 provides transformed states to a measurement and observation/decision block 2013 as wise controller. The observation block 2013 provides observations (control signal u*) to a measurement block 2016. The observation/decision block 2013 includes a fitness function to configure the interference provided in the interference block 2014. Decision data from the decision block 2013 is decoded in a decoding block 2017 and using stopping information criteria 2015 a decision regarding the termination of the algorithm is made. If the algorithm does not terminate, then decision data are provided to the superposition block 2011 to generate a new superposition of states.

Therefore, the superposition block 2011 creates a superposition of states from classical states obtained from soft computing simulation. The entanglement block 2012 creates entanglement states controlled by the GA 2002. The interference block 2014 applies the interference operations described by the fitness function in the decision block 2005. The decision block 2013 and the stopping information block 2015 determine the QA's stopping problem based on criteria of minimum Shannon/Von Neumann entropy.

An example of how the GA 2002 modifies the superposition, entanglement and interference operators, as schematically represented in Figure 3 is shown.

The following chapter 3 illustrates in detail how the GA controls the execution of each operation of the quantum search algorithm in practical cases.

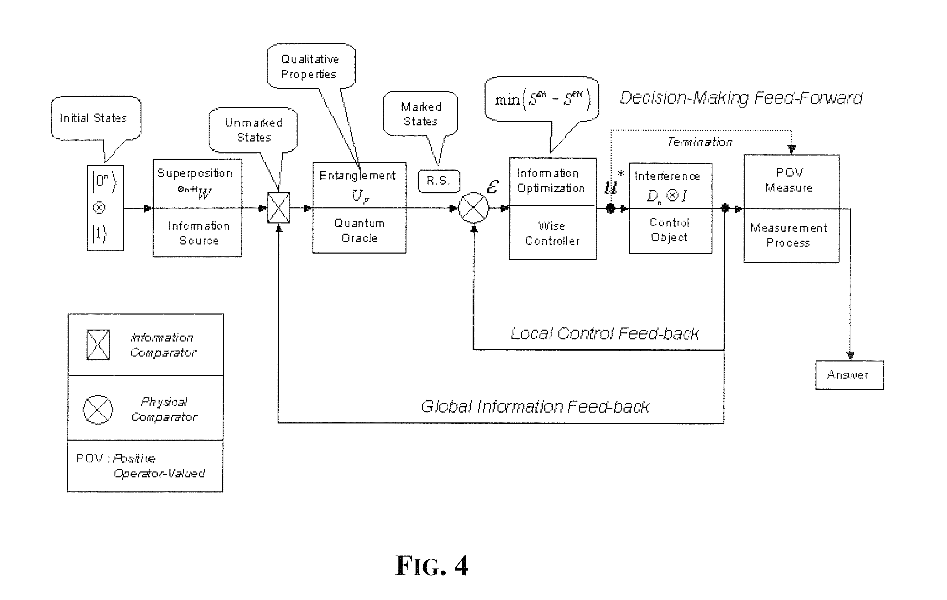

Figure 4 shows a self-organized structure of an intelligent QSA wise control system 2000 based on a QSA 2001. This structure is used below for HW-gate design of quantum search algorithms.

**Solving Problem**: a general Quantum Algorithm (QA), written as a Quantum Circuit, can be automatically translated into the corresponding Programmable Quantum Gate for efficient classical simulation of an intelligent control system based on Quantum (Soft) Computing. This gate is represented as a quantum operator in matrix form such that, when it is applied to the vector input representation of the quantum register state, the result is the vector representation of the desired register output state.

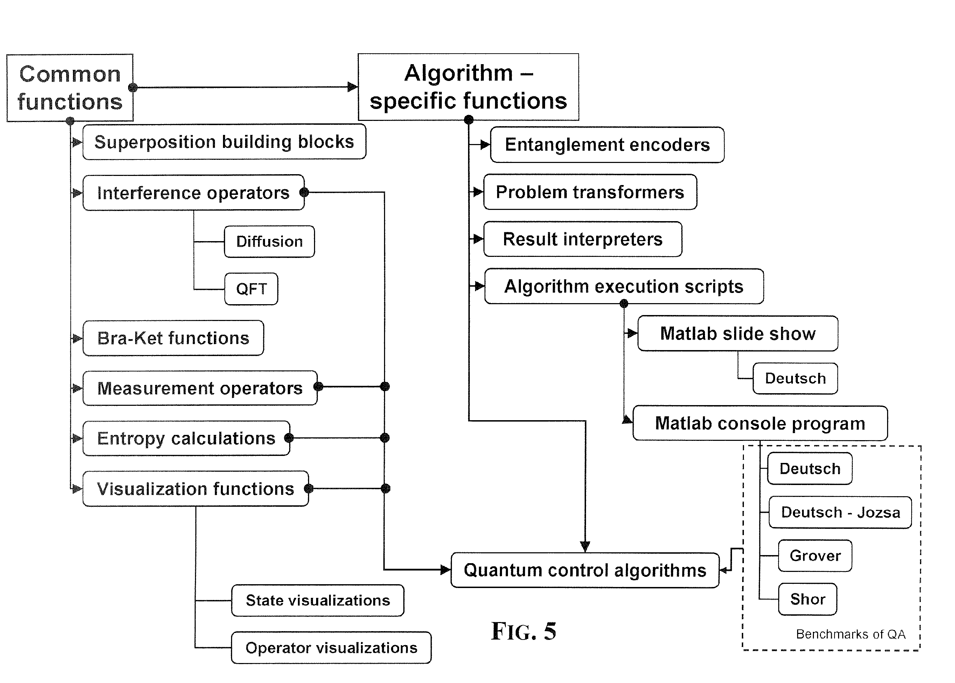

Figure 5 shows the structure of QAG simulation software.

The simulation system of quantum computation is based on quantum algorithm gates (QAG). The design process of QAG includes the matrix design form of three quantum operators: superposition *(Sup),* entanglement ($U_F$) and interference *(Int).* In general form, the structure of a QAG can be described as follows:

$$Q \quad A = \left[ \left( G \quad \otimes^n n \right) \cdot t_F \right]^{h+1}_{n} \cdot \left[ U \quad \otimes^m S \right] \qquad (2)$$

where $I$ is the identity operator; the symbol $\otimes$ denotes the tensor product; $S$ is equal to $I$ or H and dependent on the problem description. One portion of the design process in Eq. (2) is the type-choice of the entanglement problem-dependent operator $U_F$ that physically describes the qualitative properties of the function $f$ (such as, for example, the FC-KB in a QSC simulation).

The coherent intelligent states of QA's that describe physical systems are those solutions of the corresponding Schrödinger equations that represent the evolution states with minimum of entropic uncertainty (in Heisenberg-Schrödinger sense, they are those quantum states with "maximum classical properties"). The Hadamard Transform creates the superposition on classical states, and quantum operators such as *CNOT* create robust entangled states. The Quantum Fast Fourier Transform (QFFT) produces interference.

The efficient implementations of a number of operations for quantum computation include controlled phase adjustment of the amplitudes in the superposition, permutation, approximation of transformations and generalizations of the phase adjustments to block matrix transformations. These operations generalize those used in quantum search algorithms (QSA) that can be realized on a classical computer. This approach is applied below (see Chapter 4) to the efficient simulation on classical computers of the Deutsch QA, the Deutsch-Jozsa QA, the Simon QA, the Shor's QA and/or the Grover QA and any control QSA for simulation of a robust KB (Knowledge Base) of fuzzy control for P-, PD-, or PID-controllers with different random excitations on control objects, or with different noises in information/control channels of intelligent control systems.

2. STRUCTURE AND MAIN QUANTUM OPERATIONS OF QA SIMULATION SYSTEM

Figure 5 shows the structure of a software system for simulation a QAs.

The software system is divided into two general sections: (i) The first section involves *common functions;* (ii) The second section involves *algorithm-specific functions* for realizing the concrete algorithms.

   *1. Common functions.* The common functions include:

- Superposition building blocks

  - Interference building blocks
  - Bra-Ket functions
  - Measurement operators
  - Entropy calculation operators
  - Visualization functions
  - State visualization functions
  - Operator visualization functions

2. *Algorithm-specific functions.* The algorithm-specific functions include:

- Entanglement encoders

  - Problem transformers
  - Result interpreters
  - Algorithm execution scripts
  - Deutsch algorithm execution script
  - Deutsch Jozsa's algorithm execution script
  - Grover's algorithm execution script
  - Shor's algorithm execution script
  - Quantum control algorithms as scripts

The superposition building blocks implement the superposition operator as a combination of the tensor products of Walsh-Hadamard H operators with the identity operator $I$ :

$$H = \frac{1}{\sqrt{2}} \begin{bmatrix} 1 & 1 \\ 1 & -1 \end{bmatrix}, \quad I = \begin{bmatrix} 1 & 0 \\ 0 & 1 \end{bmatrix}$$

For most algorithms, the superposition operator can be expressed as:

$$S = \left( \overset{k_1}{\underset{i=1}{\otimes}} H \right) \otimes \left( \overset{k_2}{\underset{i=1}{\otimes}} S \right),$$

where $k_1$ and $k_2$ are the numbers of the inclusions *of H* and *of S* into the corresponding tensor products.
Values of $k_1, k_2$ depend on the concrete algorithm and can be obtained from Table 1.
Operator $S$ , depending on the algorithm, may be the Walsh-Hadamard operator *H* or the identity operator *I*.

Table 1: Parameters of superposition and of interference operators of QAs

| Algorithm | $k_1$ | $k_2$ | $S$ | Interference |
|---|---|---|---|---|
| Deutsch's | 1 | 1 | $I$ | $H \otimes H$ |
| Deutsch-Jozsa's | $n$-1 | 1 | $H$ | $^{k_1} H \otimes I$ |
| Grover's | $n$-1 | 1 | $H$ | $D_{k_1} \otimes I$ |
| Simon's | $n/2$ | $n/2$ | $I$ | $^{k_1}H \otimes^{k_2} I$ |
| Shor's | $n/2$ | $n/2$ | $I$ | $Q F_{k_1} \otimes^{k_2} I$ |

It is convenient to automate the process of the calculation of the tensor power of the Walsh-Hadamard operator as follows:

$$\left[{}^{n}H\right]_{i,j} = \frac{(-1)^{i*j}}{2^{n/\phantom{2}2}} = \frac{1}{2^{n\phantom{2}2}}\begin{cases} 1, & \text{if } i*j \text{ is even} \\ -1, & \text{if } i*j \text{ is odd} \end{cases} \qquad (3)$$

where

$$i = 0, 1, \ldots, 2^{n}, j = 0, 1, \ldots, 2^{n}.$$

The tensor power of the identity operator can be calculated as follows:

$$\left[{}^{n}I\right]_{i,j} = 1|_{i=j} 0|_{i \neq j}, \qquad (4)$$

where

$$i = 0, 1, \ldots, 2^{n}, j = 0, 1, \ldots, 2^{n}.$$

Then any superposition operator can be presented as a block matrix of the following form:

$$\left[S\right]_{i,j} = \frac{(-1)^{i+j}}{2^{k_1/2}} \otimes {}^{k_2}S, \qquad (5)$$

where

$$i = 0, \ldots, 2^{k_1} - 1, j = 0, \ldots, 2^{k_1} - 1$$

denote the blocks; $^{k_2}S$ is a $k_2$ tensor power of the corresponding operator. In this case n denotes the total number of qubits in the algorithm, including measurement qubits, and qubits necessary for encoding of the function. The actual number of input bits in this case is $k_1$. The actual number of output bits in this case is $k_2$. Operators used as *S* are presented in Table 1 for all QAs.

For the superposition operator of Deutsch's algorithm:

$$n = 2, k_1 = 1, k_2 = 1, S = I:$$

$$\left[S\right]^{Deutsch}_{i,j} = \frac{(-1)^{i+j}}{2^{1/2}} \quad I \otimes \frac{1}{\sqrt{2}}\left((-1^{0})I(0\ 1)\ 'I \atop (-1^{1})I(0\ 1)\ 'I\right) = \frac{1}{\sqrt{2}}\begin{bmatrix} I & I \\ I & -I \end{bmatrix} \qquad (6)$$

The superposition operator of Deutsch-Jozsa's and of Grover's algorithm is

$$n = 3\ k_1 = 2\ k_2 = 1\ S = H:$$

$$\left[S\right]^{DeutschJozsdsGrover\text{'}s}_{p_{i,j}} = \frac{(-1)^{i+j}}{2^{2/2}} \otimes H$$

$$= \frac{1}{2} \begin{pmatrix} (-1)^0\ H\ (0-1)\ H\ (1)\ H\ (01-)\ ^3H \\ (-1)^1\ H\ (0-1)\ H\ (1)\ H\ (11-)\ ^3H \\ (-1)^2\ H\ (0-1)\ H\ (1)\ H\ (21-)\ ^3H \\ (-1)^3\ H\ (0-1)\ H\ (1)\ H\ (31-)\ ^3H \end{pmatrix} \tag{7}$$

$$= \frac{1}{2} \begin{pmatrix} H & H & H & H \\ H & -H & H & -H \\ H & H & -H & -H \\ H & -H & -H & H \end{pmatrix}$$

The superposition operator of Simon's and of Shor's algorithms are, $n=4\ k_1=2\ k_2-2\ S, =I$:

$$\left[S\right]^{Simon,Shor}_{i,j} = \frac{(-1)^{i+j}}{2^{2/2}} \otimes^2 I$$

$$= \frac{1}{2} \begin{pmatrix} (-1^0)\ ^*(I^0)\ (-1)\ (I)^2\ (0-1^*)^2\ (I)\ ^0(-1)\ (I) \\ (-1^1)\ ^*(I^0)\ (-1)\ (I)^2\ (1-1^*)^2\ (I)\ ^1(-1)\ (I) \\ (-1^2)\ ^*(I^0)\ (-1)\ (I)^2\ (2-1^*)^2\ (I)\ ^2(-1)\ (I) \\ (-1^3)\ ^*(I^0)\ (-1)\ (I)^2\ (3-1^*)^2\ (I)\ ^3(-1)\ (I) \end{pmatrix} \tag{8}$$

$$= \frac{1}{2} \begin{pmatrix} ^2I & ^2I & ^2I & ^2I \\ ^2I & -^2I & ^2I & -^2I \\ ^2I & ^2I & -^2I & -^2I \\ ^2I & -^2I & -^2I & ^2I \end{pmatrix}$$

The interference blocks implement the interference operator which, in general, is different for all algorithms. By contrast, the measurement part tends to be the same for most of the algorithms. The interference blocks compute the $k_2$ tensor power of the identity operator.

*Interference operator of Deutsch's algorithm:* This interference operator of Deutsch's algorithm is a tensor product of two Walsh-Hadamard transformations, and can be calculated in general form using Eq. (3) with $n = 2$:

$$\left[I^{Deutsch}_n\right]_{i,j} = ^2H = \frac{(-1^{i*j})}{2^{2/2}} = \frac{1}{2} \begin{pmatrix} 1 & 1 & 1 & 1 \\ 1 & -1 & 1 & -1 \\ 1 & 1 & -1 & -1 \\ 1 & -1 & -1 & 1 \end{pmatrix} \tag{9}$$

Note that in Deutsch's algorithm, the Walsh-Hadamard transformation in interference operator is used also for the measurement basis.

*Interference operator of Deutsch-Jozsa's algorithm:* The interference operator of Deutsch-Jozsa's algorithm is a tensor product of $k_1$ power of the Walsh-Hadamard operator with an identity operator. In general form, the block matrix of the interference operator of Deutsch-Jozsa's algorithm can be written as:

$$\left[ I^{DeutschJozsa's}_n \right]_{i,j} = \frac{(-1)^{i*j}}{2^{\frac{k_1}{2}}} \otimes I \qquad (10)$$

where

$$i = 0, \ldots, 2^{k_1} - 1, j = 0, \ldots, 2^{k_1} - 1$$

Interference operator of Deutsch-Jozsa's algorithm *for n = 3 $k_1$, = 2 $k_2$, = 1:*

$$\left[ I^{DeutschJozsa's}_n \right]_{i,j} = \frac{(-1)^{i*j}}{2^{\frac{2}{2}}} \otimes I = \frac{1}{2} \begin{pmatrix} (-1)^0 I & (-1)^0 I & (-1)^0 I & (-1)^0 I \\ (-1)^1 I & (-1)^1 I & (-1)^1 I & (-1)^1 I \\ (-1)^2 I & (-1)^2 I & (-1)^2 I & (-1)^2 I \\ (-1)^3 I & (-1)^3 I & (-1)^3 I & (-1)^3 I \end{pmatrix}$$

$$= \frac{1}{2} \begin{pmatrix} I & I & I & I \\ I & -I & I & -I \\ I & I & -I & -I \\ I & -I & -I & I \end{pmatrix} \qquad (11)$$

*Interference operator of Grover's algorithm:* The interference operator of Grover's algorithm can be written as a block matrix of the following form:

$$\left[ I^{Grover}_n \right]_{i,j} = \left[ t_{k_1} \otimes D \right] = \left( \frac{1}{2^{k_1/2}} - I \right) \otimes I$$

$$= \left( 1 - \frac{1}{2^{k_1/}} \right) + 2I \left( \otimes \frac{1}{2^{k_1 2}} \right) \otimes I \Big|_{i \neq j} \qquad (12)$$

$$= \frac{1}{2^{k_1/2}} \begin{cases} -I, & i = j \\ I, & i \neq j \end{cases}$$

where

$$i = 0, \ldots, 2^{k_1} - 1, j = 0, \ldots, 2^{k_1} - 1, D_{k_1}$$

refers to diffusion operator:

$$\left[ D_{k_1} \right]_{i,j} = \frac{(-1)^{1 \wedge N(i \neq j)}}{2^{k_1 - 1}}$$

Thus, the interference operator of Grover's algorithm for n = 3 $k_1$,=2$k_2$,=1 is constructed as follows:

$$\left[ I N_n^{Grover} \right]_{i,j} = D_2 \otimes I$$

$$= \left( \frac{1}{2^{2/2}} \right)^2 I \otimes \left| \left( = \frac{1}{2} I - \right| + \left( I \otimes \frac{1}{2} \right) \otimes I \right|_{\substack{i = j \\ 2}} \right|_{i \neq j}$$

$$= \begin{pmatrix} \left( -1+\frac{1}{2} \right)I & -\frac{1}{2}I & \frac{1}{2}I & \frac{1}{2}I \\ \frac{1}{2}I & \left( -1+\frac{1}{2}I \right) & \frac{1}{2}I & \frac{1}{2}I \\ \frac{1}{2}I & \frac{1}{2}I & \left( -1+\frac{1}{2}I \right) & \frac{1}{2}I \\ \frac{1}{2}I & -\frac{1}{2}I & -\frac{1}{2}I & \left( -1+\frac{1}{2} \right)I \end{pmatrix}$$

$$= \frac{1}{2} \begin{pmatrix} -I & I & I & I \\ I & -I & I & I \\ I & I & -I & I \\ I & I & I & -I \end{pmatrix} \qquad (13)$$

Note that as the number of qubits increases the gain coefficient becomes smaller and the dimension of the matrix increases according to $2^{k_1}$. However, each element can be extracted using Eq. (12), without constructing the entire operator matrix.

*Interference operator of Simon's algorithm.* The interference operator of Simon's algorithm is prepared in the same manner as the superposition operators of Shor's and of Simon's algorithms and can be described as follows (see Eqs. (5), (8)):

$$\left[ I N_n^{Simon} \right]_{i,j} = H^{\otimes k_1} \otimes^{k_2} I \qquad (14)$$

$$= \frac{(-1)^{i*j}}{2^{k_1/2}} \otimes^{k_2} I$$

$$= \frac{1}{2^{k_1/2}} \begin{pmatrix} (-1)^{0 \cdot 1^{k_2}} I \cdots^0 (-1)^{0*j}{}^{k_2}I \cdots & (-1)^{0 \cdot (2^{k_1}-1)} \cdot {}^{k_2}I \\ \vdots & \vdots & \vdots & \vdots & \vdots \\ (-1)^{i* 1^{k_2}I} \cdots^0 (-1)^{i*j}{}^{k_2}I \cdots & (-1)^{i*(2^{k_1}-1)} \cdot {}^{k_2}I \\ \vdots & \vdots & \vdots & \vdots & \vdots \\ (-1)^{(2^{k_1}-1) \cdot 1} {}^{k_2}I \cdots^0 (-1)^{(2^{k_1}-1)*j} {}^{k_2}I \cdots & (-1)^{(2^{k_1}-1) \cdot (2^{k_1}-1)} \cdot {}^{k_2}I \end{pmatrix}$$

In general, the interference operator of Simon's algorithm is similar to the interference operator of Deutsch-Jozsa's algorithm Eq. (10), but each block of the operator matrix Eq. (14) is a $k_2$ tensor product of the identity operator.

Each odd block (when the product of the indexes is an odd number) of the Simon's interference operator Eq. (14), has a negative sign. Actually if i = 0 , 2 ,..4 $^{k_1}$,2-2 or j = 0 , 2 ,..4 $^{k_1}$,2-2 the block sign is positive, otherwise the block sign is negative. This rule is applicable also for Eq. (10) of the Deutsch-Jozsa's algorithm interference operator. Then it is convenient to check if one of the indexes is an even number instead of calculating the product. Then Eq. (14) can be reduced as:

$$\left[ I^{Simon} \right]_{i,j} = {}^{k_1}t \otimes H^{k_2} \frac{(-1)^{i*j}}{2^{k_1/2}} I \otimes {}^{k_2}I$$

$$= \frac{1}{2^{k_1/2}} \begin{cases} {}^{k_2}I, \text{if } i \text{ is odd or if } j \text{ is odd} \\ -{}^{k_2}I, \text{if } i \text{ is even and } j \text{ is even} \end{cases} \qquad (15)$$

*Interference operator of Shor's algorithm.* The interference operator of Shor's algorithm uses the Quantum Fourier Transformation operator (QFT), calculated as:

$$\left[ Q^{k_1}F \right]_{i,j} = \frac{1}{2^{k_1/2}} e^{J(i*j)\frac{2\pi}{2^{k_1}}} \qquad (16)$$

where: *J* - imaginary unit,

$$i = 0, \ldots, 2^{k_1}-1, j = 0, \ldots, 2^{k_1}-1.$$

With $k_1$ = 1:

$$Q^{k_1}F \Big|_{k_1=1} = \frac{1}{2^{\frac{1}{2}}} \begin{pmatrix} e^{J*(0*0)2^1/2*\pi(0*1)2\pi/2^1} & e^{} \\ e^{J*(1*0)2^1/2*\pi(1*1)2\pi/2^1} & e^{} \end{pmatrix} = \frac{1}{\sqrt{2}} \begin{pmatrix} 1 & 1 \\ 1 & -1 \end{pmatrix} = H \qquad (17)$$

Eq. (16) can be also presented in harmonic form using Euler's formula:

$$\left[ Q^{k_1}F \right]_{i,j} = \frac{1}{2^{k_1/2}} \left( \cos\left( s (j*i)\frac{2\pi}{2^{k_1}} \right) + i \sin\left( (i*j)\frac{2\pi}{2^{k_1}} \right) \right) \qquad (18)$$

Bra and Ket functions are the function used to assign to quantum qubits the actual representation as a corresponding row or column vector using the following relation:

$$\alpha \left| \underset{n}{\underbrace{a}} \right\rangle = \alpha \left. \begin{bmatrix} 0 \\ \vdots \\ 1 \end{bmatrix}_{2^a} \right\} 2^n ;$$

(19)

$$\alpha \left\langle \underset{n}{\underbrace{a}} \right| = \alpha \underbrace{\begin{bmatrix} 0 & \cdots & 1 \big|_{2^a} & \cdots & 0 \end{bmatrix}}_{2^n}$$

These functions are used for specification of the input of the QA, for calculation of the density matrices of intermediate quantum states, and for fidelity analysis of the QA.

*Measurement operators.* Measurement operators are used to perform the measurement of the current superposition of the state vectors. A QA produces a superposition of the quantum states, in general described as:

$$\left| x \right\rangle = \sum_{i=1}^{2^n} {}_i \left| i \right\rangle$$

(20)

During quantum processing in the QA, the probability amplitudes $\alpha_i$ of the quantum states $|i\rangle$, $i1=,...,2^n$ are transformed in the way such that the probability amplitude $a_{result}$ of the answer quantum state $|result\rangle$ becomes larger than the amplitudes of the remaining quantum states. The measurement operator outputs a state vector $|result\rangle$.

When all of $\alpha_i$, $= const, i1=,..., 2^n$, then the measurement operator sends an error message.

*Entropy calculation operators.* Entropy calculation operators are used to estimate the entropy of the current quantum state. Consider the quantum superposition state Eq. (20). The Shannon entropy of the quantum state Eq. (20) is calculated as:

$$H^{Sh} = -\sum_{i=1}^{2^n} \alpha_i^2 \log_2 \alpha_i^2$$

(21)

The objective of minimizing the quantity in Eq. (21) can be used as a termination condition for the QA iterations. Shannon entropy describes the uncertainty of the quantum state. It is high when quantum superposition has many states with equal probability. The minimum possible value of the Shannon entropy is equal to the number $k_2$ of outputs (see Table 1) of QA.

*Visualization functions:* Visualization functions are functions that provide the visualization display of the quantum state vector amplitudes and of the structure of the quantum operators.

*Algorithm specific functions:* Algorithm specific functions provide a set of scripts for QA execution in command line and tools for simulation of the QA, including quantum control algorithms. The functions of section 2 prepare the appropriate operators of each algorithm, using as operands the common functions.

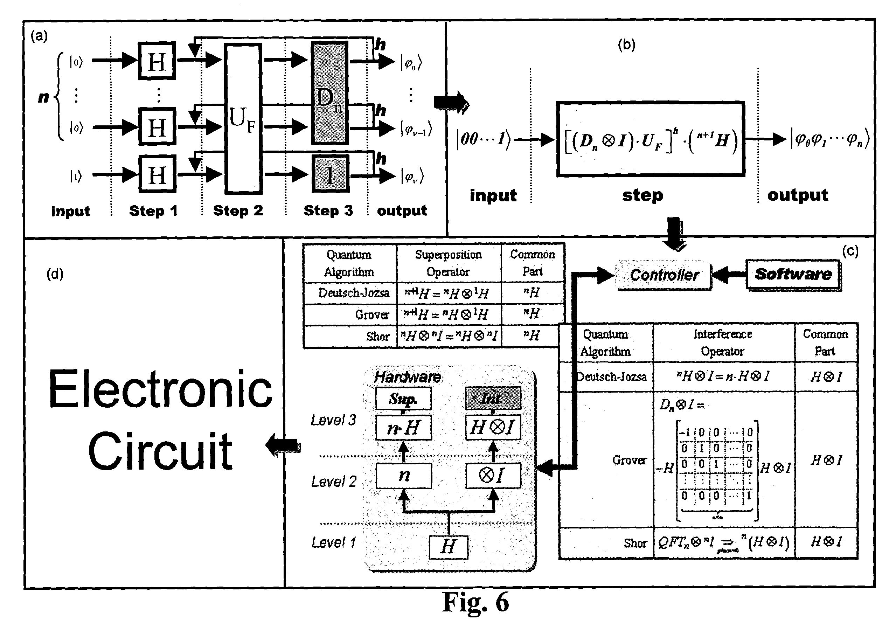

Figure 6 shows technological process of QAG design and a corresponding circuit implementation. Figure 6(a) is a quantum algorithm circuit. Figure 6(b) shows corresponding quantum algorithm gate. Figure 6(c) shows main quantum operators and their decomposition in HW implementation. Figure 6(d) shows an example of HW implementation circuit design.

3. QUANTUM EVOLUTIONARY PROGRAMMING (QEP) AND LEARNING CONTROL OF QUANTUM OPERATORS IN QGSA WITH GENETIC OPERATORS.

The so-called Quantum Evolutionary Programming has two major sub-areas: Quantum Inspired Genetic Algorithms (QIGAs) and Quantum Genetic Algorithms (QGAs). The former adopts qubit chromosomes as representations and employs quantum gates for the search of the best solution. The latter tries to solve a key question in this field: what GAs will look like as an implementation on quantum hardware. An important point for QGAs is to build a quantum algorithm that takes advantage both - GA's and quantum computing parallelism - as well as true randomness provided by quantum computing.

Below the difference and common parts as parallelism of both GA's and quantum algorithms are compared.

*3.1. Genetic/Evolutionary computation and programming.* Evolutionary computation is a kind of self-organization and self-adaptive intelligent technique which analogies the process a natural evolution. According to *Darwinism* and *Mendelism,* it is through the reproduction, mutation, selection and competition that the evolution of life is fulfilled.

Simply stated, GAs are stochastic search algorithms based on the mechanics of natural selection and natural genetics. GAs applied to its capabilities for searching large and non-linear spaces where traditional methods are not efficient or also attracted by their capabilities for searching a solution in non-usual spaces such as for learning of quantum operators and in design of quantum circuits. An important point for GA's design is to build an algorithm that takes advantage of computing *parallelism.*

There exist some problems in the initialization of GAs. They can be very demanding in terms of computation and memory, and sequential GAs may get trapped in a sub-optimal region of the search space and thus may be unable to find good quality solutions. So, parallel genetic algorithms (PGAs) are proposed to solve more difficult problems which need large population. PGAs are parallel implementation of GAs which can provide considerable gains in terms of performance and scalability. The most important advantage of PGAs is that in many cases they provide better performance than single population-based algorithms, even when the parallelism is simulated on conventional computers. PGAs are not only an extension of the traditional GA sequential model, but they represent a new class of algorithms in that they search the space of solutions differently. Existing parallel implementations of GAs can be classified into three main types of PGAs:

(i) Global single-population master-slave GAs;
(ii) Massive parallel GAs; and
(iii) Distributed GAs.

Global single-population master-slave GAs explore the search space exactly as a sequential GA and are easy to implement and significant performance improvements are possible in many cases. Massive parallel GAs are also called fine-grained PGAs and they are suited for massively parallel computers. Distributed GAs are also called coarse-grained PGAs or island-based GA and are the most popular parallel methods because of its little communication overhead and its diversification of the population.

Evolutionary algorithm (EA) is such a random searching algorithm based on the above model. It is origin of the genetic algorithm (GA) that is derived from machine learning, evolutionary strategies (ES) which is brought forward by Rechenberg [82] and Schwefel [83] in numerical optimization, and evolutionary programming (EP).

EP is an efficient algorithm in solving optimization problems, but the criterion EP is of torpid convergence. Compared with GA, EP has some difference in characteristics. *First,* the evolution of GA is on the locus of chromosome, while EP directly operates on the population's behavior. *Second,* GA is based on the *Darwinism* and genetics, so the crossover is the major operator. EP stresses on the evolution species, so there are not operations directly on the gene such as crossover, and *mutation* is the *only* operator to generate new individuals. Thus mutation is the only operator in EP and consequently it is the breakthrough point of EP. *Cauchuy*-mutation and logarithm-normal distribution mutation algorithms are examples, which also improved the performance of EP. *Third,* there is transformation of genotype and phenotype in GA, which does not in EP. *Fourth,* the evolution of EP is smooth and the evolution is much steady than GA, however it relies much on its initial distribution.

From the evolution mechanism, the EP that adopts Gauss mutation to generate offspring is characteristics of a slow convergent speed. Therefore, finding more efficient algorithm too speed up the convergence and improve the quantity of solution has become an important subject in the research of EP.

*3.2. Quantum computing.* The fundamental result of quantum computation stay that all the computation can be can be expanded in a circuit, which nodes are the universal gates and in quantum computing universal quantum simulator is possible. These gates offer an expansion of unitary operator U that evolves the system in order to perform some computation.

Thus, naturally two problems are discussed: (1) Given a set of functional points

$$S = \left\{ \left( \ , y \right) \right\}$$

find the operator $U$ such that $y = U \cdot x$ ; (2) Given a problem, find the quantum circuit that solves it.

The former can be formulated in the context of GAs for *learning* algorithms while the latter through *evolutionary* strategies.

Quantum computing has a feature called quantum *parallelism* that cannot be replaced by classical computation without an exponential slowdown. This unique feature turns out to be the key to most successful quantum algorithms. Quantum parallelism refers to the process of evaluating a function once a *superposition* of all possible *inputs* to produce a *superposition* of all possible *outputs.* This means that all possible outputs are computed in the time required to calculate just one output with a classical computation. Superposition enables a quantum register to store exponentially more data than a classical register of the same size. Whereas a classical register with N bits can store one value out $2^N$, a quantum register can be in a superposition of all $2^N$ values. An operation applied to the classical register produces one result. An operation applied to the quantum register produces a superposition of all possible results. This is what is meant by the term *"quantum parallelism."*

Unfortunately, all of these outputs cannot be as easily obtained. Once a measurement is taken, the superposition collapses. Consequently, the promise of massive parallelism is offset by the inability to take advantage of it. This situation can be changed with the application hybrid algorithm (one part is Quantum Turing Machine (QTM) and another part is classical Turing Machine) as in Shor's quantum factoring algorithm that took advantage of quantum parallelism by using a Fourier transform.

*3.3. Quantum Genetic Algorithm's model.* This idea sketched out a Quantum Genetic Algorithm (QGA), which takes advantage of both the quantum computing and GAs parallelism. The key idea is to explore the quantum effects of superposition and entanglement to create a physical state that store individuals and their fitness. When measure the fitness, the system collapses to a superposition of states that have that observed fitness. QGA starts from this idea, which can take advantage of both quantum computing and GAs paradigms.

Again, the difficulty is that a measurement of the quantum result collapses the superposition so that only one result is measured. At this point, it may seem that we have gained little. However, depending upon the function being applied, the superposition of answers may have common features with interference operators. If these features can be ascertained, it may be possible to divine the answer searching for probabilistically.

The next key feature to understand is *entanglement.* Entanglement is a quantum (correlation) connection between superimposed states. Entanglement produces a quantum correlation between the original superimposed qubit and the final superimposed answer, so that when the answer is measured, collapsing the superposition into one answer or the other, the original qubit also collapses into the value (0 or 1) that produces the measure answer. In fact, it collapses to all possible values that produce the measured answer. For example, as mentioned above, the key step in QGA is the fitness measurement of a quantum individual. We begin by calculating the fitness of the quantum individual and storing the result in the individual's fitness register. Because each quantum individual is a superposition of classical individuals, each with a potentially different fitness, the result of this calculation is a superposition of the fitnesses of the classical individuals. This calculation is made in such a way as to produce an entanglement between the register holding the individual and the register holding the fitness(es).

*Interference* operation is used after entanglement operator for extraction of successful solutions from superposed outputs of quantum algorithms. The well-known complementarity or duality of particle and wave is one of the deeps concepts in quantum mechanics. A similar complementarity exists between entanglement and interference. The entanglement measure is a decreasing function of the visibility of interference.

*Example: Complementarity of entanglement and interference.* Let us consider the complementarity in a simple two-qubit pure state case. Consider the entangled state

$$\left| \psi \right\rangle = a \left| 0_1 \right\rangle \left| 0_2 \right\rangle + b \left| 1_1 \right\rangle \left| 1_2 \right\rangle$$

with the constraint of unitarity: $a^2 + b^2 = 1$. Then make a unitary transformation on the first qubit,

$$\left| 0_1 \right\rangle \rightarrow \cos\alpha \left| 0_1 \right\rangle + i \sin\alpha \left| 1_1 \right\rangle ,$$

and obtain

$$|\psi\rangle \rightarrow | \ \rangle \ \psi a(c=o \ |s_1\rangle 0 \ s+i\,|n\rangle)|1 \ \rangle_2 + b(o\,cos_1|1\rangle - s \ i\,sin|\,0\rangle)|1_2\rangle.$$

Finally observe the first qubit without caring about the second one. The probability to get the state $|0_1\rangle$ is

$$P_{|0_1\rangle} = \frac{1}{2}\left[ a + \left(c^2 - b^2\right)s \ 2\alpha \right],$$

which is a typical interference pattern if we regard the angle $\alpha$ as a control parameter. The *visibility* of the interference is: $\Gamma|=a^2 - b^2|$ which vanishes when the initial state is maximally entangled, i.e., $a^2 = b^2$ , while it becomes maximum when the state is separable, i.e. $a = 0$ or $b = 0$ . On the other hand the entanglement measure is partially traced von Neumann entropy as follows:

$$E \equiv \ (S_{red}) \ a \ ^2 log \ ^2 g - b \ b \ g b^2,$$

where the reduced density operator

$$\rho_{red} = Tr_2| \ \rangle\psi \ \psi|_2 \ \psi T| \ \rangle\langle\psi |= \ ^2|0a\rangle\langle \ 0| + b^2| \ \rangle\langle 1_1|.$$

The entanglement takes the maximum value $E =1$ when $a^2 = b^2$ and the minimum value $E = 0$ for $a = 0$ or $b = 0$ . Thus the more the state is entangled, the less visibility of the interference and vice versa. Another popular measure of entanglement such as the *negativity* may be better for a quick illustration. The negativity is minus twice of the least eigenvalue of the partial transpose of the density matrix. In this case, it is $N = a|b|$. The complementarity is for this case as following: $N^2 + \Gamma^2 =1$ . This constraint between the entanglement and the interference comes from the condition of unitarity: $a^2 + b^2 = 1$ .

Thus, in quantum algorithms these measures of entanglement and interference are not independent and the efficiency simulation of success solutions of quantum algorithms is correlated with equilibrium interrelations between these measures.

*3.3.1. Learning control of quantum operator in QGSA with genetic operators.* Similar to classical GA in QGA allows the use of any fitness function that can be calculated on a QTM (Quantum Turing machine) without collapsing a superposition, which is generally a simple requirement to meet.

The QGA differs from classical GA in that each individual is a *quantum* individual. In classical GA when selecting an individual to perform crossover, or mutation, exactly one individual is selected. This is true regardless of whether there are other individuals with the same fitness. This is not the case with a quantum algorithm. By selecting an individual, all individuals with the same fitness are selected. In effect, this means that a single quantum individual in reality represents multiple classical individuals.

Thus, in QGA each quantum individual is a superposition of one or more classical individuals. To do this several sets of quantum registers are used. Each individual uses two registers: (1) the *individual* register; and (2) *the fitness* register. The first register stores the superimposed classical individuals. The second register stores the quantum individual's fitness.

At different times during the QGA the fitness register will hold a single fitness value (or a quantum superposition of fitness values). A population will be N of these quantum individuals.

*Example.* Let us consider the tensor product of the qubit chromosomes as follows:

$$|\psi_1\rangle \otimes |\psi_2\rangle \quad |\psi\rangle \otimes \quad {}_1\alpha\sum_{i_1,i_2,i_3 \in \{,1\}} \overline{2}\alpha_{i_1 \ 3 i_2}\alpha \otimes |i\rangle \quad |i\rangle \otimes |i_3\rangle.$$

Thus, the qubit will be represented as a superposition of the states $|i_1\rangle \otimes i_2\rangle \otimes |i_3\rangle$, $i_1$, $i_2$, $\bar{i}_3 0 \in \{,1\}$, and so it carries information about all of them at the same time.

Such observation points out the fact that the qubit representation has the better characteristic of diversity than the classical approaches, since it can represent superposition of states. In classical representations in abovementioned example we will need at least $2^3 = 8$ chromosomes to keep the information carried in the state while only 3-qubit chromosome is enough in QGA case.

Thus QGA uses two registers for each quantum individual; the first one stores an individual while the second one stores the individual's fitness. A population of $N$ quantum individuals is stored through pairs of registers

$$R_i = \{(individual\ register,\ fitness\ register)\}\ is\ 2ter.i,N\ .$$

Once a new population is generated, the fitness for each individual would be calculated and the result stored in the individual's fitness.

*Remark.* According to the law of quantum mechanics the effect of the fitness measurement is a collapse and this process reduces each quantum individual to a superposition of classical individuals with a common fitness. It is the key step in the QGA. Then the crossover and mutation operations would be applied. The more significant advantage of QGA's will be an increase in the production of good building blocks (same as schemata in classical GAs) because, during the crossover, the building block is crossed with a superposition of many individuals instead of with only one in classical GAs (see examples below).

To improve the convergence we need also better evolutionary *(crossover/mutation)* strategies. The evolutionary strategies are efficient to get closer the solution but not to complete the learning process that can be realized efficiently with fuzzy neural network (FNN).

*3.3.2. Physical requirements to crossover and mutation operator's models in QGAs.* In QGAs, each chromosome represents a superposition of all possible solutions in certain distribution, any operation performed on such chromosome will affect all possible solutions it represents, thus the genetic operators defined on the quantum probability representation have to satisfy the requirement that it must be of the same efficiency to all possible solutions one chromosome represents.

*Remark.* In general, constrained search procedures like imaginary-time propagation frequently become trapped in a local minimum. The probability of trapping can be reduced, to some extent, by introducing a certain degree of randomness or noise (and in fact this can be achieved by increasing the time-step of the propagation.). However, random searches are not efficient for problems involving complex hyper-surfaces, as is the case of the ground-state system of a system under the action of a complicated external potential. A completely different and unconventional approach for optimization of quantum systems is based on a *genetic algorithm* (GA), a technique, which resembles the process of evolution in nature. The GA belongs to a new generation of the so-called intelligent global optimization techniques. GA is a global search method, which simulates the process of evolution in nature. It starts from a population of individuals represented by chromosomes. The individuals go through the process of evolution, i.e., the formation of the off springs from a previous population containing the parents. The selection procedure is based on the principle of the survival of the fittest. Thus, the main ingredients of the method are a fitness function and genetic operations on the chromosomes. The main advantage of GA over other search methods is that it handles problems in highly nonlinear, multidimensional spaces with surprisingly high speed and efficiency. Furthermore, it performs a global search and therefore avoids, to a large extent, local minima. Another important advantage is that it does not require any gradient to perform the optimization. Due to the properties of the GA, the extension to higher dimensions and more particles is numerically less expensive than for other methods.

Thus in classical GA, the purpose of crossover is to exchange information between individuals. Consequently, when selecting individuals to perform crossover, or mutation, exactly one individual is selected. This is true regardless of whether there are other individuals with the same fitness.

This is not the case with a QGA.

*Remark.* As mentioned above in Summary, the major advantage for a QGA is the increased diversity of a quantum population. A quantum population can be exponentially larger than a classical population of the <u>same size</u> because each quantum individual is a superposition of multiple classical individuals. Thus, a quantum population is effectively much large than a similar classical population. This effective size is decreased during the fitness operation when the superposition is reduced to only individuals with the same fitness.

However, it is increased during the crossover operation. Consider two quantum individuals consisting of $N$ and $M$ superpositions each. One point crossover between these individuals results in offspring that are the superposition of $N \cdot M$ classical individuals. Thus, in the QGA crossover increases the effective size of the population in addition to increasing it diversity.

There is a further benefit to quantum individuals. Consider the case of two individuals of relatively high fitness. If these are classical individuals, it is possible that these individuals are relatively incompatible; that is, any crossover between them is unlikely to produce a very fit offspring. Thus, after crossover it is likely that the offspring of these individuals will not be selected and their good "genes" will be lost to the GA. If there are two quantum individuals all of the same high fitness is in a superposition. As such, it is very unlikely that all of these individuals are incompatible and it is almost certain that some highly fit offspring will be produced during crossover. At a necessary minimum the necessary good offspring are somewhere over the classical case. This is a clear advantage of the QGA.

Consider the appearance of a new building block in QGA. As mentioned above, during crossover the building block is not crossed with only one other individual (as in classical GA). Instead, it is crossed with a superposition of many individuals. If that building block creates fit offspring with most of the individuals, then by definition, it is a good building block. Furthermore, it is clear that in measuring the superimposed fitness, one of the "good" fitness is likely to be measured (because there are many of them), thereby preserving that building block. In effect, by using superimposed individuals, the QGA removes much of the randomness of the GA. Thus, the statistical advantage of good building blocks should be much greater in the QGA. This should cause the number of good building blocks to grow much more rapidly.

One can also view the evolutionary process as dynamic map in which populations tends to converge on fixed points in the population space. From this point of view the advantage of QGA is that the large effective size allows the population to sample from more basins of attraction. Thus, it is much more likely that the population will include members in the basins of attraction for the higher fitness solutions.

Therefore, in QGA the evolution information of each individual is well contained in its contemporary evolution target *(high fitness)*. In this case the contemporary evolution target represents the current evolution state of one individual that have the best solution corresponding to its current fitness. Because contemporary evolution target represents the current evolution state of one individual, the exchanging contemporary evolution targets by crossover operator of two individuals, the evolution process of one individual will be influenced by the evolution state of the other one.

*Example: Crossover operator.* The crossover operator for this case satisfies the above requirement:

| (1) | Select two chromosomes from the group randomly with a given probability $P_{Cr}$; |
|---|---|
| (2) | Exchange their evolution target (fitness) temporarily; |
| (3) | Update the two chromosomes according to their new targets (fitness)for one time; |
| (4) | Change back their evolution targets (fitness). |

Thus with this model of crossover operator the evolution process of one individual will be influenced by the evolution state of the other one.

*Example: Mutation operator.* The purpose of mutation is to slightly disturb the evolution states of some individuals, to prevent the algorithm from falling into local optimum. The requirement for designing mutation resembles that for designing crossover. As a probing research, a single qubit mutation operator can be used, but the thought can be generalized easily to the multiple qubits scenarios. Following is the procedure of mutation operator:

| (1) | Select a set of chromosomes from the group randomly with a given probability $P_{Mt}$ ; |
|---|---|
| (2) | For each chromosome, select a qubit randomly; |
| (3) | Exchange the position of its pair of probability amplitude. |

*Remark.* Obviously, the mutation operator defmed above has the same efficiency to all the superposition states.

Let us briefly consider an example of how an application of GA operation on a quantum computing can be considered.

*Example.* In GA a population of an appropriate size is maintained during the each iteration. A chromosome in the population is assumed to code with binary strings. Let the length of these binary strings to be n. There are a total of $2^n$ such strings. Usually only a small number ($m<<2^n$) of these strings are chosen to be in the population. A possible state in a quantum computer corresponds to a chromosome in GA. Choosing an initial population is equivalent to setting the amplitude of those states that correspond to the chromosomes in the population to be $1/\sqrt{m}$ 1 and 0 otherwise.

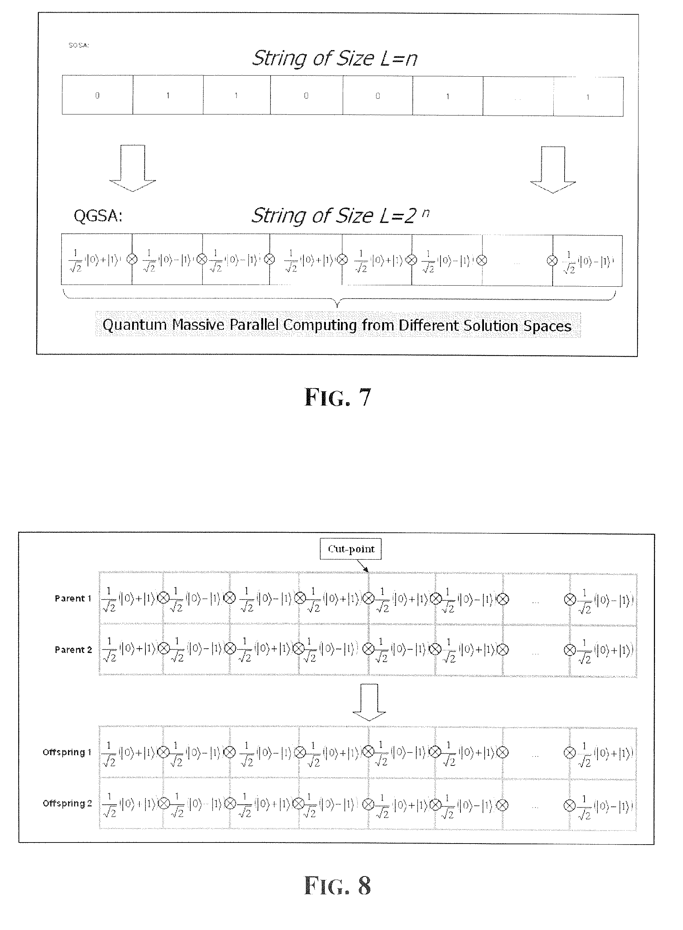

Figure 7 shows a possible coding of bit-strings (chromosomes of a genetic algorithm) with a tensor product of qubits (herein referred also as quantum chromosomes).

According to abovementioned requirements, *Crossover* operator of two chromosomes in GA is performed by a randomly selected cutting point and concatenating the left part of the first chromosome with the right part of the second, and the left part of the second with the right part of the first. If the first chromosome is $f_l f_r$ and the second is $s_l s_r$, then the resulting new chromosomes are $f_l s_r$ and $s_l f_r$.

Quantum computing is manipulated with unitary operators. A unitary transformation can be constructed so that it will operate on one chromosome or one state and will emulate *crossover.* If the number of bits after cutting point is $k$, then a simple unitary transformation that transforms $s_r$ to $f_r$ and $f_r$ to $s_r$ can be constructed easily by starting out with a unit matrix, then setting a 1 at the $(s_r, f_r)$ and $(f_r, s_r)$ positions, and changing the one at the $(s_r, s_r)$ and $(f_r, f_r)$ positions to be 0. The k bits after the cut point can be crossed over by composing k such unitary operators.

As an example, the following matrix that operates at the last two bits does *crossover* of 1011 and 0110 to 1010 and 0111, where the cutting points is at the middle:

$$|00\rangle\begin{pmatrix}\langle 0| & \langle 0| & \langle 1| & \langle 1| \\ 1 & 0 & 0 & 0 \\ 0 & 1 & 0 & 0 \\ 0 & 0 & 0 & 1 \\ 0 & 0 & 1 & 0 \end{pmatrix}, \begin{matrix} \\ |01\rangle \\ |10\rangle \\ |11\rangle \end{matrix}$$

i.e., it is the matrix form of the *CNOT*-gate that can create *entanglement.*

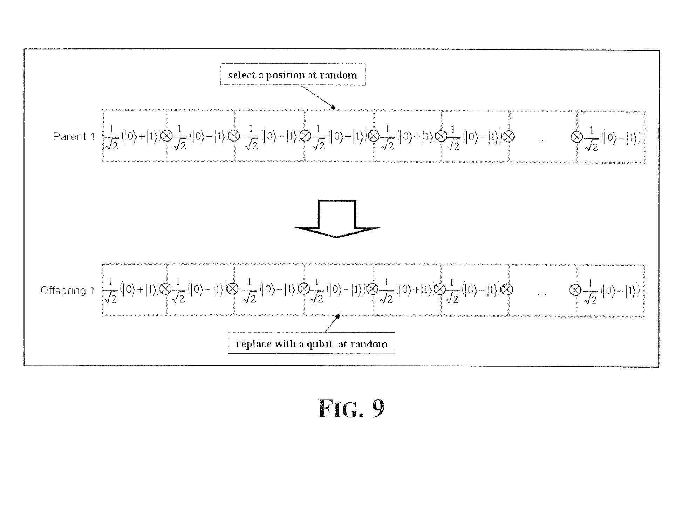

Figure 8 shows one cut-point crossover operation in QGA.

*Mutation* of a chromosome alters one or more genes. It can also be described by changing the bit at a certain position or positions. Switching the bit can be simply carried out by the unitary transformation (negation operator, for example):

$$\begin{matrix} & \langle 0| & \langle 1| \\ |0\rangle & \begin{pmatrix} 0 & 1 \\ 1 & 0 \end{pmatrix} \\ |1\rangle & \end{matrix}$$

at a certain bit position or positions.

Figure 9 shows mutation operation in QGSA.

The *selection/reproduction* process involves choosing chromosomes to form the next generation of the population. Selection is based on the fitness values of the chromosomes. Typical selection rules are to replace all parents by the offspring, or retain a few of the best parents, or retain the best among all parents and offspring. When using GA to solve an optimization problem, the objective function value is "the fitness". We can interpret the objective function as the energy or entropy rate of the state and states with lower energy have a higher probability of surviving.

*Remark.* There are two ways that the selection process can be implemented. *First,* follow the same steps as in a classical computer. That is, evaluate the "fitness" or "energy" of each chromosome. The fitness has to be stored since the evaluation process is not reversible. *Second,* we can make use of the quantum behavior of a quantum computing to perform selection, as described below. Selecting a suitable Hamiltonian will be equivalent to choosing a selection strategy. Since members of the successive populations are wave functions, the uncertainty principle has to be taken into account when defining the genetic operations. In QGA this can be achieved by introducing smooth or "uncertain" genetic operations (see example below).

After the selection step, the GA will return to its first step and continue iterations. It will terminate when an observation of the state is performed.

*3.4. Mathematical model of genetic - quantum operator's interrelation.* The quantum individual $|x\rangle$ and its fitness $f(x)$ could be mathematically represented by an *entangled* state (using crossover operator as unitary CNOT-gate):

$$|\Psi\rangle = \frac{1}{\sqrt{N}} \sum |x\rangle \otimes |f(x)\rangle .$$

In mathematical formulation, each register is a closed quantum system. Thus all of them can be initialized with this entangled state $|\Psi\rangle$. So, if we have M quantum individuals in each generation we need *M* register pairs *(individual register, fitness register).* Then, unitary operators as Walsh-Hadamard *W* will be applied to the first register of the state $|x\rangle$ in order to complete the generation of the initial population. Henceforth, the initialization could encompass the following steps.

| Step | Computational algorithm *(Quantum computing)* |
|---|---|
| 1 | For each register i, generate the state: $$\left|\psi_i\right\rangle = \frac{1}{\sqrt{N}} \sum_{x=0}^{N-1} |x\rangle_i \otimes |0\rangle_i$$ |
| 2 | Apply unitary operators using Walsh-Hadamard transformation *W* (for example, as rotations) and operator $U_f$, the known black-box which performs the operation $$U_f \left( |\ \rangle \otimes |0\rangle \right) = \left| \ \right\rangle \otimes \left| f(a) \right\rangle ,$$ to complete the initial population: $$|\Psi\rangle_i = U_f \cdot W \sum_{x=0}^{N-1} = U_f \left( \left( \frac{|x\rangle}{\sqrt{N}} \otimes |0\rangle \right)_i \right) = \sum_{x=0}^{N-1} a_x \left( {}_x|x\rangle \otimes |0\rangle_i \right)$$ $$= \sum_{x=0}^{N-1} a_{xi} \underbrace{|x\rangle_i}_{1st register} \otimes \underbrace{|f(x)\rangle_i}_{2nd register}, \quad i=1,2,...,M$$ *Remark.* It is important to observe that the fitness $f(x)$ is stored in the second register after the generation of the population. |

Table continued

| Step | Computational algorithm *(Quantum computing)* |
|---|---|
| | By measuring the fitness in the second register, each individual undergoes collapse, as following final result: $$\left|\Psi\right\rangle_i^{Msr} = \frac{1}{\sqrt{K_i^i}}\sum_{k=0}^{K_i-1}\left|k\right\rangle_i \left|y_0\right\rangle \otimes \underbrace{\left(\left|0\right\rangle - \left|1\right\rangle_i\right)}_{Auxiliary qubit},$$ |
| 3 | where $\left|k\right\rangle_i$ is such that the observed fitness for the *i*-th register is $f(k) = y_0$. *Remark.* When entering the main loop, the observed fitness is used to select the best individuals. |

Then, genetic operators must be applied. Let us consider one of possible model of important genetic operator application as mutation.

*Example: Mutation operator application.* Mutations can be implemented through the following steps.

| Step | Computational algorithm *(Genetic operation)* |
|---|---|
| 1 | Apply $U_f^{-1}$ over the measurement result: $$U_f^{-1}\left|\Psi\right\rangle_i^{Msr} = \frac{1}{\sqrt{K_i^i}}\sum_{k=0}^{K_i-1}\left|k\right\rangle_i \left|0\right\rangle \otimes \underbrace{\left(\left|0\right\rangle - \left|1\right\rangle_i\right)}_{Auxiliary qubit}$$ |
| 2 | Unitary operators *R* (small rotation, for example) are applied to the above result: $$R\left(U_f^{-1}\left|\Psi\right\rangle_i^{Msr}\right) = \sum_{k=0}^{K_i-1}P\left(\frac{\left|k\right\rangle_i}{\sqrt{K_i}}\right)_i \left|0\right\rangle \otimes \underbrace{\left(\left|0\right\rangle - \left|1\right\rangle_i\right)}_{Auxiliary qubit},$$ $$= \sum_{k=0}^{K_i-1}\beta_{xi}\left|k\right\rangle_i \left|0\right\rangle \otimes \underbrace{\left(\left|0\right\rangle - \left|1\right\rangle_i\right)}_{Auxiliary qubit}$$ where the result is expanded in the computational basis. |
| | Finally, apply $U_f$ to recover the diversity as entangled state that was lost during the measurement: |
| 3 | $$U_f\left[RU_f^{-1}\left|\Psi\right\rangle_i^{Msr}\right] = \sum_{k=0}^{K_i-1}\beta_{xi}\left|k\right\rangle_i \left|f(x)\right\rangle \otimes \underbrace{\left(\left|0\right\rangle - \left|1\right\rangle_i\right)}_{Auxiliary qubit},$$ [ that keep the correlation *"individual fitness"* as in step 2 of abovementioned computational algorithm. |

*Remark.* The major advantage for a QGA is the increase *diversity* of a quantum population due to superposition, which precisely defined above in step 2 of computational algorithm as

$$\left|\Psi\right\rangle_i \quad \sum_{x=0}^{N-1} a_{xi} = \underbrace{\left|x\right\rangle_i}_{1st register} \quad \underbrace{\left|\mathcal{P}(\ )\right\rangle_i}_{2nd register} x \quad 1 = i2 \ ,.., M$$

This effective size decreases during the measurement of the fitness, when the superposition is reduced to only individuals with the observed fitness according to the expression

$$\left|\Psi\right\rangle_i^{Msr} \quad \frac{1}{\sqrt{K_i^i}} \sum_{k=0}^{K_i-1} \left|\otimes\right\rangle_i \left|y_0\right\rangle \otimes \underbrace{\left(\left|0\right\rangle - \left|1\right\rangle_i\right)}_{Auxiliary\,qubit}.$$

However, it would be increased during the *crossover* and *mutation* applications. Besides, by increasing diversity it is much more likely that the population will include members in the basins of attraction for the higher fitness solutions.
Thus, an improved convergence rate must be expected. Besides, classical individuals with high fitness can be relatively incompatible; that is that any crossover between them is unlikely to produce a very fit offspring. However, in the QGA, these individuals can co-exist in a superposition.

*3.5. QGA-simulation of quantum physical systems.* There are two ways that the selection process can be implemented. *First,* follow the same steps as in a classical computer. That is, evaluate the "fitness" or "energy" of each chromosome. The fitness has to be stored since the evaluation process is not reversible. *Second,* we can make use of the quantum behavior of a quantum computing to perform selection, as described below. Selecting a suitable Hamiltonian will be equivalent to choosing a selection strategy.

After the selection step, the GA will return to its first step and continue iterations. It will terminate when an observation of the state is performed. Since members of the successive populations are wave functions, the uncertainty principle has to be taken into account when defining the genetic operations. As abovementioned in QGA this can be achieved by introducing smooth or "uncertain" genetic operations (see below).
*Example: QGA model in ID search space.* As we have mentioned before, the GA was developed to optimize (maximize or minimize) a given property (like an area, a volume or an energy). The property in question is a function of many variables of the system. In GA-language this quantity is referred as the fitness function. There are many different ways to apply GA. One of them is the phenotype version. In this approach, the GA basically maps the degrees of freedom or variables of the system to be optimized onto a genetic code (represented by a vector). Thus, a random population of individuals is created as a first generation. This population "evolves" and subsequent generations are reproduced from previous generations through application of different operators on the genetic codes, like, for instance, mutations, crossovers and reproductions or copies. The mutation operator changes randomly the genetic information of an individual, i.e., one or many components of the vector representing its genetic code. The crossover or recombination operator interchanges the components of the genetic codes of two individuals. In a simple recombination, a random position is chosen at which each partner in a particular pair is divided into two pieces. Each vector then exchanges a section of itself with its partner. The copy or reproduction operator merely transfers the information of the parent to an individual of the next generation without any changes.
In QGA approach the vector representing the genetic code is just the wave function $\psi(x)$.
The fitness function, i.e., the function to be optimized by the successive generations is the expectation:

$$E[\psi] = \frac{\left\langle\psi\left|\hat{H}\right|\psi\right\rangle}{\left\langle\psi\middle|\psi\right\rangle},$$

where the 1D-Hamiltonian is given by

$$\hat{H} = -\frac{1}{2}\nabla^2 + V(x).$$

Here, $V(x)$ is the external potential.

In the case of Grover's search algorithm we can write that $\hat{H} \equiv G \, U_j$.

There are many different ways to describe the evolution of the population and the creation of the offspring. The GA can be described as follows:

| Step | Computational algorithm |
|---|---|
| (i) | Create a random initial population $\left\{\psi_j^{(0)}(x)\right\}$ consisting of $N$ wave functions |
| (ii) | Determine the fitness $E\left[\psi_j^{(0)}\right]$ of all individuals |
| (iii) | Create a new population $\left\{\psi_j^{(1)}(x)\right\}$ through application of the genetic operators |
| (iv) | Evaluate the fitness of the new generation |
| (v) | Repeat steps (iii) and (iv) for the successive generations $\left\{\psi_j^{(n)}(x)\right\}$ until convergence is achieved and the ground-state wave is found |

*Remark.* Usually, real-space calculations deal with boundary conditions on a box. Therefore, and in order to describe a wave function within a given interval $a \le x \le b$ we have to choose boundary conditions for $\psi(a)$ and $\psi(b)$. For simplicity we set $\psi(a)=\psi(b)=0$, i.e., we consider a fmite box with infinite walls at $x = a$ and $x = b$. Inside this box we can simulate different kinds of potentials, and if the size of the box is large enough boundary effects on the results of our calculations can be minimized.

As initial population of wave functions satisfying the boundary conditions: $\psi_j=(a)=0 \, \psi$, j (b)=0, we choose Gaussian-like functions of the form

$$\psi_j(x) = A e\left[-\frac{(x-x_j)^2}{\sigma_j^2}\right] (x-a)(b-x),$$

with random values for $x_j \in [a,b]$ and $\sigma_j \in (0,b-a]$, whereas the amplitude A is calculated from the normalization condition $\int |\psi(x|^2 d) x =1$ for given values of $x_j$ and $\sigma_j$.

As we have mentioned above, three kinds of operations on the individuals can be defined: *reproduction* and *mutation* of a function, and *crossover* between two functions. The reproduction operation has the same meaning as in previous applications of GA. Both the crossover and the mutation operations have to be redefined and applied to the quantum mechanical case. The smooth or "uncertain" crossover is defined as follows. Let us take two randomly chosen "parent" functions $\psi^{(n+1)}_1(x)$ and $\psi^{(n+1)}_2(x)$ as

| | | |
|---|---|---|
| $\psi_1^{(n+1)}(x)$ | = | $\psi_1^{(n)}(x)\, St(x) + \psi_2^{(n)}(x)(1-St(x))$ |
| $\psi_2^{(n+1)}(x)$ | = | $\psi_2^{(n)}(x)\, St(x) + \psi_1^{(n)}(x)(1-St(x))$ |

where St(x) is a smooth step function involved in the crossover operation. We consider the following case:

$$ S(x) = 1\frac{1}{2}\left[ a + n \ h\left( \frac{x - x_0}{k_c^2} \right) \right], $$

where $x_0$ is chosen randomly ($x_0 \in a(,b)$) and $k_c$ is a parameter, which allows to control the sharpness of the crossover operation. The idea behind the "uncertain" crossover is to avoid *large derivatives* of the *new generated wave functions.* Note, that the crossover operation between identical wave functions generates the same wave functions.

*Remark.* The mutation operation in the quantum case must also take into account the uncertainty relations. It is not possible to change randomly the value of the wave function at a given point without producing dramatic changes in the kinetic energy of the state. To avoid this problem we define the mutation operation is defined as

$$ \psi^{(n+1)}(x) = \psi^{(n)}(x) + \psi(_r x), $$

where $\psi_r(x)$ is the random mutation function. In the present case we choose $\psi_r(x)$ as a Gaussian

$$ \psi_r(x) = eBx \ p\left[ -\frac{(x_r - x)^2}{R^2} \right] $$

with a random center $x_r \in a(,b)$, width

$$ R \in \left( 0, \ -a \right) $$

and amplitude $B$. For each step of GA iteration we randomly perform copy, crossover and mutation operations. After the application of the genetic operation the newly created functions are normalized.

*Example: QGA model in 2D search space.* In this case the QGA maps each wave function onto a genetic code (represented by a matrix containing the values of the wave function at the mash points). The algorithm is implemented as follows. Rectangular box

$$ \Omega \ \{ (x, \ y, \ a \leq , d \leq y \leq d \} $$

is chosen as finite region in real space. An initial population of trial two-body wave functions

$$ \{ \Psi_i \}, i = 1, \ldots, N_p $$

is chosen randomly. For this purpose, we can construct each $\Psi_i$ using Gaussian-like one-particle wave functions of the form

$$ \psi_\nu(x = y_\nu) \ A \ e \frac{(x - \bar{x}_\nu)^2}{\sigma_{X,\nu}^2} \ d \ p \frac{(y - \bar{y}_\nu)^2}{\sigma_{Y,\nu}^2} (y) \ d(-y) $$

with $\nu = 1,2$ and random values for $\bar{x}_\nu, \bar{y}_\nu$ and for $\sigma_{X,\nu} \sigma_{Y,\nu}$ for each wave function. The amplitude $A_\nu$ is calculated from the normalization condition:

$$\iint \left| \psi_j(x, y) \right|^2 dx\, dy = 1,$$

and its sign is chosen randomly. Note that defined in such a way the wave functions $\psi_j\,(x, y)$ fulfill zero condition on the boundary $\partial\Omega$

$$\psi_v(x, y)\big|_{\partial\Omega} = 0$$

So constructed initial population, $\{\Psi_i\}$, corresponds to the initial generation. Now, the fitness of each individual $\Psi_i$ of the population is determined by evaluating the function

$$E_i = E[\psi_i] = \int H^*(r_1, r_2) \hat{H}(r_1, r_2) d(r_2) d r_2,$$

where $\hat{H}$ is the Hamiltonian of the corresponding problem. This means that the expectation value of the energy for a given individual is a measure of its fitness, and we apply the QGA to minimize the energy. By virtue of the variational principle, when the QGA finds the global minimum, it corresponds to the ground state of $H$.

Off-springs of the initial generation are formed through application of mutation, crossover and copy operations on the genetic codes. We define continuous analogies of three kinds of genetic operations on the individuals: reproduction, mutation, and crossover. While the reproduction operation has the same meaning as in previous "classical" applications of the GA, both the crossover and the mutation operations have to be redefined to be applied to the quantum mechanical case. The smooth or "uncertain" crossover in two dimensions is defined as follows. Given two randomly chosen single-particle "parent" functions $\psi_{i\nu}^{(old)}(x, y)$ and $\psi_{l\mu}^{(old)}(x, y)$ ($i, l = 1, N_{pop}, \mu, \nu = 2$), one can construct two new functions $\psi_{i\nu}^{(new)}(x, y)$ and $\psi_{l\mu}^{(new)}(x, y)$ as

| $\psi_{i\nu}^{(new)}(x, y)$ | = | $\psi_{i\nu}^{(old)}(x, y) St(x, y) + \psi_{l\mu}^{(old)}(x, y)(1 - St(x, y))$ |
| $\psi_{l\mu}^{(new)}(x, y)$ | = | $\psi_{l\mu}^{(old)}(x, y) St(x, y) + \psi_{i\nu}^{(old)}(x, y)(1 - St(x, y))$ |

where $St(x, y)$ is 2D smooth step function which produces the crossover operation. We can define

$$St(x, y) = \frac{1}{2}\left[ 1 + \tanh\left( \frac{a\,x + b\,y + c}{k_c^2} \right) \right],$$

where $a, b, c$ are chosen randomly. The line $a\,x + b\,y + c = 0$ cuts $\Omega$ into two pieces, $k_c$ is a parameter, which allows to control the sharpness of the crossover operation. The idea behind the "uncertain" crossover is to avoid very large derivatives of the newly generated wave functions, i.e., very large kinetic energy of the system. Note that the crossover operation between identical wave functions generates the same wave functions.

*Remark.* As abovementioned the mutation operation in the quantum case must also take into account the uncertainty relations. It is not possible to change randomly the value of the wave function at a given point without producing dramatic changes in the kinetic energy of the state. To avoid this problem we define new kind of mutation operation for random "parent" $\psi_{iv}^{(old)}(x,y)$ as follows:

$$\psi_{iv}^{(n} \quad {}^{e}(x^{w}, \quad \tfrac{o}{\not{y}})\psi_{iv}^{l}(x^{d}, \quad y) + (x_r, \quad y),$$

where $\psi_r(x,y)$ is random mutation function. In the present case we choose $\psi_r(x,y)$ as a Gaussian-like function

$$\psi_r(x,y) = A_r \, e^{\left[x - \frac{(x_r - x)^2}{R_x^2} \not{d} \, p - \frac{(x_r - y)^2}{R_y^2} y - \right)} \quad d( \quad -y)$$

with random values for $x_r, y, R_x, R_y$ and $A_r$. Similarly to 1D space, for each step of GA iteration we randomly perform copy, crossover and mutation operations. After the application of the genetic operation the new-created functions are normalized and orthogonalized. Then, the fitness of the individuals is evaluated and the fittest individuals are selected. The procedure is repeated until convergence of the fitness function (the energy of the system) to a minimal value is reached. Inside the box $\Omega$ we can simulate different kinds of external potentials. If the size of the box is large enough, boundary effects are negligible.

## 4. SIMULATION SYSTEM OF SMART INTELLIGENT CONTROL BASED ON QUANTUM SOFT COMPUTING

### 4.1. General structure of QA's simulation system

The problems solved by the quantum algorithms we will describe can all be so stated:

| **Input** | A function f: $\{0,1\}^n \to \{0,1\}^m$ |
|---|---|
| **Problem** | Find a certain property of f |

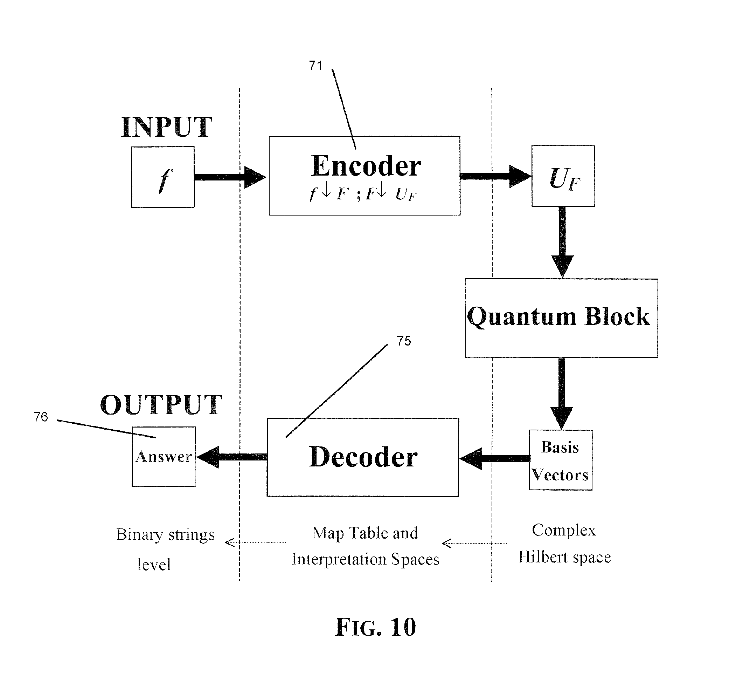

Figure 10 shows a basic scheme of Quantum Algorithms.

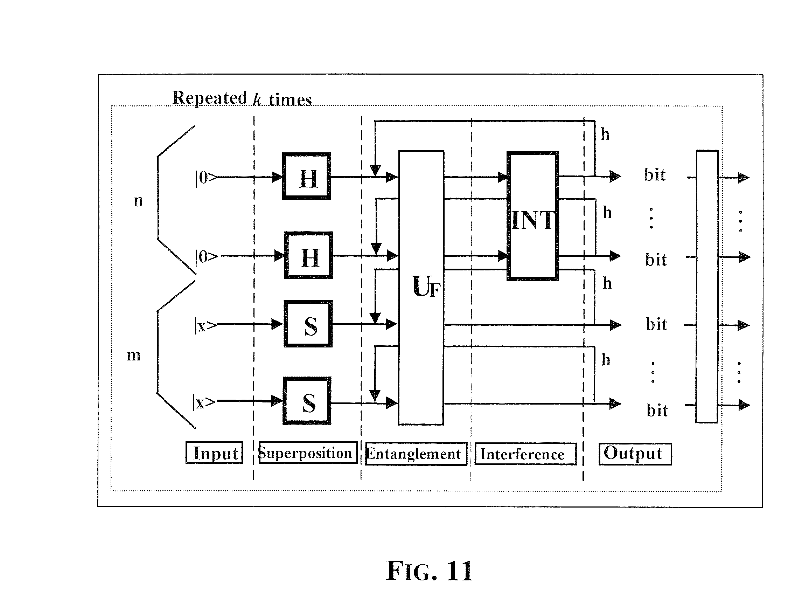

Figure 11 shows a sample quantum circuit.

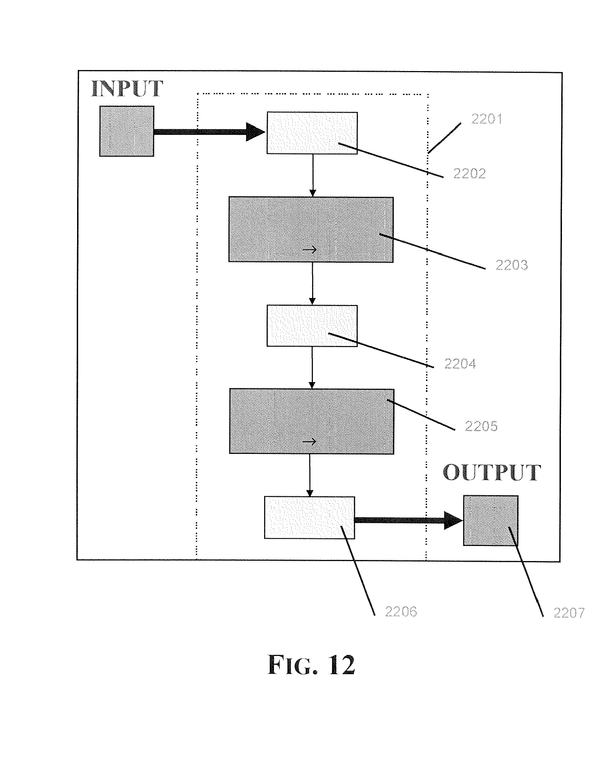

The structure of a quantum algorithm is outlined, with a high level representation, in the scheme diagram of Figure 12.

The input of a quantum algorithm is always a function $f$ from binary strings into binary strings. This function is represented as a map table in Box 2201, defining for every string its image. Function $f$ is firstly encoded in Box 2207 into a unitary matrix operator $U_F$ depending on $f$ properties. In some sense, this operator calculates $f$ when its input and output strings are encoded into canonical basis vectors of a Complex Hilbert Space: $U_F$ maps the vector code of every string into the vector code of its image by $f$.

Remark. A squared matrix $U_F$ on the complex field is unitary iff its inverse matrix coincides with its conjugate transpose: $U_F^{-1} = U_F^{\dagger}$. A unitary matrix is always reversible and preserves the norm of vectors.

When the matrix operator $U_F$ has been generated, it is embedded into a quantum gate G, a unitary matrix whose structure depends on the form of matrix $U_F$ and on the problem we want to solve. The quantum gate is the heart of a quantum algorithm. In every quantum algorithm, the quantum gate acts on an initial canonical basis vector (we can always choose the same vector) in order to generate a complex linear combination (let's call it superposition) of basis vectors as output. This superposition contains all the information to answer the initial problem.

After this superposition has been created, measurement takes place in order to extract this information. In quantum mechanics, measurement is a non-deterministic operation that produces as output only one of the basis vectors in the entering superposition. The probability of every basis vector of being the output of measurement depends on its complex coefficient (probability amplitude) in the entering complex linear combination.

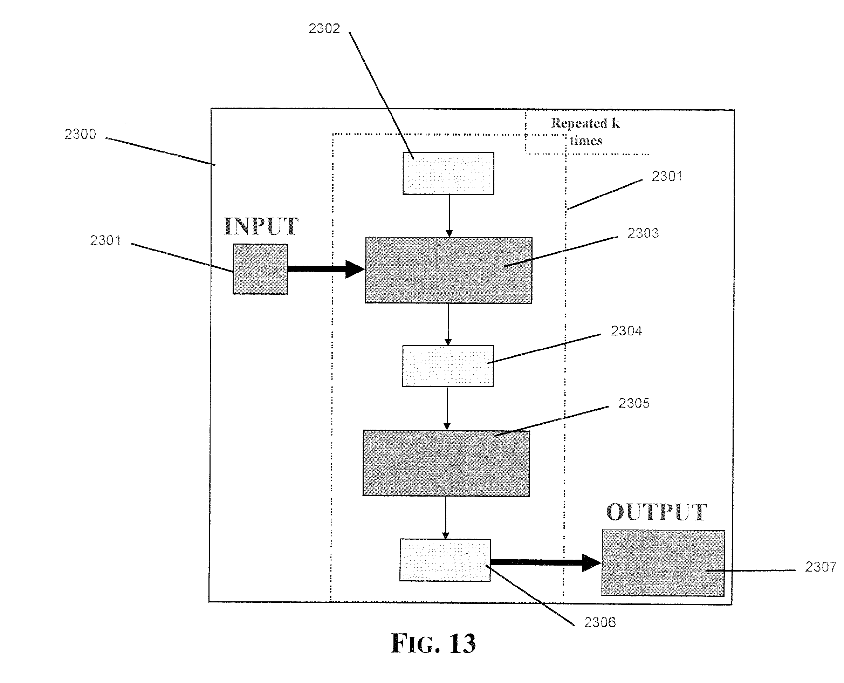

The segmental action of the quantum gate and of measurement constitutes the quantum block (see Figure 13). The quantum block is repeated $k$ times in order to produce a collection of k basis vectors. Being measurement a non-deterministic operation, these basic vectors won't be necessarily identical and each one of them will encode a peace of the information needed to solve the problem.

The last part of the algorithm consists into the interpretation of the collected basis vectors in order to get the right answer for the initial problem with a certain probability.

*4.1.1. Encoder.* The behavior of the encoder block is described in the detailed scheme diagram of Figure 12. Function *f* is encoded into matrix $U_F$ in three steps.

Step 1: The map table of function *f*: $\{0,1\}^n \rightarrow \{0,1\}^m$ is transformed in box 2203 into the map table of the <u>injective</u> function $F$:$\{0,1\}^{n+m} \rightarrow \{0,1\}^{n+m}$ such that:

$$F(x_0, .., x_{n-1}, y_0, .., y_{m-1}) = (x_0, .., x_{n-1}, f(x_0, .., x_{n-1}) \oplus (y_0, .., y_{m-1})).$$

*Remark.* The need to deal with an *injective* function comes from the requirement that $U_F$ is unitary. A unitary operator is <u>reversible,</u> so it cannot map 2 two different inputs in the same output. Since $U_F$ will be the matrix representation of F, F is supposed to be injective. If we directly employed the matrix representation of function *f,* we could obtain a non-unitary matrix, since *f* could be non-injective. So, injectivity is fulfilled by increasing the number of bits and considering function *F* instead of function *f.* Anyway, function *f* can always be calculated from *F* by putting $(y_0,..., y_{m-1})=(0,..,0)$ in the input string and reading the last m values of the output string.

*Remark.* Reversible circuits realize only permutation operations. When we can realize any Boolean circuit $F : B^n \rightarrow B^m$ by reversible circuit? For this case we do not calculate the function $F$:$B^n \rightarrow B^m$. We can calculate another function with expanding

$$F_\oplus : B^{n+m} \xrightarrow{m} B^{+m}$$

that we define as following relation:

$$F_\oplus(x, y) = (x, y \oplus F(x))$$

where the operation $\oplus$ we define as addition on module 2. Then the value of $F(x)$ is defined as

$$F_\oplus(x, ) \oplus (F(x)).$$

Step 2: Function F map table is transformed in Box 2205 into $U_F$ map table, following the following constraint:

$$\forall s \in \{0,1\}^{n+m} : U_F[\tau(s)] = \tau[F(s)]$$

The code map $\tau$: $\{0,1\}^{n+m} \rightarrow C^{2n+m}$ ($C^{2n+m}$ is the target Complex Hilbert Space) is such that:

$$\tau(0) = \begin{pmatrix} 1 \\ 0 \end{pmatrix} = |0\rangle \quad , \quad \tau(1) = \begin{pmatrix} 0 \\ 1 \end{pmatrix} = |1\rangle$$

$$\tau(x_0, .. x_{n+m-1}) = (x_0) \otimes_{n+..} \otimes \tau(x_{m-1}, x) = |x_0 .. x_{m-1}\rangle$$

Code τ maps bit values into complex vectors of dimension 2 belonging to the *canonical basis* of $C^2$. Besides, using *tensor product,* τ maps the general state of a binary string of dimension n into a vector of dimension $2^n$, reducing this state to the joint state of the n bits composing the register. Every bit state is transformed into the corresponding 2-dimensional basis vector and then the string state is mapped into the corresponding $2^n$-dimensional basis vector by composing all bit-vectors through tensor product. In this sense tensor product is the vector counterpart of state conjunction.

If a component of a complex vector is interpreted as the probability amplitude of a system of being in a given state (indexed by the component number), the tensor product between two vectors describes the joint probability amplitude of two systems of being in a joint state.

Basis vectors are denoted using the *ket* notation $|i\rangle$. This notation is taken from Dirac description of quantum mechanics.

Step 3: $U_F$ map table is transformed in Box 2206 into $U_F$ using the following transformation rule:

$$[U_F]_{ij} = U \quad \Leftrightarrow_{F} j| \quad \rangle = |i\rangle$$

This rule can easily be understood considering vectors $|i\rangle$ and $|j\rangle$ as column vectors. Belonging these vectors to the canonical basis, $U_F$ defines a *permutation map* of the identity matrix rows. In general, row $|j\rangle$ is mapped into row $|i\rangle$.

*4.1.2. Quantum block.* The heart of the quantum block is the *quantum gate,* which depends on the properties of matrix $U_F$. The scheme in Figure 13 gives a more detailed description of the quantum block.

Matrix operator $U_F$ in Figure 13 is the output of the encoder block represented in Figure 12. Here, it becomes the input for the quantum block in Box 2301.

This matrix operator is firstly embedded into a more complex gate: the quantum gate G in Box 2303. Unitary matrix G is applied k times to an initial canonical basis vector $|i\rangle$ of dimension $2^{n+m}$ from Box 2302. Every time, the resulting complex superposition G $|0..0\ 1..1\rangle$ of basis vectors is measured, producing one basis vector $|x_i\rangle$ as result. All the measured basis vectors $\{x_1,..., x_k\}$ are collected together in Box 2306. This collection is the output of the quantum block in Box 2307.

*Remark.* The "intelligence" of our algorithms is in the ability to build a quantum gate that is able to extract the information necessary to find the required property of *f* and to store it into the output vector collection.

We will discuss in detail the structure of the quantum gate for every quantum algorithm, observing that it can be described in a general way.

In order to represent quantum gates we are going to employ some special diagrams called *quantum circuits.*

An example of quantum circuit is reported in Figure 11.

Every rectangle is associated to a matrix $2^n \times 2^n$, where n is the number of lines entering and leaving the rectangle. For example, the rectangle marked $U_F$ is associated to matrix $U_F$.

*Quantum circuits.* Let us give a high-level description of the gate and, using some transformation rules, we can easily compile them into the corresponding gate-matrix. These rules are described in detail in the US patent No. 6,578,018.

*4.1.3. Decoder.* The decoder block in Box 75 of Figure 10 has the function to interpret the basis vectors collected after the iterated execution in the quantum block. Decoding these vectors means to retranslate them into binary strings and interpreting them directly if they already contain the answer to the starting problem or use them, for instance as coefficients vectors for some equation system, in order to get the searched solution. We shall not investigate this part in detail since it is a non-interesting easy classical part.

*4.1.4. Analog description of Operators and Gate*

Referring to Quantum Algorithm general scheme depicted in Figure 11, the output vector of superposition is well known if the value of matrix **S** is defined or, in other words, a particular algorithm is chosen. This fact avoids, in a dedicated gate, several time-consuming matrix tensor products and will be explained in next sections more in detail. However if we want to keep the generality of the method, a circuit performing the superposition operation is proposed in the European patent application EP 1 267 304 in the name of STMicroelectronics. S.r.l.. It avoids the use of multipliers and, by utilizing logic gates in an analogue architecture, reduce the number of operation and components.

As showed in Figure 11, the first general operation needed is S|x>, where **S** can be **H** or **I** and |x> can be |0> or |1>. The results are therefore combined together by tensor products. Neglecting the constant factor $\frac{1}{2}^{(n+1)/2}$, the four possibilities can be written as follows:

$$H\left|0\right\rangle = \begin{bmatrix} 1 \\ 1 \end{bmatrix} \begin{array}{c} 1 \\ - \end{array} \begin{bmatrix} 1 \\ 1 \end{bmatrix} \begin{bmatrix} 1 \\ 0 \end{bmatrix} H\left|1\right\rangle = \begin{bmatrix} 1 \\ 1 \end{bmatrix} \begin{array}{c} 1 \\ 1 - \end{array} \begin{bmatrix} 0 \\ 1 \end{bmatrix}$$

$$I\left|0\right\rangle = \begin{bmatrix} 1 \\ 0 \end{bmatrix} \begin{array}{c} 0 \\ 1 \end{array} \begin{bmatrix} 1 \\ 0 \end{bmatrix} I\left|1\right\rangle = \begin{bmatrix} 1 \\ 0 \end{bmatrix} \begin{array}{c} 0 \\ 1 \end{array} \begin{bmatrix} 0 \\ 1 \end{bmatrix}$$

It can be noted that in all of these cases, direct product can be performed via AND gates. In fact, we have 1 * =1 1∧1 1=; 1- *=1 (1 1∧) 1 ; 1-* 0=(1∧0)= 0.

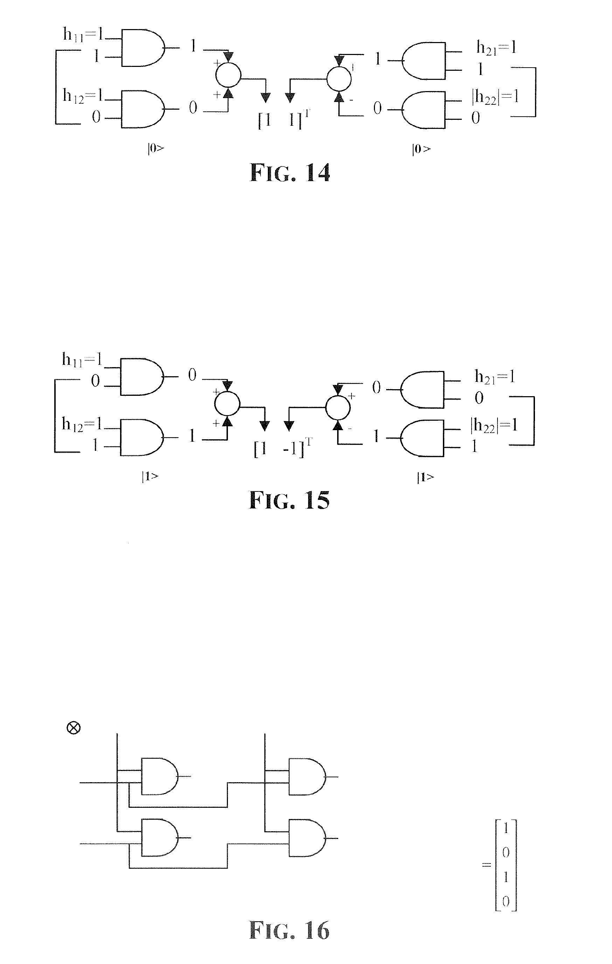

Taking into account these equalities, **H**|0> can be obtained as in Figure 14, while **H**|1> is calculated as in Figure 15.

If S=I the structure is the same but all signs are positive. However, in this case it is quite evident that AND gates can be bypassed.

Let us focus on tensor products between the resulting vectors. After direct product we can have several of these to be combined:

$$H\left|0\right\rangle = \begin{bmatrix} 1 \\ 1 \end{bmatrix} \quad H\left|1\right\rangle = \begin{bmatrix} 1 \\ -1 \end{bmatrix}$$

$$I\left|0\right\rangle = \begin{bmatrix} 1 \\ 0 \end{bmatrix} \quad I\left|1\right\rangle = \begin{bmatrix} 0 \\ 1 \end{bmatrix}$$

Some preliminary considerations must be done in order to simplify the problem. For example, vector **I**|1> is not present in any quantum algorithm. Moreover **H**|1> and **I**|0> are not present in the same algorithm at the same time. So the output of superposition can only be the result of products like

$$\begin{bmatrix} 1 \\ 1 \end{bmatrix} \otimes \begin{bmatrix} 1 \\ 1 \end{bmatrix} \otimes \begin{bmatrix} 1 \\ -1 \end{bmatrix} \otimes \ldots$$

or like

$$\begin{bmatrix} 1 \\ 1 \end{bmatrix} \otimes \begin{bmatrix} 1 \\ 1 \end{bmatrix} \otimes \begin{bmatrix} 1 \\ 0 \end{bmatrix} \otimes \ldots$$

In both cases, only two values are present in this expression, and therefore logic gates can be used again. From a formal point of view, the two expression are identical (the second one can be considered the normalization between 0 and 1 of the first one).

Let us suppose we wish to calculate

$$\begin{bmatrix} 1 & \end{bmatrix}^{T} \otimes \begin{bmatrix} & 0 \end{bmatrix}^{T}.$$

The simple logic gate of Figure 16 performs this operation.
The tensor product

$$\begin{bmatrix} 1 & \end{bmatrix}^{T} \otimes \begin{bmatrix} 1 & \end{bmatrix}^{T} \otimes \begin{bmatrix} & 0 \end{bmatrix}^{T}$$

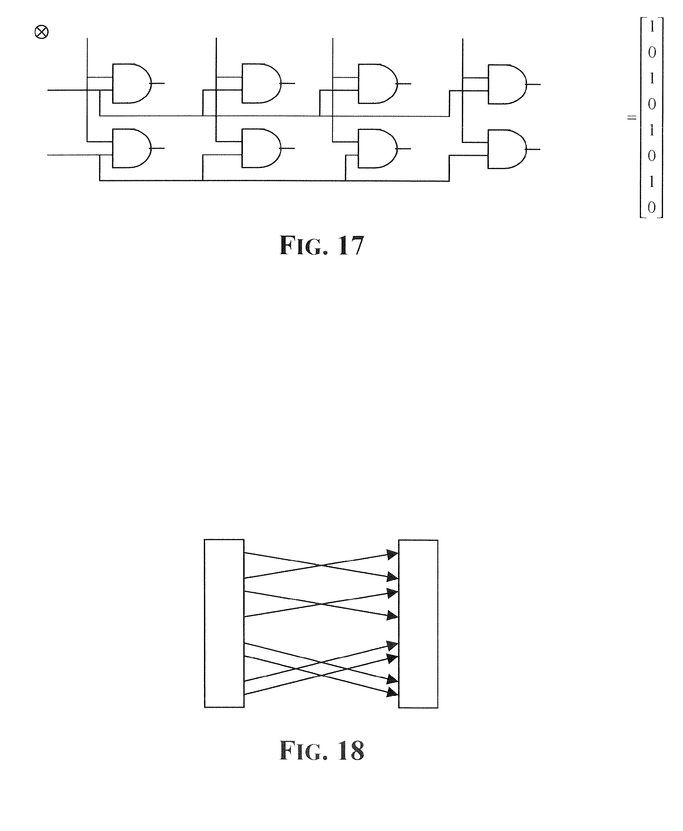

can therefore be obtained as depicted in Figure 17.

However the whole superposition block can be constituted by only four AND gates. In fact the addition of further qubits to the specific quantum algorithm can be very easy.

Suppose that *A* is a vector representing the superposition output of an n qubits algorithm. In order to have an *n+1* qubits superposition output vector two operations are possible:

$$\begin{bmatrix} 1 \\ 1 \end{bmatrix} \otimes A \quad \begin{bmatrix} A \\ A \end{bmatrix} = o \quad \begin{bmatrix} 1 \\ 0 \end{bmatrix} \otimes \quad \begin{bmatrix} 1 \\ 1 \end{bmatrix} \quad A = \begin{bmatrix} A \\ 0 \end{bmatrix}$$

depending on the specific algorithm. These results can be obtained only by replicating (or not) the previous vector A. resulting vector is ready to be the input of the following block (i.e. the Entanglement block) after a suitable denormalization between -1 and 1 and after being scaled by the factor $1/2^{(n+1)/2}$.

Entanglement step consists, as showed in previous sections, in direct product among unitary matrix $U_F$ (in which the problem is encoded via a binary function *f*) and the vector coming out from superposition. The real effect on this vector is in general the permutation of some elements, as shown in Figure 18.

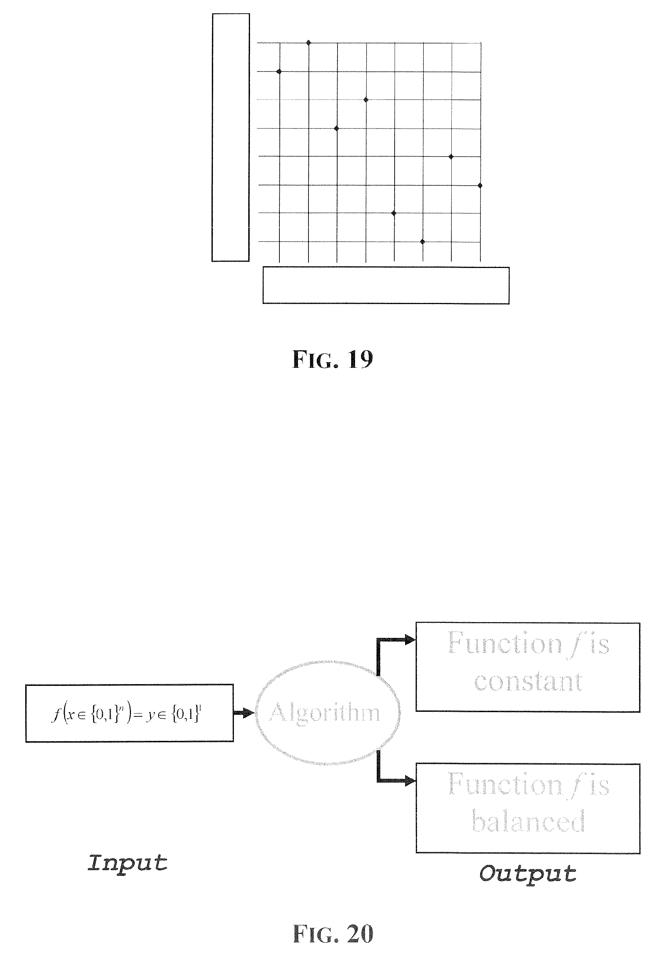

In order to perform similar operations, a PROM matrix structure as that of Figure 19 can be adopted, in which conduction takes place in correspondence of a nonzero element of $U_F$.

Regarding the interference operator, it could be treated in general like superposition using AND gates for tensor products but, due to important differences among Quantum Algorithms at this step, the best approach is to build a dedicated *interchangeable* interference block. To this aim it will be discussed case by case in next sections, however including parallelism and possible similarities between algorithms.

*4.2. Deutsch-Jozsa's problem*

Definition of Deutsch-Jozsa's problem is so stated:

| Input | *A constant or balanced function f:{0,1}$^n$ →{0,1}* |
|---|---|
| **Problem** | *Decide if f is constant or balanced* |

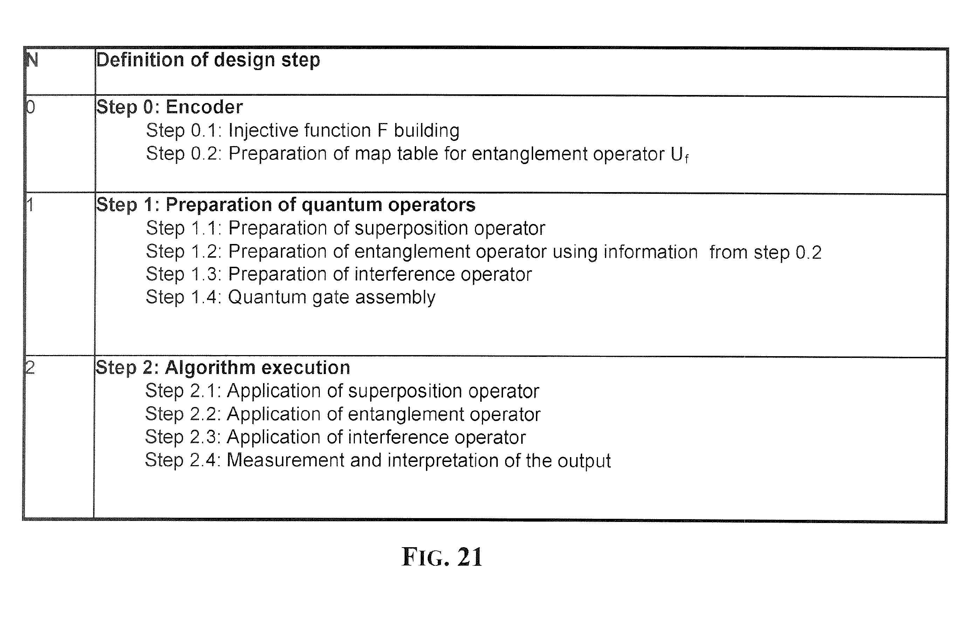

This problem is very similar to Deutsch's problem, but it has been generalized to n>1. Figure 20 shows the structure of the problem and Figure 21 shows the steps of gate design process.

According to design steps on the Figure 21 let's consider the step 0: Encoder.

4.2.1. *Encoder.* We firstly deal with some special functions with *n=2*. This should help the reader to understand the main ideas of this algorithm. Then we discuss the general case with n=2 and finally we encode a balanced or constant function in the more general situation *n>0*. We consider the encoding steps process according to the structure on the Figure 12.

*A. Encoding a constant function with value 1.*

Let's consider the case:

$$n = 2$$

$$\forall x \quad \{0 \quad \}^n \quad 1(x) = 1$$

In this case *f* map table is so defined:

| x | f(x) |
|---|------|
| 00 | 1 |
| 01 | 1 |
| 10 | 1 |
| 11 | 1 |

The encoder block takes *f* map table as input and encodes it into matrix operator $U_F$, which acts inside of a complex Hilbert space.

<u>Step 1</u>

Function *f* is encoded into the injective function F, built according to the following statement:

$$F : \{ \quad 0 \}^{n+1}, \to \{ \quad 0 \}^{n+1} \quad y \left( 1, x :_1 = \}_0 (, f, x(_0, x)_1 \oplus y_0 \right)$$

Then *F* map table is:

| $(x_0, x_1, y_0)$ | $F(x_0, x_1, y_0)$ |
|---|---|
| 000 | 001 |
| 010 | 011 |
| 100 | 101 |
| 110 | 111 |
| 001 | 000 |
| 011 | 010 |
| 101 | 100 |
| 111 | 110 |

<u>Step 2</u>

Let's now encode *F* into $U_F$ map table using the rule:

$$\forall t \in \{0,1\}^{n+1} : U_F [\tau(t)] = \tau[F(t)]$$

where $\tau$ is the code map defined above. This means:

| $\|x_0,x_1,y_0\rangle$ | $U_F\|x_0,x_1,y_0\rangle$ |
|---|---|
| \|000> | \|001> |
| \|010> | \|011> |
| \|100> | \|101> |
| \|110> | \|111> |
| \|001> | \|000> |
| \|011> | \|010> |
| \|101> | \|100> |
| \|111> | \|110> |

Here, we used ket notation to denote basis vectors.

Step 3

Starting from the map table of $U_F$, we calculate the corresponding matrix operator.
This matrix is obtained using the rule:

$$[U_F]_{ij} = U \quad \Leftrightarrow_F j| \ \rangle = |i\rangle$$

So, $U_F$ is the following matrix:

| $U_F$ | \|000> | \|001> | \|010> | \|011> | \|100> | \|101> | \|110> | \|111> |
|---|---|---|---|---|---|---|---|---|
| \|000> | 0 | 1 | 0 | 0 | 0 | 0 | 0 | 0 |
| \|001> | 1 | 0 | 0 | 0 | 0 | 0 | 0 | 0 |
| \|010> | 0 | 0 | 0 | 1 | 0 | 0 | 0 | 0 |
| \|011> | 0 | 0 | 1 | 0 | 0 | 0 | 0 | 0 |
| \|100> | 0 | 0 | 0 | 0 | 0 | 1 | 0 | 0 |

| | | | | | | | |
|---|---|---|---|---|---|---|---|
| \|101> | 0 | 0 | 0 | 0 | 1 | 0 | 0 | 0 |
| \|110> | 0 | 0 | 0 | 0 | 0 | 0 | 0 | 1 |
| \|111> | 0 | 0 | 0 | 0 | 0 | 0 | 1 | 0 |

Using matrix tensor product, $U_F$ can be written as:

$$U_F = I \otimes I \otimes C$$

where $\otimes$ is the tensor product, $I$ is the identity matrix of order 2 and $C$ is the NOT-matrix so defined:

$$C = \begin{bmatrix} 0 & 1 \\ 1 & 0 \end{bmatrix}$$

Matrix C flips a basis vector: in fact it transforms vector |0> into |1> and |1> into |0>.

If matrix $U_F$ is applied to the tensor product of three vectors of dimension 2, the resulting vector is the tensor product of the three vectors obtained applying matrix $I$ to the first two input vectors and matrix $C$ to the third.

*Tensor product and entanglement.* Given m vectors $\underline{v}_1,.., \underline{v}_m$ of dimension $2^{d_1},.., 2^{d_m}$ and $m$ matrix operators $M_1,.., M_m$ of order $2^{d_1} \times 2^{d_1},.., 2^{d_m} \times 2^{d_m}$ the following property holds:

$$(M_1 \otimes . M \otimes_{\cdot m}) \cdot (\underline{v}_1 \otimes v \otimes_{\_n}) M \quad _i \cdot \underline{v}_1 \otimes . M \otimes_{m} \cdot \underline{v}_n$$

This means that, if a matrix operator can be written as the tensor product of m smaller matrix operator, the evolutions of the m vectors the operator is applied to are independent, namely no correlation is present among this vector. An important corollary is that if the initial state was not entangled, also the fmal state is not entangled.

The structure of $U_F$ is such that the first two vectors in the input tensor product are preserved (action of $I$), whereas the third is flipped (action of $C$). We can easily verify that this action corresponds to the constraints stated by $U_F$ map table.

*B. Encoding a constant function with value 0*

Let's now consider the case:

$$n = 2$$

$$\forall x \quad \{0 \ , \}^n \quad 1 (x) = 0$$

In this case $f$ map table is so defined:

| x | f(x) |
|---|---|
| 00 | 0 |
| 01 | 0 |
| 10 | 0 |
| 11 | 0 |

Step 1. F map table is:

| $(x_0, x_1, y_0)$ | $F(x_0, x_1, y_0)$ |
|---|---|
| 000 | 000 |
| 010 | 010 |
| 100 | 100 |
| 110 | 110 |
| 001 | 001 |
| 011 | 011 |
| 101 | 101 |
| 111 | 111 |

Step 2. F map table is encoded into $U_F$ map table:

| $|x_0 \, x_1 \, y_0 \rangle$ | $U_F|x_0 \, x_1 \, y_0 \rangle$ |
|---|---|
| $|000\rangle$ | $|000\rangle$ |
| $|010\rangle$ | $|010\rangle$ |
| $|100\rangle$ | $|100\rangle$ |
| $|110\rangle$ | $|110\rangle$ |
| $|001\rangle$ | $|001\rangle$ |
| $|011\rangle$ | $|011\rangle$ |
| $|101\rangle$ | $|101\rangle$ |
| $|111\rangle$ | $|111\rangle$ |

Step 3. It is very easy to transform this map table into a matrix. In fact, we can observe that every vector is preserved.

Therefore the corresponding matrix is the identity matrix of order $2^3$.

| $U_F$ | $|000>$ | $|001>$ | $|010>$ | $|011>$ | $|100>$ | $|101>$ | $|110>$ | $|111>$ |
|---|---|---|---|---|---|---|---|---|
| $|000>$ | 1 | 0 | 0 | 0 | 0 | 0 | 0 | 0 |
| $|001>$ | 0 | 1 | 0 | 0 | 0 | 0 | 0 | 0 |
| $|010>$ | 0 | 0 | 1 | 0 | 0 | 0 | 0 | 0 |
| $|011>$ | 0 | 0 | 0 | 1 | 0 | 0 | 0 | 0 |
| $|100>$ | 0 | 0 | 0 | 0 | 1 | 0 | 0 | 0 |
| $|101>$ | 0 | 0 | 0 | 0 | 0 | 1 | 0 | 0 |
| $|110>$ | 0 | 0 | 0 | 0 | 0 | 0 | 1 | 0 |
| $|111>$ | 0 | 0 | 0 | 0 | 0 | 0 | 0 | 1 |

Using matrix tensor product, this matrix can be written as:

$$U_F = I \otimes I \otimes I$$

The structure of $U_F$ is such that all basis vectors of dimension 2 in the input tensor product evolve independently. No vector <u>controls</u> any other vector.

*C. Encoding a balanced function*

Consider now the balanced function:

$$n = 2$$

$$\forall (x_1, \ldots, x_n) \in \{0,1\}^n : f(\ldots, x_i \oplus \ldots, x_i \oplus x_n$$

In this case *f* map table is the following:

| x | f(x) |
|---|---|
| 00 | 0 |
| 011 | 1 |
| 10 | 1 |
| 11 | 0 |

Step 1

The following map table calculated in the usual way represents the injective function F (where *f* is encoded into):

| $(x_0, x_1, y_0)$ | $F(x_0, x_1, y_0)$ | $(x_0, x_1, y_0)$ | $F(x_0, x_1, y_0)$ |
|---|---|---|---|
| 000 | 000 | 001 | 001 |
| 010 | 011 | 011 | 010 |
| 100 | 101 | 101 | 100 |
| 110 | 110 | 111 | 111 |

Step 2. Let's now encode F into $U_F$ map table:

| $\lvert x_0\, x_1\, y_0 \rangle$ | $U_F \lvert x_0 x_1\, y_0 \rangle$ |
|---|---|
| $\lvert 000 \rangle$ | $\lvert 000 \rangle$ |
| $\lvert 010 \rangle$ | $\lvert 011 \rangle$ |
| $\lvert 100 \rangle$ | $\lvert 101 \rangle$ |
| $\lvert 110 \rangle$ | $\lvert 110 \rangle$ |
| $\lvert 001 \rangle$ | $\lvert 001 \rangle$ |
| $\lvert 011 \rangle$ | $\lvert 010 \rangle$ |
| $\lvert 101 \rangle$ | $\lvert 100 \rangle$ |
| $\lvert 111 \rangle$ | $\lvert 111 \rangle$ |

Step 3. The matrix corresponding to $U_F$ is:

| U_F | \|000> | \|001> | \|010> | \|011> | \|100> | \|101> | \|110> | \|111> |
|---|---|---|---|---|---|---|---|---|
| \|000> | 1 | 0 | 0 | 0 | 0 | 0 | 0 | 0 |
| \|001> | 0 | 1 | 0 | 0 | 0 | 0 | 0 | 0 |
| \|010> | 0 | 0 | 0 | 1 | 0 | 0 | 0 | 0 |
| \|011> | 0 | 0 | 1 | 0 | 0 | 0 | 0 | 0 |
| \|100> | 0 | 0 | 0 | 0 | 0 | 1 | 0 | 0 |
| \|101> | 0 | 0 | 0 | 0 | 1 | 0 | 0 | 0 |
| \|110> | 0 | 0 | 0 | 0 | 0 | 0 | 1 | 0 |
| \|111> | 0 | 0 | 0 | 0 | 0 | 0 | 0 | 1 |

This matrix cannot be written as the tensor product of smaller matrices. In fact, if we write it as a block matrix we obtain:

| U_F | \|00> | \|01> | \|10> | \|11> |
|---|---|---|---|---|
| \|00> | I | 0 | 0 | 0 |
| \|01> | 0 | C | 0 | 0 |
| \|10> | 0 | 0 | C | 0 |
| \|11> | 0 | 0 | 0 | I |

This means that the matrix operator acting on the third vector in the input tensor product depends on the values of the first two vectors. If these vectors are |0> and |0>, for instance, the operator acting on the third vector is the identity matrix, if the first two vectors are |0> and |1> then the evolution of the third is determined by matrix C.

We say that this operator creates entanglement, namely correlation among the vectors in the tensor product.

*D. General case with n=2.* Consider now a general function with *n=2.* In this general case *f* map table is the following:

| x | f(x) |
|---|---|
| 00 | $f_{00}$ |
| 01 | $V_{01}$ |
| 10 | $f_{10}$ |
| 11 | $f_{11}$ |

with $f_i \in \{0,1\}$, $i=00,01,10,11$. If $f$ is constant then $\exists y \in \{0,1\} \forall x \in \{0,1\}^2: f(x)=y$. If $f$ is balanced then $|\{f_i : fi = 0\}| = |\{f_i : fi = 1\}|$

<u>Step 1.</u> Injective function $F$ (where $f$ is encoded) is represented by the following map table calculated in the usual way:

| $(x_0, x_1, y_0)$ | $F(x_0, x_1, y_0)$ |
|---|---|
| 000 | $00\ f_{00}$ |
| 010 | $01\ f_{01}$ |
| 100 | $10\ f_{10}$ |
| 110 | $11\ f_{11}$ |
| 001 | $00\neg f_{00}$ |
| 011 | $01\neg f_{01}$ |
| 101 | $10\neg f_{10}$ |
| 111 | $11\neg f_{11}$ |

<u>Step 2.</u> Let's now encode F into $U_F$ map table:

| $|x_0\ x_1\ y_0>$ | $U_F|x_0\ x1\ y_0>$ |
|---|---|
| $|000>$ | $|00\ f_{00}>$ |
| $|010>$ | $|01\ f_{01}>$ |
| $|100>$ | $|10\ f_{10}>$ |
| $|110>$ | $|11\ f_{11}>$ |
| $|001>$ | $|00\neg f_{00}>$ |
| $|011>$ | $|01\neg f_{01}>$ |
| $|101>$ | $|10\neg f10>$ |
| $|111>$ | $|11\neg f11>$ |

<u>Step 3.</u> The matrix corresponding to $U_F$ can be written as a block matrix with the following general form:

| $U_F$ | $\lvert 00 \rangle$ | $\lvert 01 \rangle$ | $\lvert 10 \rangle$ | $\lvert 11 \rangle$ |
|---|---|---|---|---|
| $\lvert 00 \rangle$ | $M_{00}$ | 0 | 0 | 0 |
| $\lvert 01 \rangle$ | 0 | $M_{01}$ | 0 | 0 |
| $\lvert 10 \rangle$ | 0 | 0 | $M_{10}$ | 0 |
| $\lvert 11 \rangle$ | 0 | 0 | 0 | $M_{11}$ |

where $M_i=I$ if $f_i=0$ and $M_i=C$ if $f_i=1$, $i=00,01,10,11$. The structure of this matrix is such that, when the first two vectors are mapped into some other vectors, the null operator is applied to the third vector, generating a null probability amplitude for this transition. This means that the first two vectors are always left unchanged. On the contrary, operators $M_i \in \{I, C\}$ and they are applied to the third vector when the first two are mapped into themselves. If all $M_i$ coincide, operator $U_F$ encodes a constant function. Otherwise it encodes a non-constant function. If$\lvert\{M_i: M_i= I\}\rvert = \lvert\{M_i: Mi=C\}\rvert$ then $f$ is balanced.

*E. General case*

Consider now the general case n>0. Input function $f$ map table is the following:

| $x \in \{0,1\}^n$ | $f(x)$ |
|---|---|
| 0..0 | $f_{0..0}$ |
| 0..1 | $f_{0..1}$ |
| ... | ... |
| 1..1 | $f_{1..1}$ |

with $f_i \in \{0,1\}$, $i \in \{0,1\}^n$. If f is constant then $\exists y \in \{0,1\} \forall x \in \{0,1\}^n$: $f(x)=y$. If $f$ is balanced then $\lvert\{f_i: f_i = 0\}\rvert = \lvert \{f_i: f_i =1\}\rvert$.
<u>Step 1.</u> The map table of the corresponding injective function F is:

| $x \in \{0,1\}^{n+1}$ | $F(x)$ |
|---|---|
| 0..00 | 0..0 $f_{0..0}$ |
| ... | ... |
| 1..10 | 1..1$f_{1..1}$ |
| 0..01 | 0..0¬$f_{0..0}$ |
| ... | ... |
| 1..11 | 1..1¬$f_{1..1}$ |

<u>Step 2.</u> Let's now encode $F$ into $U_F$ map table:

| $\lvert x \rangle$ | $U_F \lvert x \rangle$ |
|---|---|
| $\lvert 0..00 \rangle$ | $\lvert 0..0\ f_{0..0} \rangle$ |
| ... | ... |
| $\lvert 1..10 \rangle$ | $\lvert 1..1\ f_{1..1} \rangle$ |

Table continued

| $|x\rangle$ | $U_F|x\rangle$ |
|---|---|
| $|0..01\rangle$ | $|0..0\ \neg f_{0..0}\rangle$ |
| ... | ... |
| $|1..11\rangle$ | $|1..1\ \neg f_{1..1}\rangle$ |

<u>Step 3.</u> The matrix corresponding to $U_F$ can be written as a block matrix with the following general form:

| $U_F$ | $|0..0\rangle$ | $|0..1\rangle$ | ... | $|1..1\rangle$ |
|---|---|---|---|---|
| $|0..0\rangle$ | $M_{0..0}$ | 0 | 0 | 0 |
| $|0..1\rangle$ | 0 | $M_{0..1}$ | 0 | 0 |
| ... | ... | ... | ... | ... |
| $|1..1\rangle$ | 0 | 0 | 0 | $M_{1..1}$ |

where $M_i = I$ if $f_i = 0$ and $M_i = C$ if $f_i = 1$, $i \in \{0,1\}^n$.

This matrix leaves the first n vectors unchanged and applies operator $M_i \in \{I, C\}$ to the last vector.

If all $M_i$ coincide with $I$ or $C$, the matrix encodes a constant function and it can be written as $^nI \otimes I$ or $^nI \otimes C$. *In this case no entanglement is generated.* Otherwise, if the condition $|\{M_i: M_i = I\}| = |\{M_i: M_i = C\}|$ is fulfilled, then $f$ is balanced and the operator *creates correlation* among vectors.

*4.2.2. Quantum block*

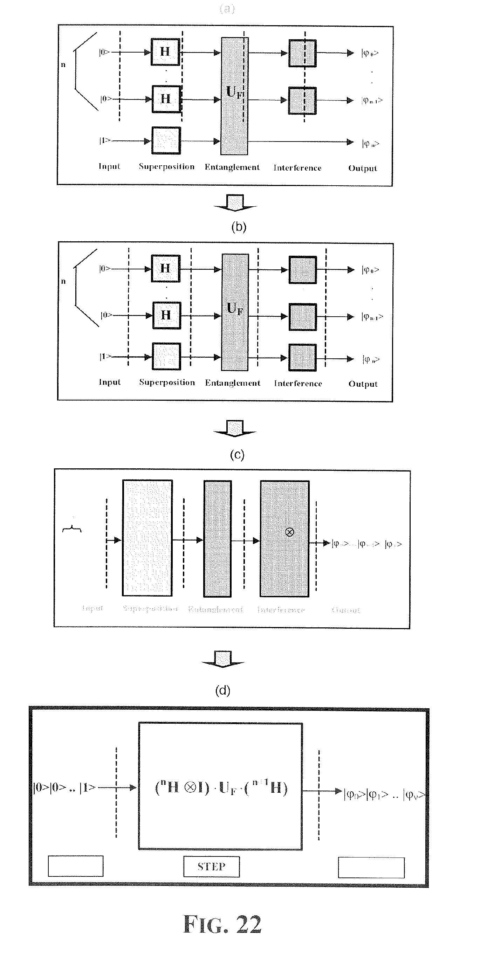

Matrix $U_F$, the output of the encoder, is now embedded into the quantum gate of Deutsch-Jozsa's algorithm. As we did for Deutsch's algorithm, we describe this gate using a quantum circuit Figure 22a.

The previous circuit is compiled into the one presented on the Figure 22b.

Let's consider operator $U_F$ in the case of constant and balanced functions. The structure of this operator strongly influences the structure of the whole gate. We shall analyze this structure in the case $f$ is 1 everywhere, $f$ is 0 everywhere and in the general case with n=2. Finally, we propose the general form for our gate with $n>0$.

*A. Constant function with value 1*

If $f$ is constant and its value is 1, matrix operator $U_F$ can be written as $^nI \otimes C$. This means that $U_F$ can be decomposed into $n+1$ smaller operators acting concurrently on the $n+1$ vectors of dimension 2 in the input tensor product.

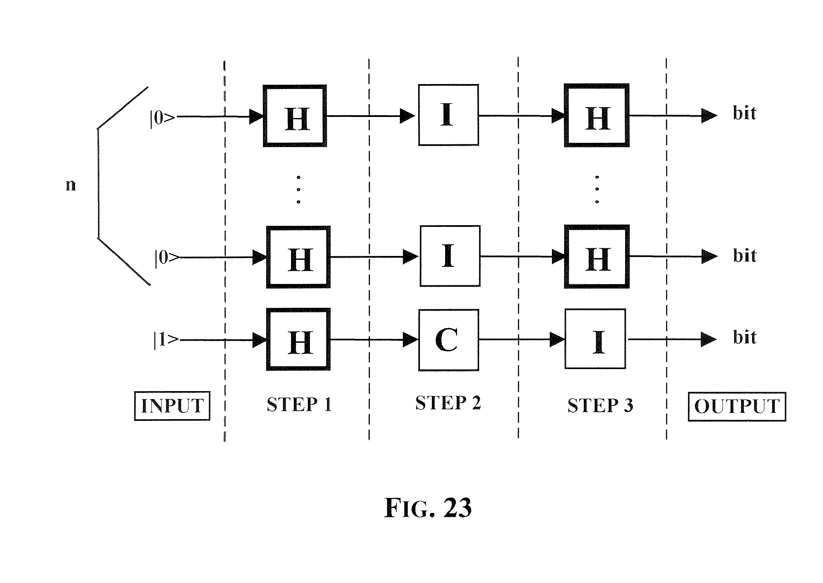

The resulting circuit representation according to Figure 22c is reported in Figure 23.

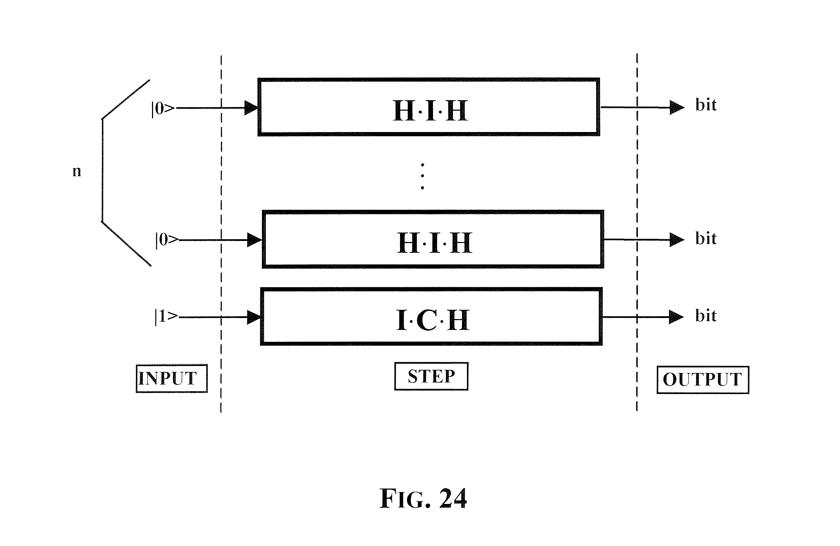

By combining the sub-gates acting on every vector of dimension 2 in input, the circuit in Figure 24 is obtained.

Let's observe that every vector in input evolves independently from other vectors. This is because operator $U_F$ doesn't create any correlation. So, the evolution of every input vector can be analyzed separately.

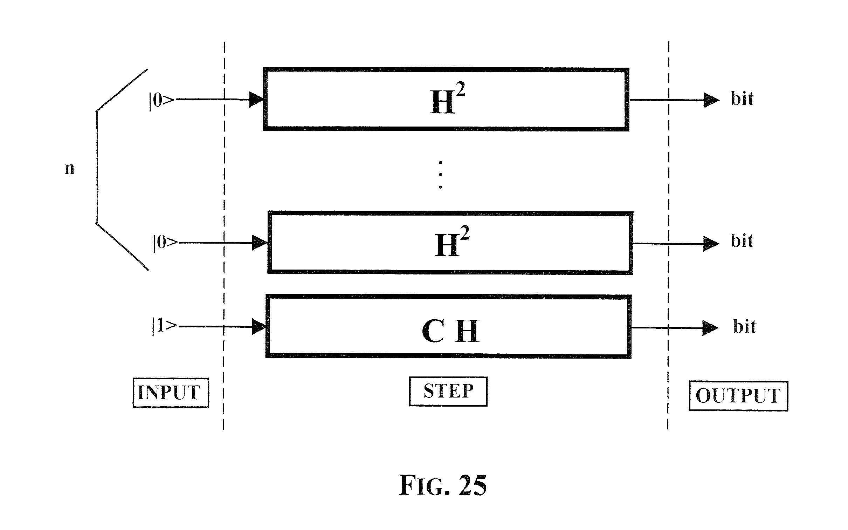

This circuit can be written in a simpler way as shown in Figure 25, observing that $M \cdot I = M$.

We can easily show that:

$$H^2 = I$$

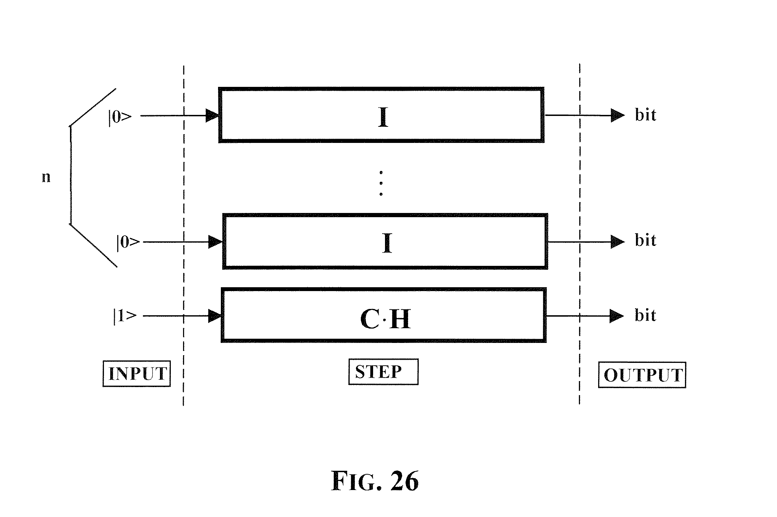

Therefore the circuit is rewritten in this way as shown in Figure 26.

Let's consider now the effect of the operators acting on every vector:

$$I|0\rangle = |C\rangle 0 \cdot \quad H|1\rangle \quad -\frac{|0\rangle - |1\rangle}{\sqrt{2}}$$

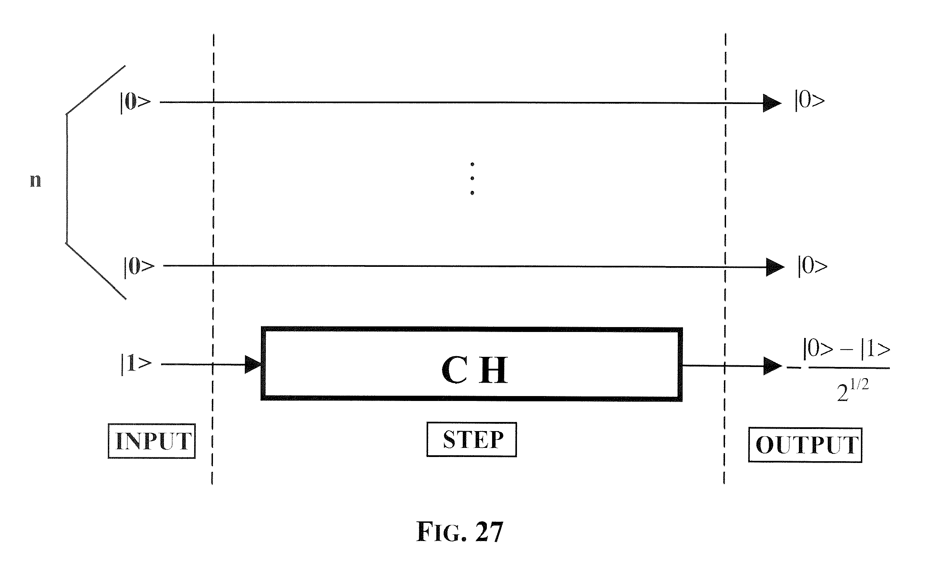

Using these results, the circuit shown in Figure 27 is obtained as the particular case of the structure shown in Figure 22d.

It is easy to see that, if $f$ is constant with value 1, the first $n$ vectors are preserved.

*B. Constant function with value 0*

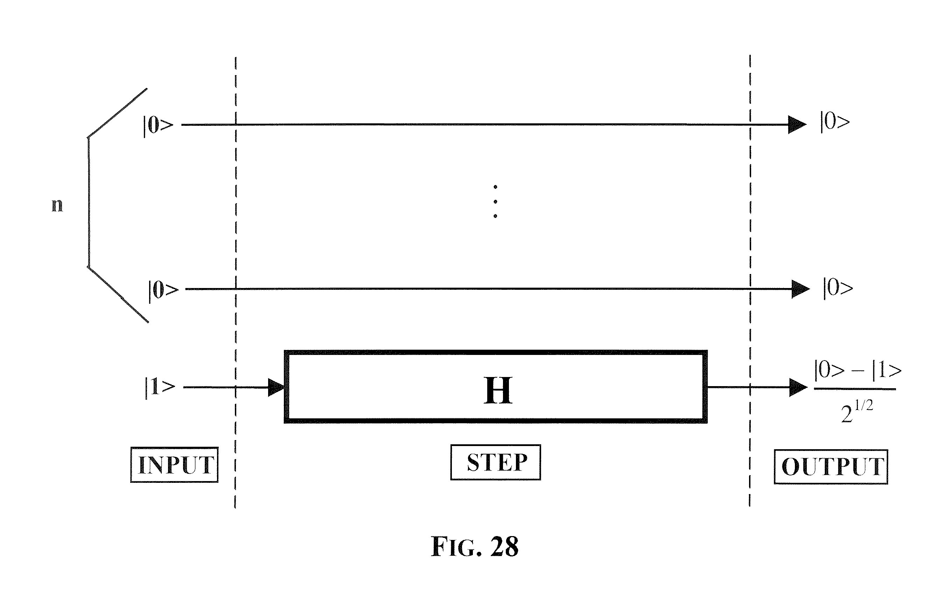

A similar analysis can be repeated for a constant function with value 0. In this situation $U_F$ can be written as $^nI \otimes H$ and the fmal circuit is shown on the Figure 28.

Also in this case, the first n input vectors are preserved. So, their output values after the quantum gate has acted are still |0>.

*C. General case (n=2)*

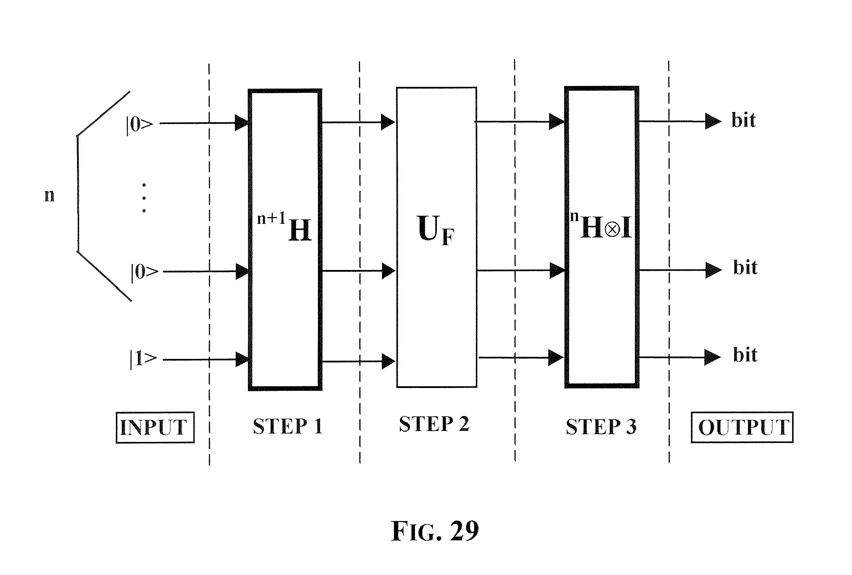

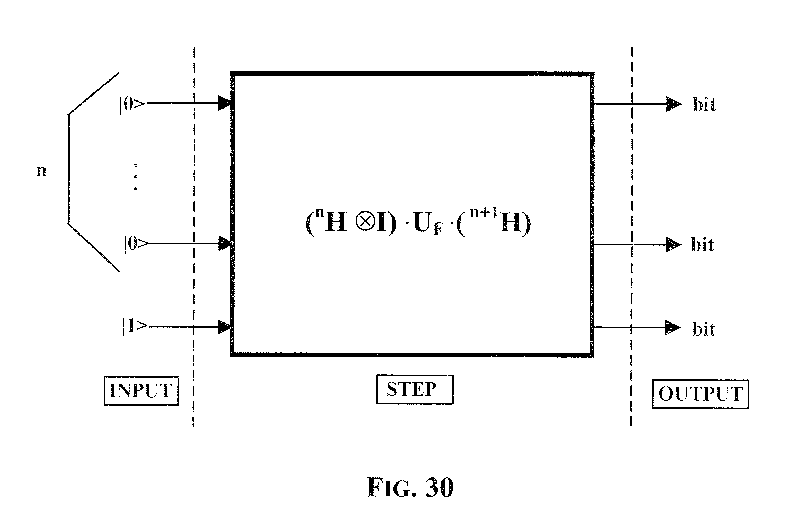

The gate implementing Deutsch-Jozsa's algorithm in the general case is shown in the Figures 29 and 30.

If n=2, $U_F$ has the following form:

| $U_F$ | \|00> | \|01> | \|10> | \|11> |
|-------|-------|-------|-------|-------|
| \|00> | $M_{00}$ | 0 | 0 | 0 |
| \|01> | 0 | $M_{01}$ | 0 | 0 |
| \|10> | 0 | 0 | $M_{10}$ | 0 |
| \|11> | 0 | 0 | 0 | $M_{11}$ |

where $M_i \in \{I, C\}$, $i=00,01,10,11$.

Let's calculate the quantum gate $G=(^2H \otimes I) \cdot U_F \cdot (^{2+1}H)$ in this case:

| $^3H$ | \|00> | \|01> | \|10> | \|11> |
|-------|-------|-------|-------|-------|
| \|00> | $H/2$ | $H/2$ | $H/2$ | $H/2$ |
| \|01> | $H/2$ | $-H/2$ | $H/2$ | $-H/2$ |
| \|10> | $H/2$ | $H/2$ | $-H/2$ | $-H/2$ |
| \|11> | $H/2$ | $-H/2$ | $-H/2$ | $H/2$ |

| $2H \otimes I$ | \|00> | \|01> | \|10> | \|11> |
|---|---|---|---|---|
| \|00> | $I/2$ | $I/2$ | $I/2$ | $I/2$ |
| \|01> | $I/2$ | $-I/2$ | $I/2$ | $-I/2$ |
| \|10> | $I/2$ | $I/2$ | $-I/2$ | $-I/2$ |
| \|11> | $I/2$ | $-I/2$ | $-I/2$ | $I/2$ |

| $U_F \cdot 3H$ | \|00> | \|01> | \|10> | \|11> |
|---|---|---|---|---|
| \|00> | $M_{00}H/2$ | $M_{00}H/2$ | $M_{00}H/2$ | $M_{00}H/2$ |
| \|01> | $M_{01}H/2$ | $-M_{01}H/2$ | $M_{01}H/2$ | $-M_{01}H/2$ |
| \|10> | $M_{10}H/2$ | $M_{10}H/2$ | $-M_{10}H/2 -$ | $M_{10}H/2$ |
| \|11> | $M_{11}H/2$ | $-M_{11}H/2 -$ | $M_{11}H/2$ | $M_{11}H/2$ |

| G | \|00> | \|01> | \|10> | \|11> |
|---|---|---|---|---|
| \|00> | $(M_{00}+M_{01}+M_{10}+M_{11})H/4$ | $(M_{00}-M_{01}+M_{10}-M_{11})H/4$ | $(M_{00}+M_{01}-M_{10}-M_{11})H/4$ | $(M_{00}-M_{01}-M_{10}+M_{11})H/4$ |
| \|01> | $(M_{00}-M_{01}+M_{10}-M_{11})H/4$ | $(M_{00}+M_{01}+M_{10}+M_{11})H/4$ | $(M_{00}-M_{01}-M_{10}+M_{11})H/4$ | $(M_{00}+M_{01}-M_{10}-M_{11})H/4$ |
| \|10> | $(M_{00}+M_{01}-M_{10}-M_{11})H/4$ | $(M_{00}-M_{01}-M_{10}+M_{11})H/4$ | $(M_{00}+M_{01}+M_{10}+M_{11})H/4$ | $(M_{00}-M_{01}+M_{10}-M_{11})H/4$ |
| \|11> | $(M_{00}-M_{01}-M_{10}+M_{11})H/4$ | $(M_{00}+M_{01}-M_{10}-M_{11})H/4$ | $(M_{00}-M_{01}+M_{10}-M_{11})H/4$ | $(M_{00}+M_{01}+M_{10}+M_{11})H/4$ |

Now, consider the application of G to vector \|001>:

$$G|0\rangle = \frac{1}{4}|0\rangle \otimes (M_0 + M_0 + M_1 + M_0)|0\rangle + \frac{1}{4}|0\rangle \otimes (M_0 - M_1 + M_1 -)H|1\rangle +$$

$$+ \frac{1}{4}|10\rangle \otimes (M_0 + M_0 - M_1 - M)|1\rangle + \frac{1}{4}|10\rangle \otimes (M_0 - M_1 + M_0 M_1)H|1\rangle$$

Consider the operator $(M_{00}+M_{01}+M_{10}+M_{11})H$ under the hypotheses of balanced functions $M_i \in \{I, C\}$ and $|\{M_i: M_i = I\}| = |\{M_i: M_i = C\}|$. Then:

| $M_{00}+M_{01}+M_{10}+M_{11}$ | \|0> | \|1> |
|---|---|---|
| \|0> | 2 | 2 |
| \|1> | 2 | 2 |

| $(M_{oo}+M_{oi}+M_{io}+M_m)H/4$ | \|0> | \|1> |
|---|---|---|
| \|0> | $1/2^{1/2}$ | 0 |
| \|1> | $1/2^{1/2}$ | 0 |

Thus:

$$\frac{1}{4}(M_0 + M_0 + M_0 + M_1)H|1\rangle = 0$$

This means that the probability amplitude of vector |001> of being mapped into a vector |000> or |001> is null.
Consider now the operators:

$$(M_{00}+M_{01}+M_{10}+M_{11})H$$

$$(M_{00}-M_{01}+M_{10}-M_{11})H$$

$$(M_{00}+M_{01}-M_{10}-M_{11})H$$

$$(M_{00}-M_{01}-M_{10}+M_{11})H$$

under the hypotheses $\forall i: M_i=I$, which holds for constant functions with values 0:

| $M_{00}+M_{01}+M_{10}+M_{11}$ | |0> | |1> |
|---|---|---|
| |0> | 4 | 0 |
| |1> | 0 | 4 |

| $(M_{00}+M_{01}+M_{10}+M_{11})H/4$ | |0> | |1> |
|---|---|---|
| |0> | $1/2^{1/2}$ | $1/2^{1/2}$ |
| |1> | $1/2^{1/2}$ | $-1/2^{1/2}$ |

| $M_{00}-M_{01}+M_{10}-M_{11}$ | |0> | |1> |
|---|---|---|
| |0> | 0 | 0 |
| |1> | 0 | 0 |

| $M_{00}+M_{01}-M_{10}-M_{11}$ | |0> | |1> |
|---|---|---|
| |0> | 0 | 0 |
| |1> | 0 | 0 |

| $M_{00}-M_{01}-M_{10}+M_{11}$ | |0> | |1> |
|---|---|---|
| |0> | 0 | 0 |
| |1> | 0 | 0 |

Using these calculations, we obtain the following results:

$$\frac{1}{4}(M_{00}-M_{01}+M_{10}-M_{11})H|1\rangle = 0$$

$$\frac{1}{4}\left(M_0 +_b M_{0\ 1}\ M_{1\ 0}\ M_{\overline{1}}\right)H\left|1\right\rangle = 0$$

$$\frac{1}{4}\left(M_0 \ _{\overline{0}} M_{0\ 1}\ M_{1\ 0}\ M + \right)H\left|1\right\rangle = 0$$

This means that the probability amplitude of vector |001> of being mapped into a superposition of vectors |010>, |011>, |100>, |101>, |110>, 111> is null. The only possible output is a superposition of vectors |000> and |001>, as we showed before using circuits. A similar analysis can be developed under the hypotheses $\forall i: M_i=C$.

It is useful to outline the evolution of the probability amplitudes of every basis vector while operator $^3H$, $U_F$ and $^2H{\oplus}I$ are applied in sequence, for instance when $f$ has constant value 1.

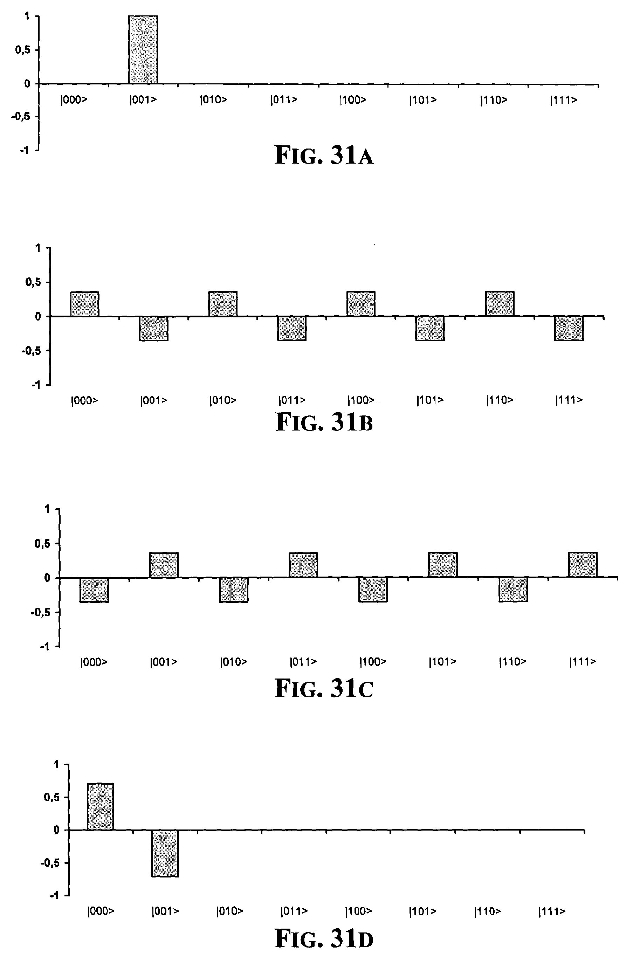

This is done in Figures 31 a to 31 d.

Operator $^3H$ in Figure 31b puts the initial canonical basis vector |001> into a superposition of all basis vectors with the same (real) coefficients in modulus, but with positive sign if the last vector is |0>, negative otherwise.

Operator $U_F$ in Figure 31c in this case does not create correlation: it flips the third vector independently from the values of the first two vectors.

Finally, $^2H{\otimes}I$ in Figure 31d produces interference: for every basis vector $|\underline{x}_0\underline{x}_1\underline{y}_0>$ it calculates its output probability amplitude a $\underline{x}_0\underline{x}_1\underline{y}_0$ as the summation of the probability amplitudes of all basis vectors in the form $|x_0x_1\underline{y}_0>$ in the input superposition, all with the same sign if $|x_0x_1>=|00>$, otherwise changing the sign of exactly the middle of the probability amplitudes.

Since, in this case, the vectors in the form $|x_0x_10>$ have the same (negative real) probability amplitude and vectors in the form $|x_0x_11>$ have the same (positive real) probability amplitude, when $|\underline{x}_0\underline{x}_1>=|00>$, probability amplitudes interfere positively. Otherwise the terms in the summation interfere destructively annihilating the result.

*D. General case (n>0)*

In the general case $n>0$, $U_F$ has the following form:

| $U_F$ | |0..0> | |0..1> | … | |1..1> |
|---|---|---|---|---|
| |0..0> | $M_{0..0}$ | 0 | 0 | 0 |

| $U_F$ | |0..0> | |0..1> | … | |1..1> |
|---|---|---|---|---|
| |0..1> | 0 | $M_{0..1}$ | 0 | 0 |
| … | … | … | … | … |
| |1..1> | 0 | 0 | 0 | $M_{1..1}$ |

where $M_i{\in}\{I, C\}$, $i{\in}\{0,1\}^n$.

Let's calculate the quantum gate $G=(^nH{\otimes}I){\cdot}U_F{\cdot}(^{n+1}H)$:

| $|^{n+1}H$ | $|0..0\rangle$ | $... \ |j\rangle$ | $... \ |1..1\rangle$ |
|---|---|---|---|
| $|0..0\rangle$ | $H/2^{n/2}$ | $... \ H/2^{n/2}$ | $... \ H/2^{n/2}$ |
| ... | ... | ... ... | ... ... |
| $|i\rangle$ | $H/2^{n/2}$ | $... \ (-1)^{i\cdot j}H/2^{n/2}$ | $... \ (-1)^{i\cdot(1..1)}H/2^{n/2}$ |
| .... | ... | ... ... | ... ... |
| $|11\rangle$ | $H/2^{n/2}$ | $... \ (-1)^{(1..1)\cdot j}H/2^{n/2} \ ...$ | $... \ (-1)^{(1..1) \ ... \ \cdot(1..1)}H/2^{n/2}$ |

Here we employed binary string operator $\cdot$ , which represents the <u>parity</u> of the AND bit per bit between two strings.

*Priority of bit per bit AND.* Given two binary strings *x* and *y* of length n, we define:

$$x \cdot y = x_1 \cdot y_1 \oplus x_2 \cdot y_2 \oplus .. \oplus x_n \cdot y_n$$

The symbol used between two bits is interpreted as the logical AND operator.

We shall prove that matrix $^{n+1}H$ really has the described form. We show that:

$$\left[ ^{n}H \right]_{ij} = \frac{(-1)^{i\cdot j}}{2^{n/2}}$$

The proof is by induction:

*n*=1:

$$\left[ ^{1}H \right]_{0,0} = \frac{1}{2^{1/2}}\frac{(-1)^{(0)\cdot(0)}}{2^{1/2}} \qquad \left[ ^{1}H \right]_{0,1} = \frac{1}{2^{1/2}}\frac{(-1)^{(0)\cdot(1)}}{2^{1/2}}$$

$$\left[ ^{1}H \right]_{1,0} = \frac{1}{2^{1/2}}\frac{(-1)^{(1)\cdot(0)}}{2^{1/2}} \qquad \left[ ^{1}H \right]_{1,1} = \frac{-1}{2^{1/2}}\frac{(-1)^{(1)\cdot(1)}}{2^{1/2}}$$

*n*>1:

$$\left[ ^{n}H \right]_{i0,j0} = \frac{1}{2^{1/2}}\left[ ^{n-1}H \right]_{i,j} = \frac{1}{2^{1/2}}\frac{(-1)^{i\cdot j}}{2^{(n-1)/2}} = \frac{(-1)^{(i0)\cdot(j0)}}{2^{n/2}}$$

$$\left[ ^{n}H \right]_{i0,j1} = \frac{1}{2^{1/2}}\left[ ^{n-1}H \right]_{i,j} = \frac{1}{2^{1/2}}\frac{(-1)^{i\cdot j}}{2^{(n-1)/2}} = \frac{(-1)^{(i0)\cdot(j1)}}{2^{n/2}}$$

$$\left[ ^{n}H \right]_{i1,j0} = \frac{1}{2^{1/2}}\left[ ^{n-1}H \right]_{i,j} = \frac{1}{2^{1/2}}\frac{(-1)^{i\cdot j}}{2^{(n-1)/2}} = \frac{(-1)^{(i1)\cdot(j0)}}{2^{n/2}}$$

$$\left[ ^{n}H \right]_{i1,j1} = -\frac{1}{2^{1/2}}\left[ ^{n-1}H \right]_{i,j} = \frac{1}{2^{1/2}}\frac{(-1)^{i\cdot j}}{2^{(n-1)/2}} = \frac{(-1)^{(i1)\cdot(j1)}}{2^{n/2}}$$

Matrix $^{n+1}H$ is obtained from $^{n}H$ by tensor product. Similarly, matrix $^{n}H \otimes I$ is calculated:

| $^{n}H\otimes I$ | $|0..0\rangle$ | $... \ |j\rangle$ | $... \ |1..1\rangle$ |
|---|---|---|---|
| $|0..0\rangle$ | $I/2^{n/2}$ | $... \ I/2^{n/2}$ | $... \ I/2^{n/2}$ |
| ... | ... | ... ... | ... ... |

Table continued

| $^nH\otimes I$ | $|0..0>$ | ... $|j>$ | ... $|1..1>$ |
|---|---|---|---|
| $|i>$ | $I/2^{n/2}$ | ... $(-1)^{i\cdot j}I/2^{n/2}$ | ... $(-1)^{i\cdot(1..1)}I/2^{n/2}$ |
| ... | ... | ... ... | ... ... |
| $|11>$ | $I/2^{n/2}$ | ... $(-1)^{(1..1)j}I/2^{n/2}$ | ... $(-1)^{(1..1)\cdot(1..1)}I/2^{n/2}$ |

| $U_F \cdot {}^{n+1}H$ | $10..0>$ | ... $|j>$ | ... $|1..1>$ |
|---|---|---|---|
| $|0..0>$ | $M_{0..0}H/2^{n/2}$ | ...$M_{0..0}H/2^{n/2}$ | ... $M_{0..0}H/2^{n/2}$ |
| ... | ... | ... ... | ... ... |
| $|i>$ | $M_iH/2^{n/2}$ | ... $(-1)^{i\cdot j}M_iH/2^{n/2}$ | ... $(-1)^{i\cdot(1..1)}M_iH/2^{n/2}$ |
| ... | ... | ... ... | ... ... |
| $|1..1>$ | $M_{1..1}H/2^{n/2}$ | ... $(-1)^{(1..1)\cdot j}M_{1..1}H/2^{n/2}$ | ... $(-1)^{(1..1)\cdot(1..1)}M_{1..1}H/2^{n/2}$ |

We calculated only the first column of gate $G$ since this operator is applied exclusively to input vector $|0..01>$ and so only the first column is involved.

| G | $|0..0>$ | ... |
|---|---|---|
| $|0..0>$ | $(M_{0..0}+..+M_i+..+M_{1..1})H/2^n$ | ... |
| ... | ... | ... |
| $|i>$ | $(\Sigma_{j\in\{0,1\}}n\,(-1)^{i\cdot j}M_j)H/2^n$ | ... |
| ... | ... | ... |
| $|1..1>$ | $(\Sigma_{j\in\{0,1\}}n(-1)^{(1..1)\cdot j}M_j)H/2^n$ | ... |

Now consider the case of $f$ constant. We saw that this means that all matrices $M_i$ are identical.
This implies:

$$\frac{1}{2^n}\left(\sum_j(-1)^{i\cdot j}M_j\right)H = 0$$

since in this summation the number of +1 equals the number of -1. Therefore, the input vector $|0..01>$ is mapped into a superposition of vectors $|0..00>$ and $|0..01>$ as we showed using circuits.
If $f$ is balanced, the number of $M_i = I$ equals the number of $M_i = C$. This implies:

$$\frac{1}{2^n}\left(\sum_j M_j\right) = H\frac{1}{2^n}\left(2^{n-1}I + 2^{n-1}C\right)\frac{1}{2}H\begin{bmatrix}1\\1\end{bmatrix} = \frac{1}{2}H\frac{1}{\sqrt{2}}\begin{bmatrix}1&1\\1&-1\end{bmatrix}\frac{1}{\sqrt{2}}\begin{bmatrix}1\\1\end{bmatrix} = \frac{1}{\sqrt{2}}\begin{bmatrix}0\\0\end{bmatrix}$$

And therefore:

$$\frac{1}{2^n}\left(\sum_j M_j\right)H|1\rangle = 0$$

This means that input vector $|0..01>$, in the case of balanced functions, can't be mapped by the quantum gate into a superposition containing vectors $|0..00>$ or $|0..01>$.
The quantum block terminates with measurement. Considering the results showed till now, we can determine the possible outputs of measurement and their probabilities:

| Superposition of Basis Vectors | Result of Measurement | |
|---|---|---|
| Before Measurement | Vector | Probability |
| Constant functions: $G\lvert 0..01\rangle = \lvert 0..0\rangle \otimes (\alpha_0\lvert 0\rangle + \alpha_1\lvert 1\rangle)$ | $\lvert 0..00\rangle$ $\lvert 0..01\rangle$ | $\lVert \alpha_0\rVert^2$ $\lVert \alpha_1\rVert^2$ |
| Balanced functions: $G\lvert 0..01\rangle = \Sigma_{i\in\{0,1\}^v - \{0..00,0..01\}} \alpha_i\lvert i\rangle$ | $\forall i\in \{0,1\}^n-\{0..00, 0..01\}:\lvert i\rangle$ | $\lVert \alpha_i\rVert^2$ |

The set *A-B* is given by all elements of A, unless those elements belonging *to B* too. This set is sometimes denoted as *A/B.* The quantum block is repeated only one time in Deutsch-Jozsa's algorithm. So, the final collection is made only by one vector.

*4.2.3. Decoder*

As in Deutsch's algorithm, when the final basis vector has been measured, we must interpret it in order to decide if *f* is constant or balanced.

If the resulting vector is $\lvert 0..0\rangle$ we know that the function was constant, otherwise we decide that it is balanced. In fact gate G produces a vector such that, when it is measured, only basis vectors $\lvert 0..00\rangle$ and $\lvert 0..01\rangle$ have a non-null probability amplitude exclusively in the case *f* is constant. Besides, if *f* is balanced, these two vectors have null coefficients in the linear combination of basis vectors generated by G. In this way, the resulting vector is easily decoded in order to answer Deutsch-Jozsa's problem:

| Resulting Vector after Measurement | Answer |
|---|---|
| $\lvert 0..00\rangle$ | *f* is constant |
| $\lvert 0..01\rangle$ | *f* is constant |
| otherwise | *f* is balanced |

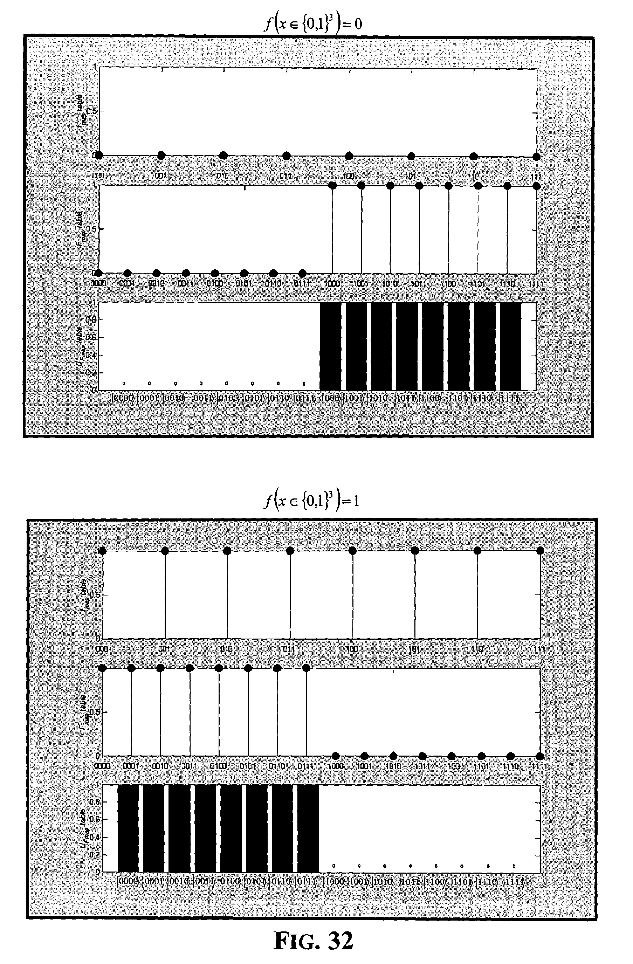

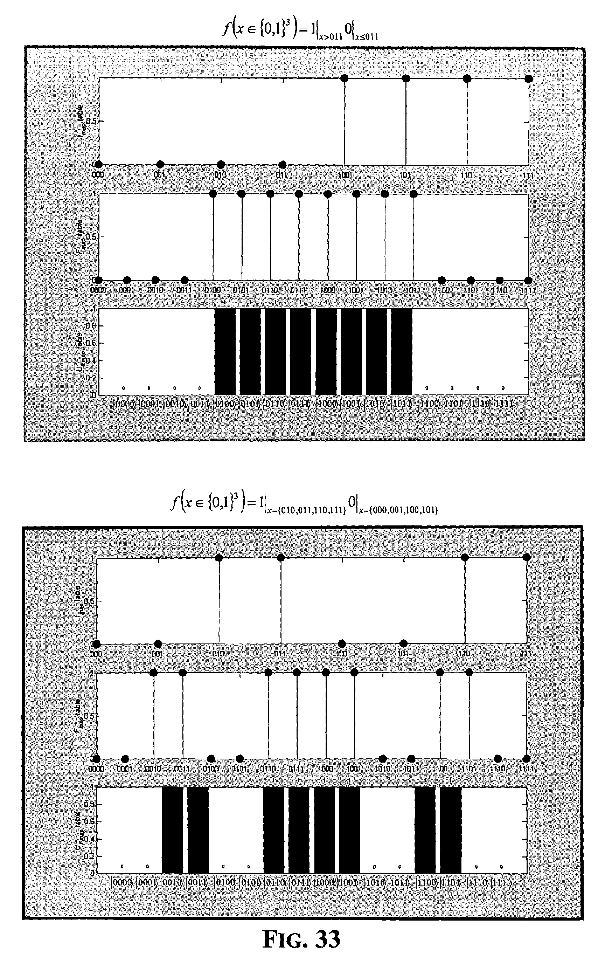

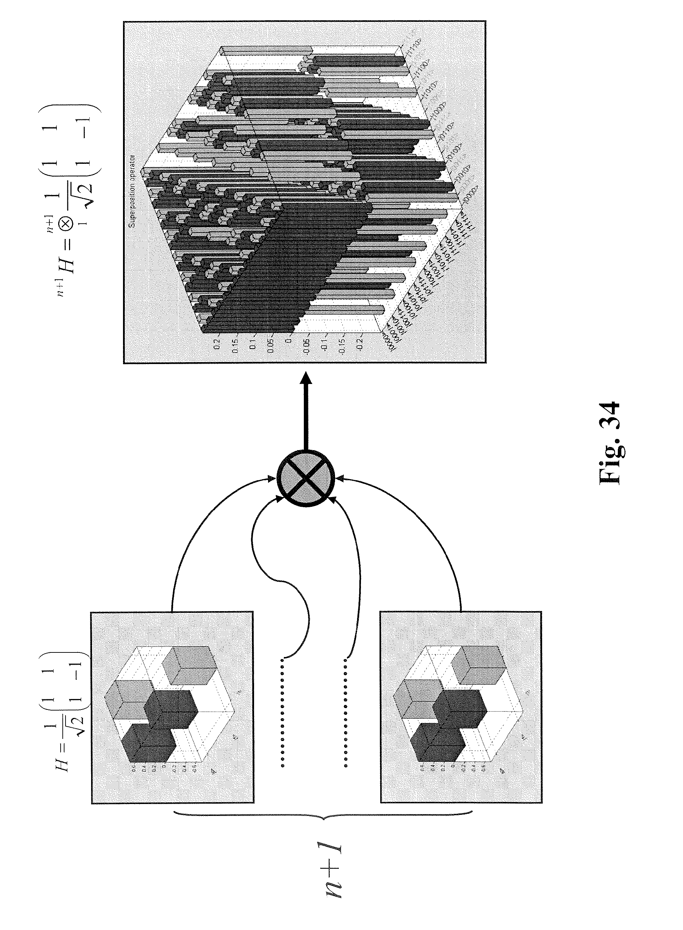

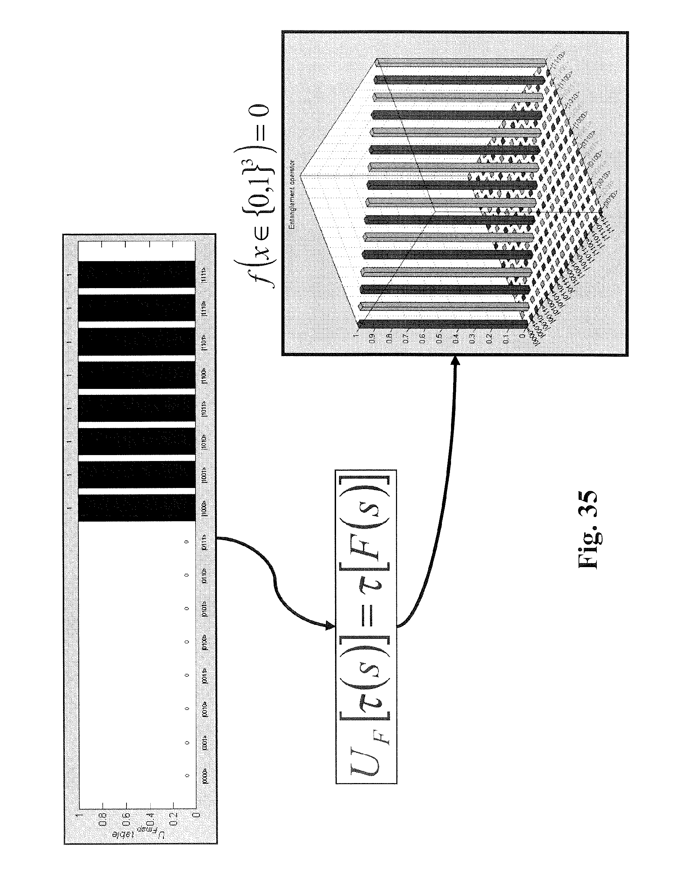

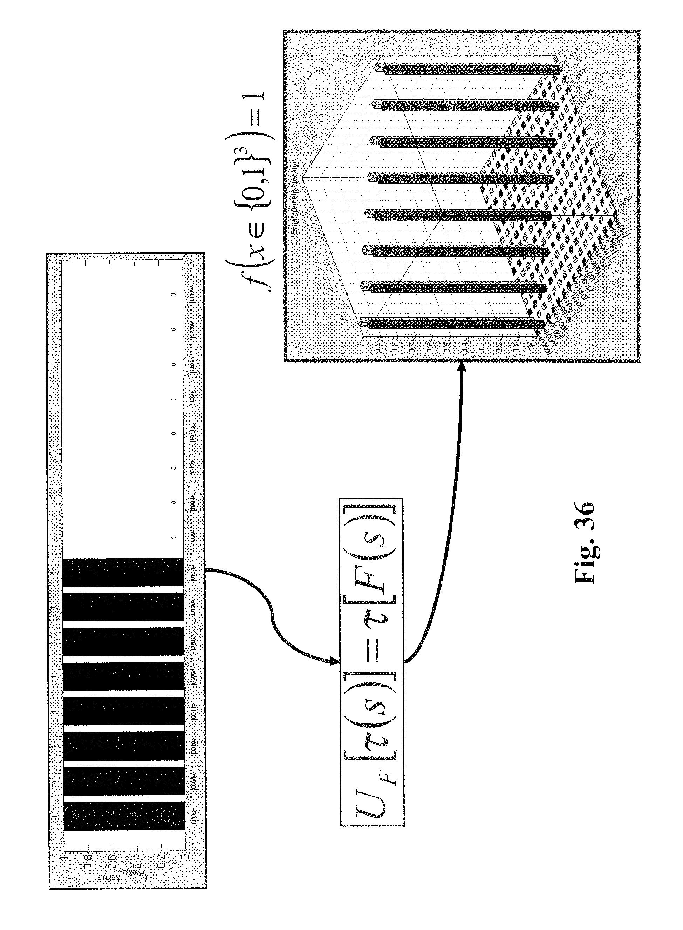

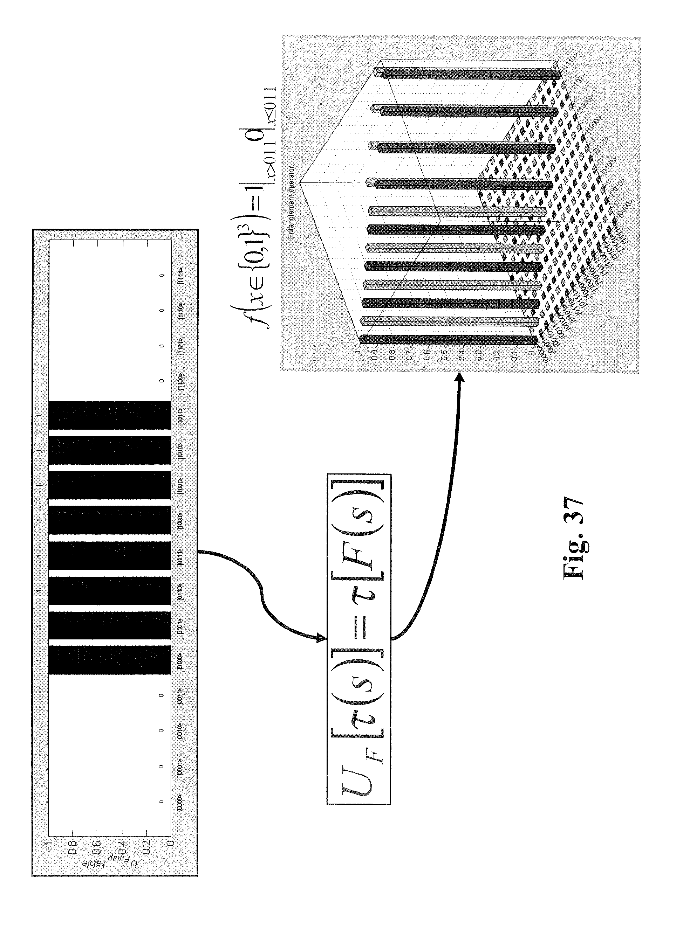

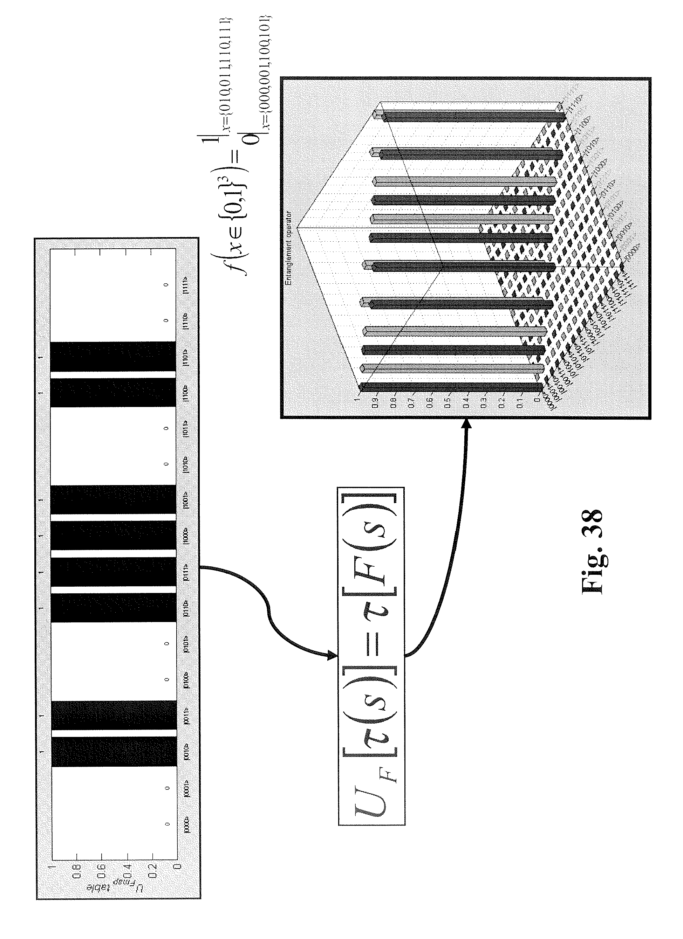

*4.2.4. Computer design process of Deutsch-Jozsa's quantum algorithm gate (D.-J. QAG) and simulation results.* Let us consider the design process of D.- J. QAG according to the steps represented in Figure 21. For step 0 *(Encoding),* case n = 3, examples of constant and balanced functions encoding in Figures 32 and 33, accordingly, are shown. For step 1 in Figure 21, the example of quantum operator preparation such as superposition operator in Figure 34 is shown. Figures 35-38 shows the step 1.2 from Figure 21 as the preparation of entanglement operators:

For *constant function*

$$- \text{case } f\left(\in \{0\ ,\}^3 1= 0\right) \text{ and } f\left(\in \{0\ ,\}^3 1= 1\right) \text{ in Figures 34 and 35;}$$

for *balanced function*

$$- \text{case } f\left(\in \{0\ \}^3_{\rangle} =1 \left\lvert_{x>0\ _1} 1\ 0\right\rvert_{\aleph\leq 1\ _1}\right) \text{ and } f\left(\in \{0,1\}^3 = \begin{Bmatrix} 1\ 0\ 1\oplus\ ,\{0\ 1\ 1\ ,1\ 1\ 0\ ,1\ 1\ 1\} \\ 0\ 0\ 0\oplus\ ,\{0\ 0\ 1\ ,1\ 0\ 0\ ,1\ 0\ 1\} \end{Bmatrix}\right),$$

accordingly.

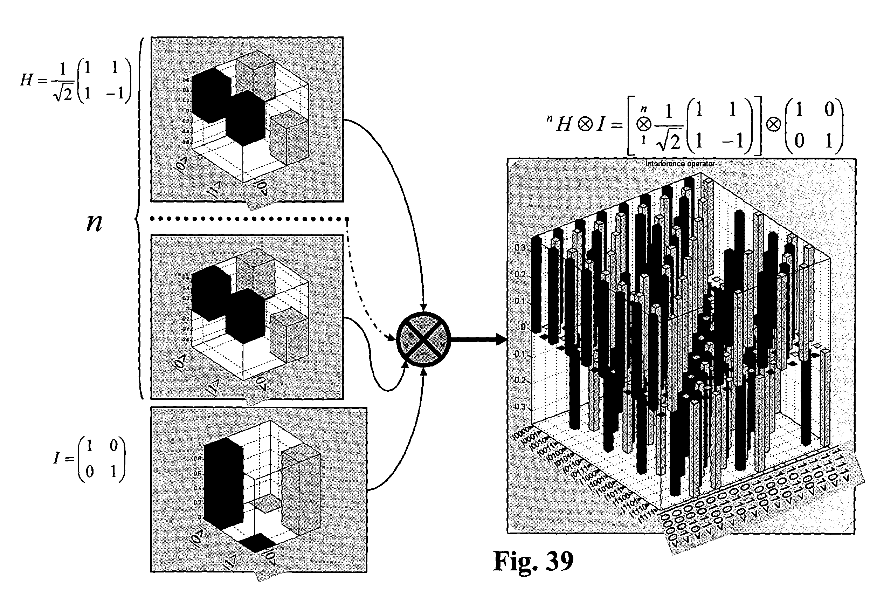

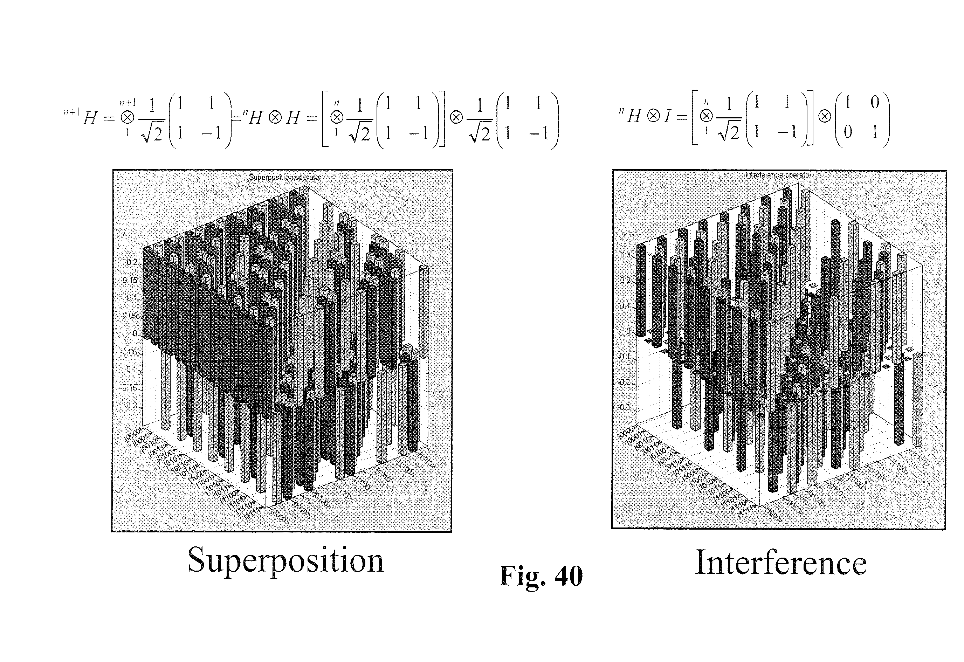

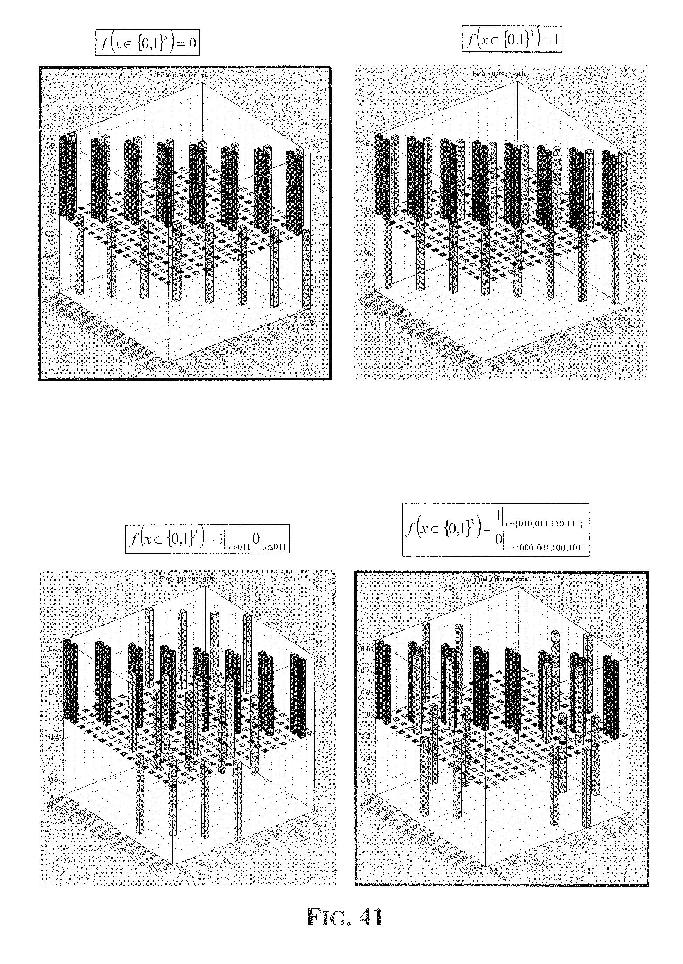

Step 1.3 in Figure 21 as the preparation of interference operator in Figure 39 is shown. Comparison between superposition and interference operators in Figure 40 is shown. The evolution of gate design process form Figure 21 is shown in Figure 41.

Step 1.4 from Figure 21 as quantum gate assembly in Figure 41 for design cases is shown.

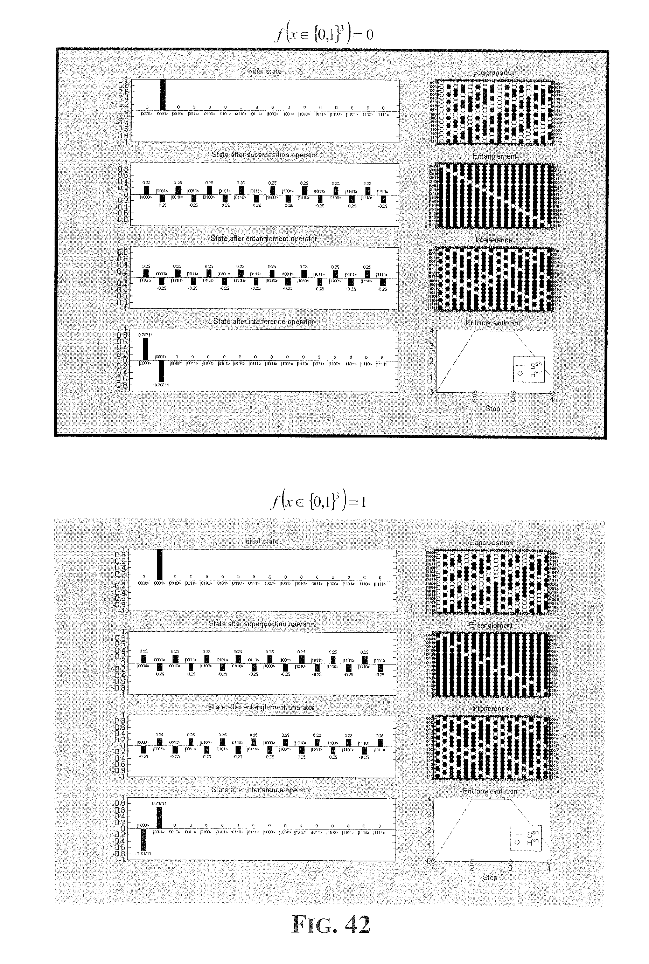

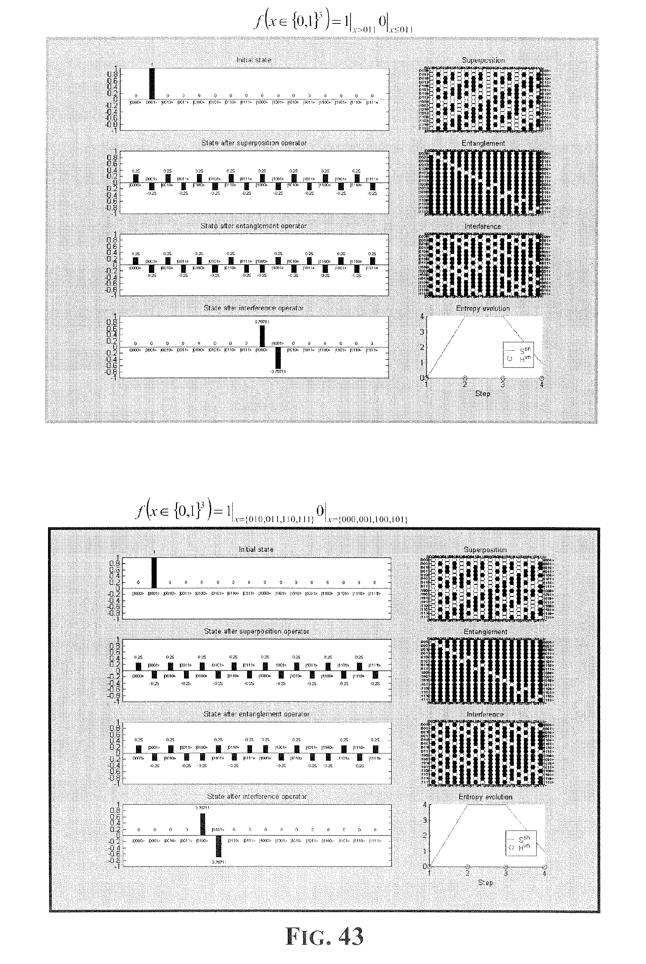

Figures 42 and 43 show the results of algorithm gate execution for constant and balanced functions accordingly (as the step 2 from Figure 21).

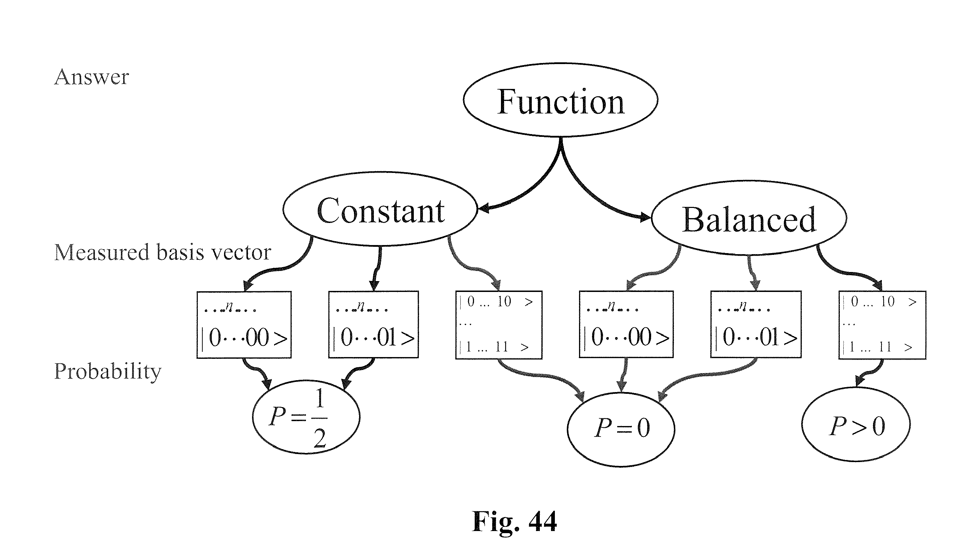

Result interpretation (as the step 2.4 from Figure 21) is shown in Figure 44.

In Deutsch-Jozsa's QA the mathematical and physical structures of the interference operator ($^nH \otimes I$) differ from its superposition operator($^{n+1}H$). The interference operator extract the qualitative information about the property (constant or balanced property of function *f*) with operator $^nH$, and separate this property qualitatively with operator *I*. Deutsch-Jozsa's QA is a decision-making algorithm. For the case of Deutsch-Jozsa's QA is needed only one's iteration without estimation quantitatively the qualitative property of function *f* and with error probability 0.5 of successful result. It is means that the Deutsch-Jozsa's QA is a robust QA. The main role in this decision-making QA plays the superposition and entanglement operators that organize *quantum massive parallel computation process* (by superposition operator) and *robust extraction of function property* (by entanglement operator).

**4.2.5**. *Analogue description ofDeutsch-Jozsa's $Q_A$-Operators and Gate*

A. Superposition

As reported in Figure 22, in Deutsch-Jozsa algorithm, the gate is prepared with first n qubits set to |0> and qubit *n+1* set to |1>. Since superposition block is constituted by $H \otimes H \otimes ... \otimes H = {}^nH$, the output vector Y can be represented in the following way:

$$Y = [y_1 y_2 \ldots\ldots y_i \ldots\ldots y_2{}^{n+1}]$$

where $y_i (-1)^{i+1}/2^{(n+1)/2}$.

It must be noted that this formula is very general and, due to the particular initial configuration of qubits in the present algorithm, it avoids the use of AND gates providing *directly* the output vector Y. The dimension n is taken into account by varying index *i* from 1 to $2^{n+1}$. As it will be seen in following sections, the same formula will be used for Grover's algorithm, too.

B. Entanglement

In Deutsch-Jozsa's algorithm the Entanglement matrix $U_F$ has the same diagonal structure independently from the number of qubits, in fact the 2x2 well known blocks *I* and *C* are always present on principal diagonal. This happens due to the fact that $f \{0,1\}^n \rightarrow \{0,1\}$, meaning that encoding function *f* is scalar and therefore the complete evaluation of $U_F$ can be avoided by using the input-output approach. So if we consider for example the following expression for *f* in a 2-qubits case (balanced function)

$$\begin{cases} f(0\ 1) = f(1\ 0) = 1 \\ f(e.)=0 \text{ s} \ else w h e r e \end{cases}$$

Of course in Deutsch-Jozsa's entanglement binary function *f* could assume more than twice value "1" but the upper example is taken for sake of simplicity. The output of entanglement $G = U_F \cdot Y$ can be directly calculated, as shown in the European patent application EP 1 380 991, by using $2^{n+1}=8$ XOR gates, suitably driven by the encoding function *f*. In fact, the general form of the entanglement output vector *G* can be the following:

$$G = [g_1 g_2 \ldots\ldots g_i \ldots\ldots g_2{}^{n+1}]$$

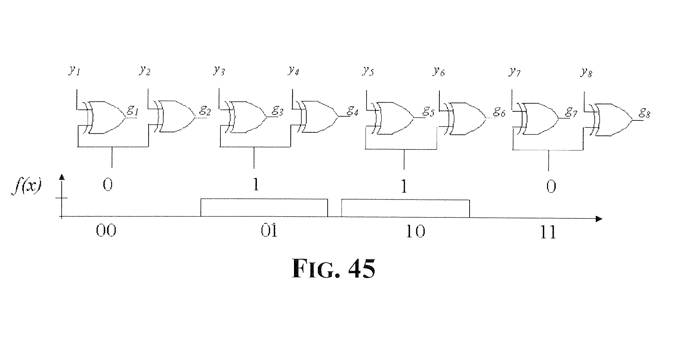

And, therefore, according to the scheme in Figure 45, $g_i = y_i \oplus f_{1+INT(i-1)/2}$ **where** $y_i$ is the general term of superposition transformed in a suitable binary value.

C. Interference

A quite more difficult task is to deal with interference. In fact, differently from Entanglement, Interference matrix $^{n+1}H$ is not a pseudo-diagonal matrix and therefore it is full of nonzero elements. Moreover, the presence of tensor products, whose number increases dramatically with the dimensions, constitutes a critical point at this step. In order to find a suitable input-output relation, it must be considered that the general term of $^{n+1}H$ can be written as

$$^n h_{ij} = \frac{(-1)^{\sum_{k=0}^{n-1} I\, N\left(\frac{i-1}{2^k}\right) N\, T\left(\frac{j-1}{2^k}\right)}}{2^{n/2}}$$

To this aim, being $g_i$ the generic term belonging to the input vector, the output vector $V = (^{n+1}H)G$ can be derived as follows:

$$v_i = \sum_{j=1}^{2^{n+1}} g_j \frac{(-1)^{\sum_{k=0}^{n-1} I\, N\left(\frac{i-1}{2^k}\right) N\, T\left(\frac{j-1}{2^k}\right)}}{2^{n/2}}$$

It must be noted that only sums and differences are necessary and therefore a possible hardware structure could be constituted by a certain number of OPAMPS in which their configuration could be set to "inverting" or "not inverting" in a suitable way. The value $1/2^{n/2}$ depends only by the number n of qubits and can be considered as the scaling value of the sum and decided by a suitable choice of feedback resistors.

*4.3. Analogue description of Shor QA-operators and Gate*

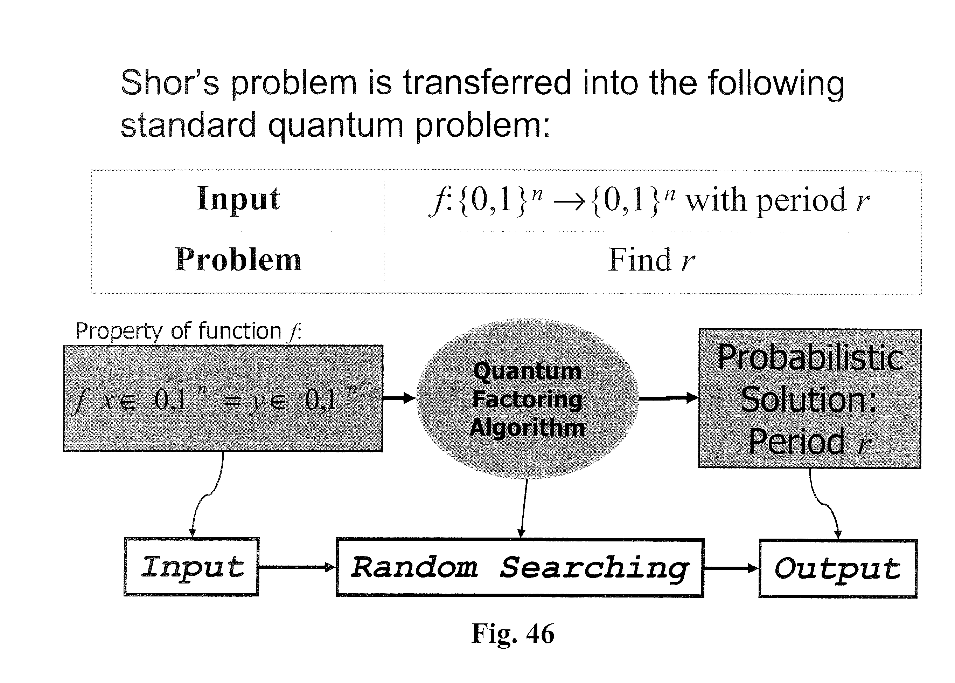

The Shor's quantum algorithm is well known in the art. For sake of simplicity it is summarized in Figure 46 and will not be described herein in detail.

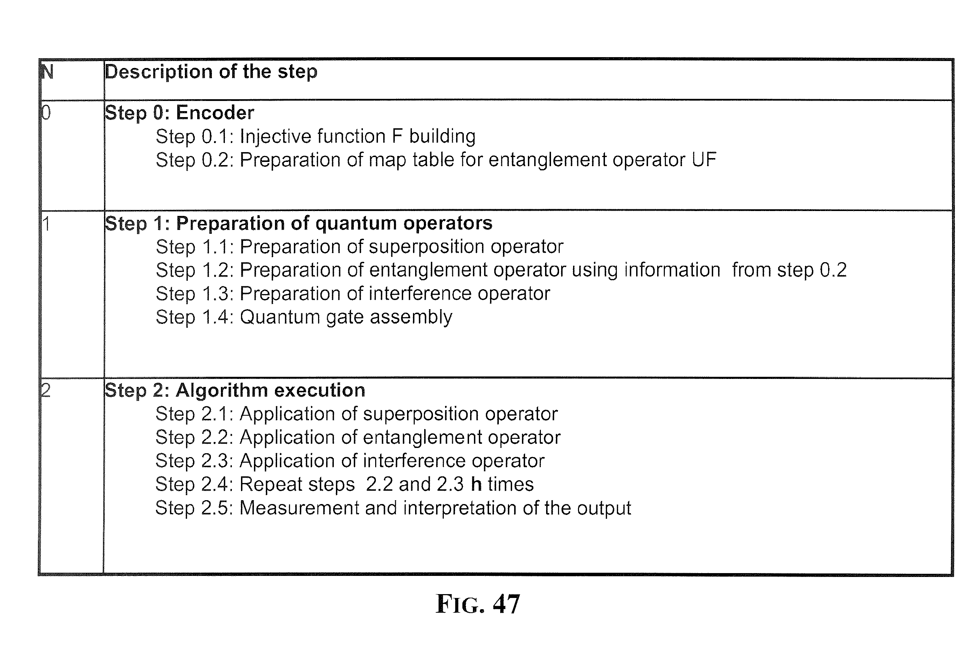

By applying the same reasoning carried out for the Deutsch-Jozsa's quantum algorithm it is possible to define the design steps according to this invention, illustrated in Figure 47.

A. SUPERPOSITION METHOD

As previously reported, in Deutsch-Jozsa's algorithm the gate is prepared with first $n$ qubits set to |0> and qubit $n$+1 set to |1>. Since superposition block is constituted by $H \oplus H \oplus ... \oplus H = ^nH$, the output vector Y can be represented in the following way:

$$Y = [y_1 y_2 \,......\, y_i ......\, y_2{}^{n+1}]$$

Where $y_i = (-1)^{i+1}/2^{(n+1)/2}$.

Different considerations have to be done for Shor's algorithm, summarized in Figure 46. According to the method of designing quantum gates of this invention, the process steps of Figure 47 must be carried out.

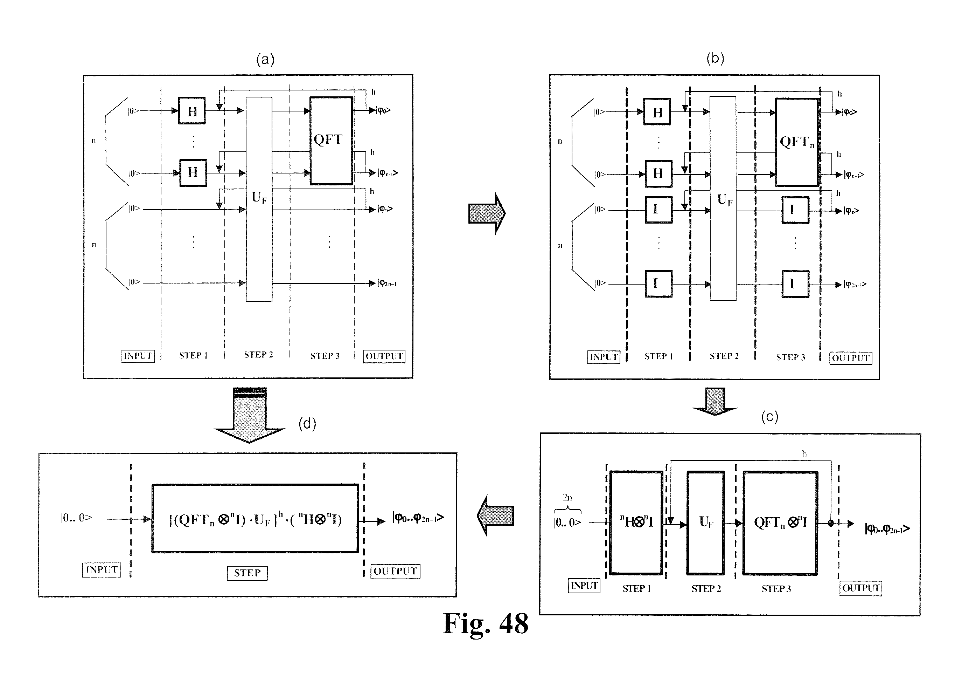

The scheme of Shor's algorithm is reported in Figure 48. In fact, even if all of $2n$ qubits are more easily set to |0>, in this case superposition block is $^nH \otimes ^nI$. This fact means that first n qubits have to be multiplied for $^nH$ and second ones for $^nI$. Regarding the first ones, it has still been shown how the operation $\mathbf{H}|0> \otimes \mathbf{H}|0> \otimes \mathbf{H}|0>$ can be performed neglecting the constant factor $1/2^{3/2}$ (n=3)

$$\begin{bmatrix} 1 \\ 1 \end{bmatrix} \otimes \begin{bmatrix} 1 \\ 1 \end{bmatrix} \otimes \begin{bmatrix} 1 \\ 1 \end{bmatrix} = \begin{bmatrix} 1 & 1 & 1 & 1 & 1 & 1 & 1 & 1 \end{bmatrix}^T$$

More in general, this vector can be indicated in the following way

$$X = [x_1 \ x_2 \ \dots\dots \ x_i \ \dots\dots \ x_{2^n}]$$

Where $x_i = \frac{1}{2}^{n/2}$.

Finally, $Y = X \otimes^n I |0..0\rangle$ that, for n=3, results

$$\frac{1}{2^{3/2}} \cdot \begin{bmatrix} 1 & 1 & 1 & 1 & 1 & 1 & 1 \end{bmatrix}^T \otimes I \begin{bmatrix} 0 & 0 & 0 & 0 & 0 & 0 & 0 \end{bmatrix}^T$$

It is now very simple to find a general form for output Y:

$$y_i = \begin{cases} \dfrac{1}{2^{n/2}} & i \neq 1 + 2^n(j+1) \\ 0 & \text{elsewhere} \end{cases}$$

with j= 1..$2^n$, i=1..$2^{2n}$ .

In hardware these values can be easily generated by a CPLD only by setting the number n of qubits.

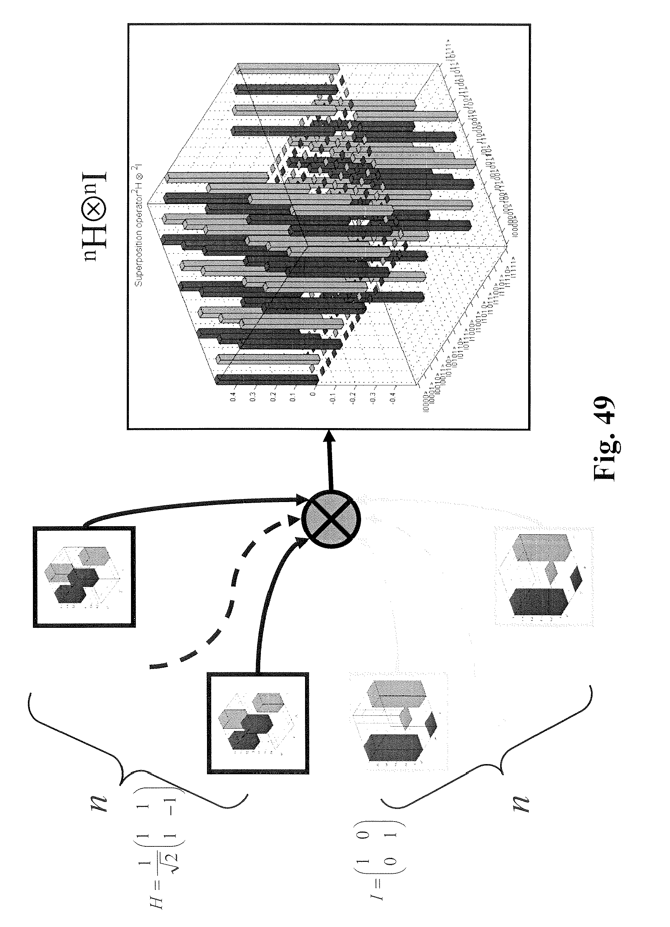

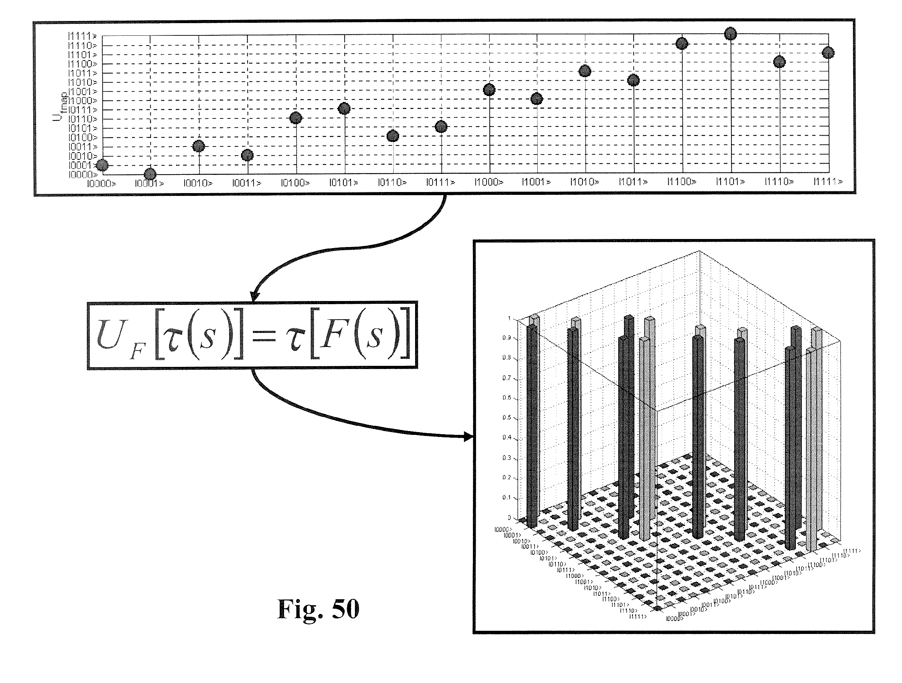

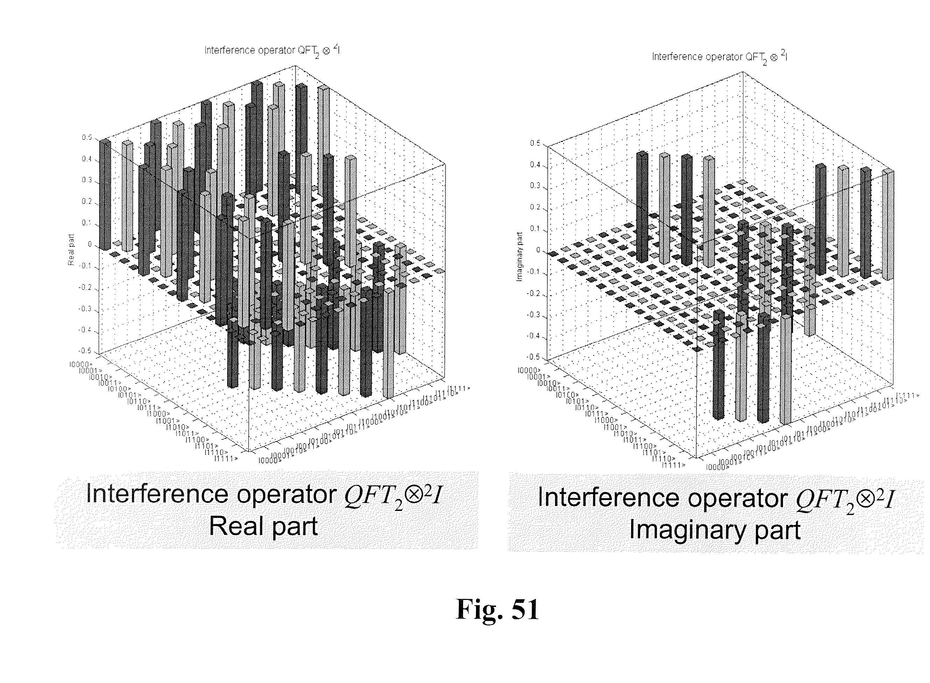

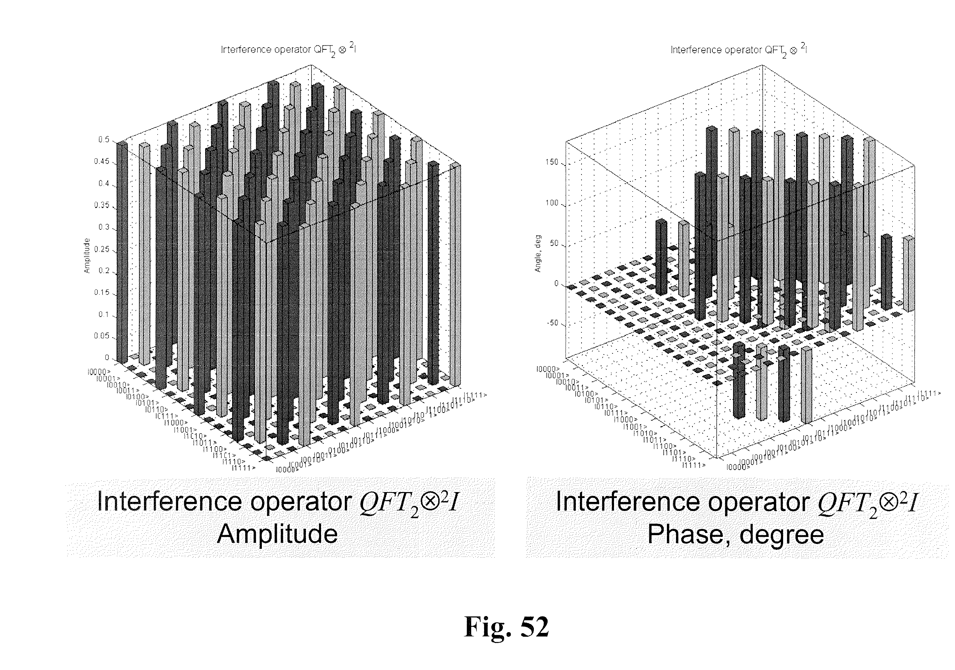

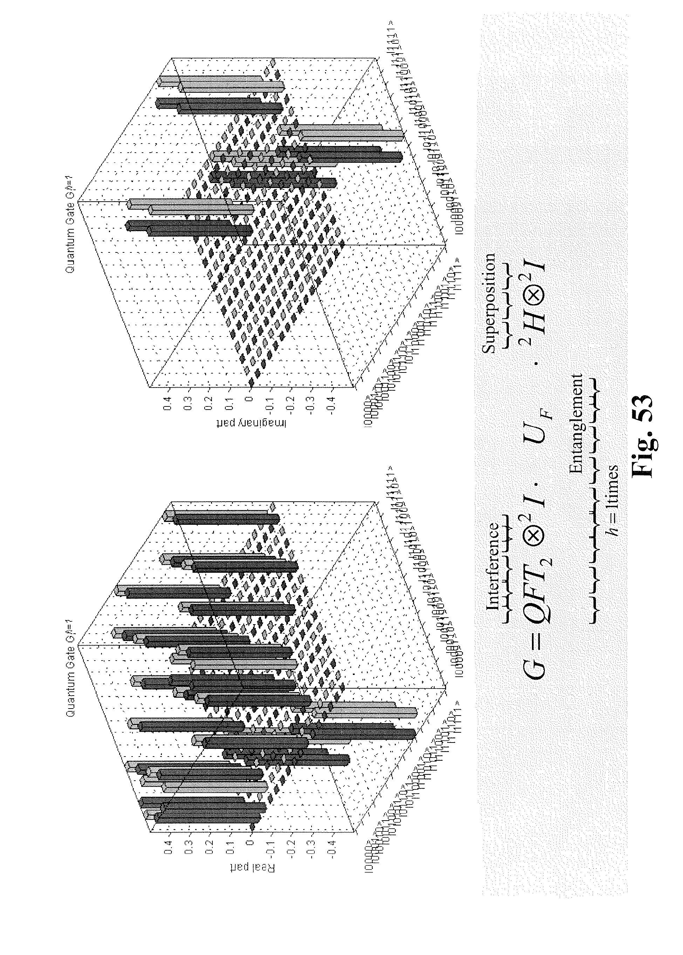

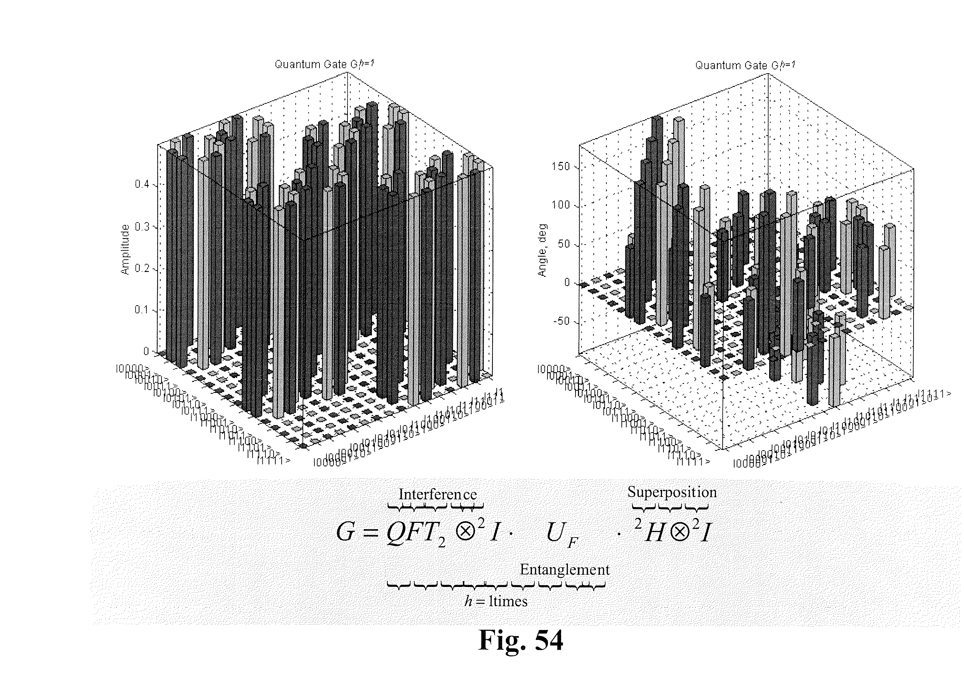

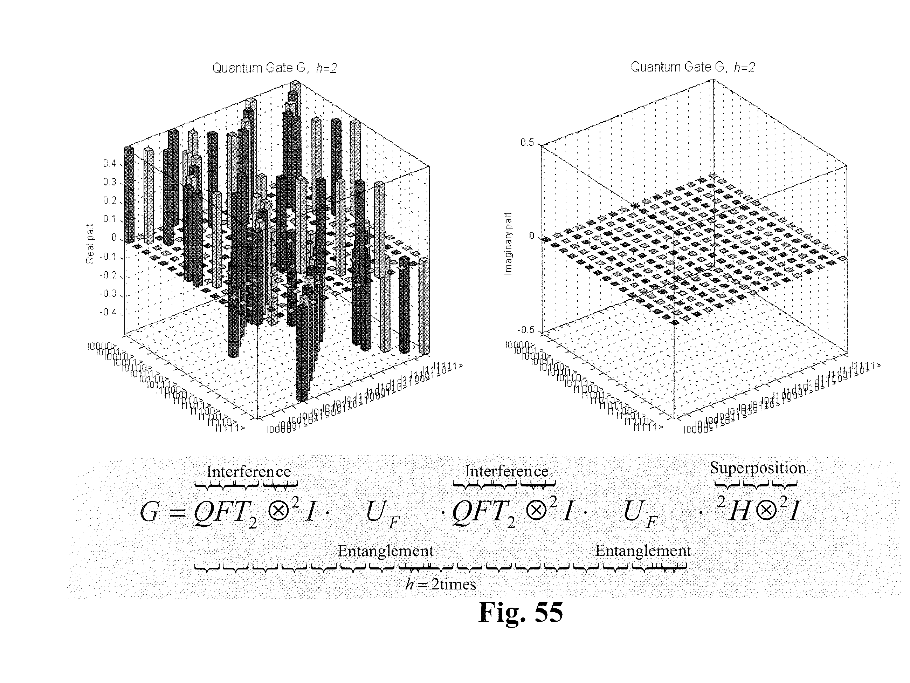

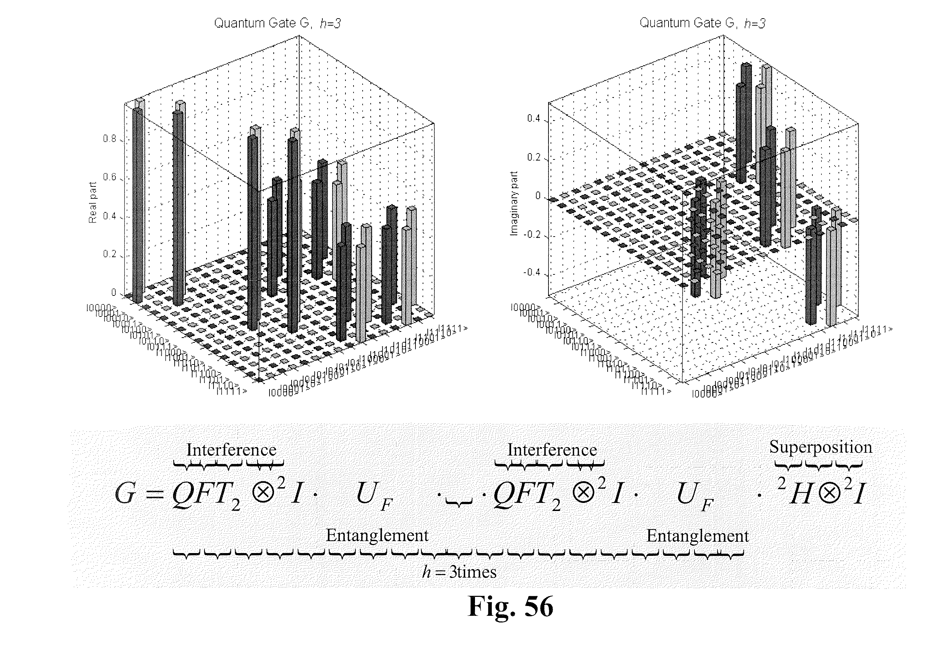

The superposition, entanglement and interference operators are prepared according to step 1 of Figure 47, as summarized in Figures 49 to 52 by way of an example. The corresponding Shor's quantum gate is illustrated in Figures 53 to 56.

B. ENTANGLEMENT METHOD

In this section considerations for Entanglement block of Shor's algorithm are presented. Being $f:\{0,1\}^n \rightarrow \{0,1\}^n$, the size of each block of $U_F$ increases with *n*, becoming each time different and not immediately predictable in its structure. However some interesting comments may help us in passing from *f* directly to output of $U_F$.

The general form of *f* in Shor's algorithm is the following:

$$f(x) = a^x \bmod N$$

where *N* is the number to factorize, a is one of its coprimes and *x* can assume values from 0 to *N-1.* Number of qubits is n=[$\log_2 N$]+1. Each block $M_i$ of $U_F$ results from n tensor products among *I* or C. So for *n* =2 the four possible blocks are *I⊗I ,I⊗C C⊗I C⊗C,* for *n* =3 the eight possible blocks are *I⊗I⊗I, I⊗I⊗C, I⊗C⊗I, I⊗C⊗C, C⊗I⊗I, C⊗I⊗C, C⊗C⊗I, C⊗C⊗C* and so on. These sequences are related with the binary representation of f(x), if we associate each "0" with *I* and each "1" with C. This fact allows to handle $2^n$x$2^n$ matrices instead of $2^{2n}$x$2^{2n}$ that is the size $U_F$. Moreover, $M_i$ are symmetric and unitary, so a lot of space can be spared in hardware storage.

Another comment relates to the particular form of superposition that have nonzero element in predictable position. This means that we can obtain output of Entanglement $G=U_F \cdot Y$ without calculate matrix product, but only having knowledge of corresponding row of diagonal $U_F$ matrix. More in detail we observe that only first row of each $2^n$ x $2^n$ block of entanglement contribute to this output vector meaning a strong reduction of computation complexity. In addition we can easily calculate this rows that have the only nonzero element of each block in position $f(x_j)$ +1. Finally

we can write output vector G:

$$g_i = \begin{cases} \dfrac{1}{2^{n/2}} & i = (i-1) \cdot 2^n + (j-1) \\ 0 & elsewhere \end{cases}$$

with $j = 1..2^n$, $i = 1..2^{2n}$ $x_j = j$.

## C. INTERFERENCE METHOD

A quite more difficult task is to deal with interference. In fact, differently from Entanglement, vectors are not composed by elements having only two possible values. Moreover, the presence of tensor products, whose number increases dramatically with the dimensions, constitutes a critical point at this step. In the European patent application EP 1 429 284 a suitable input-output relation is found by exploiting some particular properties of matrix $QFT_n \otimes {}^n I$.

Unlike the other quantum algorithms, the interference in the Shor's algorithm is carried out using Quantum Fourier Transformation (QFT).

As all other quantum operators, QFT is a unitary operator, acting on the complex vectors of the Hilbert space.

QFT transforms each input vector into a superposition of the basis vectors of the same amplitude, but with the shifted phase.

Let us consider the output G of the entanglement block.

$$G = \left[ g_1, g_2, \ldots, g_i, \ldots, g_{2^{2n}} \right]$$

The Interference matrix $QFT_n \otimes {}^n I$ has several nonzero elements. More exactly, it has $2^n(2^n-1)$ zeros on each column. In order to avoid trivial products some modification can be made. Y is the interference output vector, its elements $y_i$ are:

$$\mathrm{Re}\ y_i = \sum_{j=1}^{2^n} g_{((i\ \mathrm{mod}\ 2^n)+2^n(j-1))+1}\ \cos\left(2\pi\frac{(j-1)\cdot(\mathrm{int}((i-1)/2^n))}{2^n}\right)$$

$$\mathrm{Im}\ y_i = \sum_{j=1}^{2^n} g_{((i\ \mathrm{mod}\ 2^n)+2^n(j-1))+1}\ \sin\left(2\pi\frac{(j-1)\cdot(\mathrm{int}((i-1)/2^n))}{2^n}\right),$$

where int(.) is a function returning the integer part of a real number.

The fmal output vector is therefore the following: Y = [Re[y_i] + jIm[yi]].

*4.4. Grover's Algorithm*

Grover's algorithm is described here as a variation on Deutsch-Jozsa's algorithm introduced above.

*Grover's problem.* Grover's problem is so stated:

| Input | A function f:{0,1}ⁿ →{0,1} such that ∃x∈ {0,1}ⁿ: (f(x)-1∧∀y∈ {0,1}ⁿ: x≠y ⇒f(y)=0) |
|---|---|
| **Problem** | *Find x* |

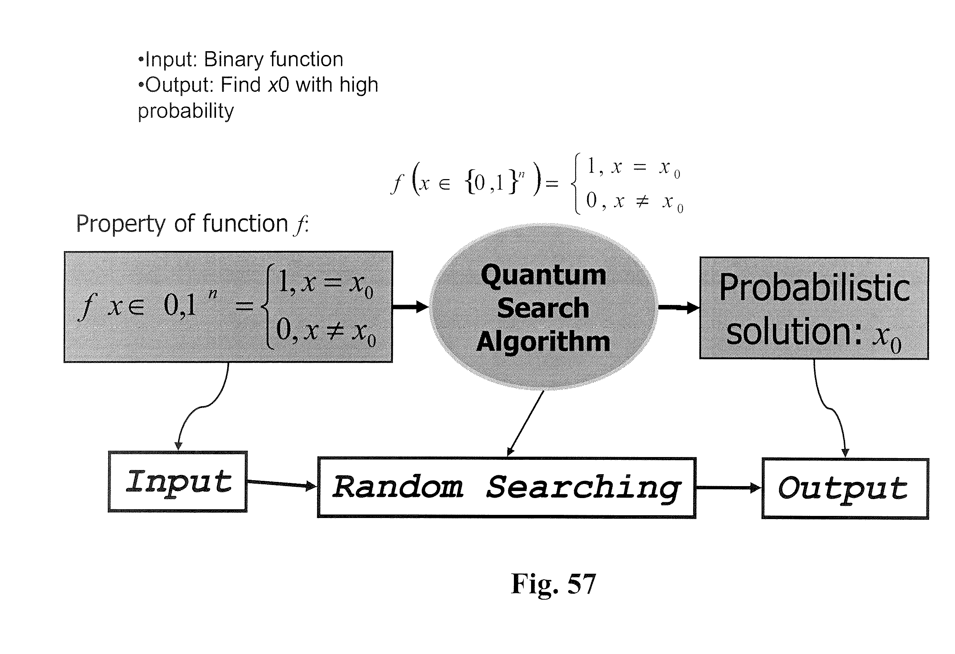

Figure 57 shows the definition of the Grover's problem.

In Deutsch-Jozsa's algorithm we distinguished two classes of input functions and we were supposed to decide what class the input function belonged to. In this case the problem is in some sense identical in its form even if it is harder because now we are dealing with $2^n$ classes of input functions (each function of the kind described constitutes a class).

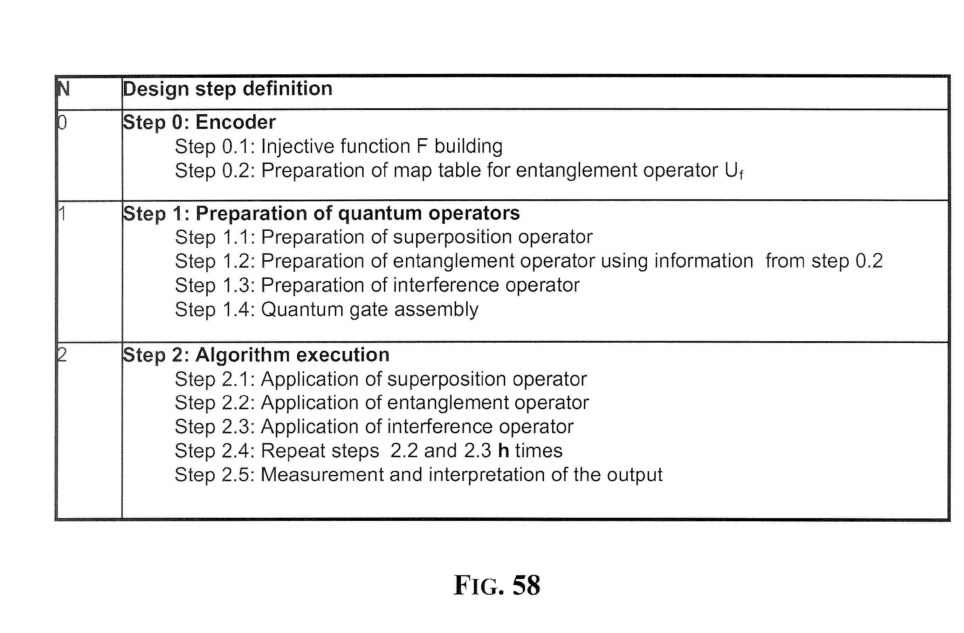

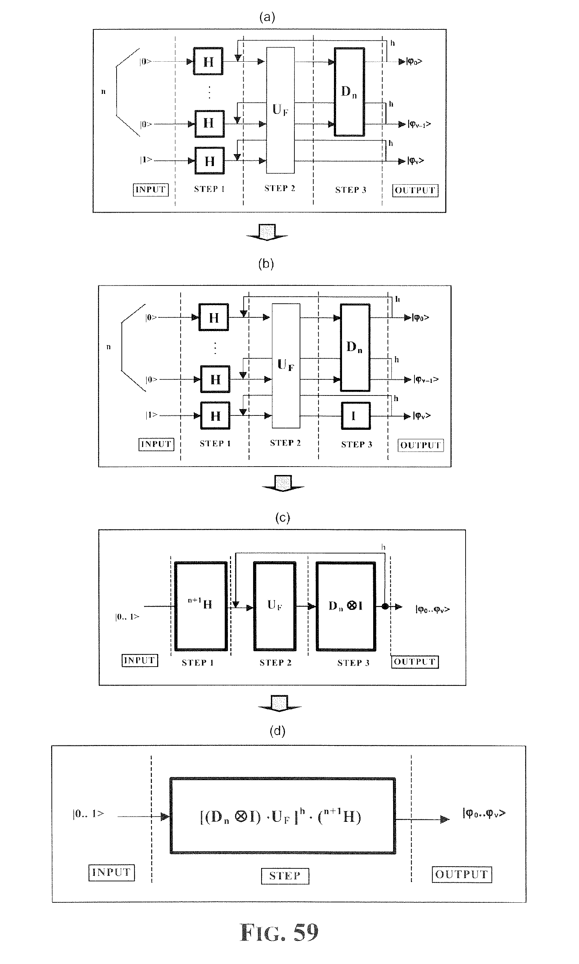

Figure 58 shows step design defmitions in Grover's QA according to the method of this invention, and Figure 59 shows how to obtain the corresponding gate.

Grover's algorithm is well known in the art and thus it will not be described herein. A thorough presentation of the Grover's algorithm may be found in W01/67186, EP 1 267 304, EP 1 380 991 and EP 1 383 078.

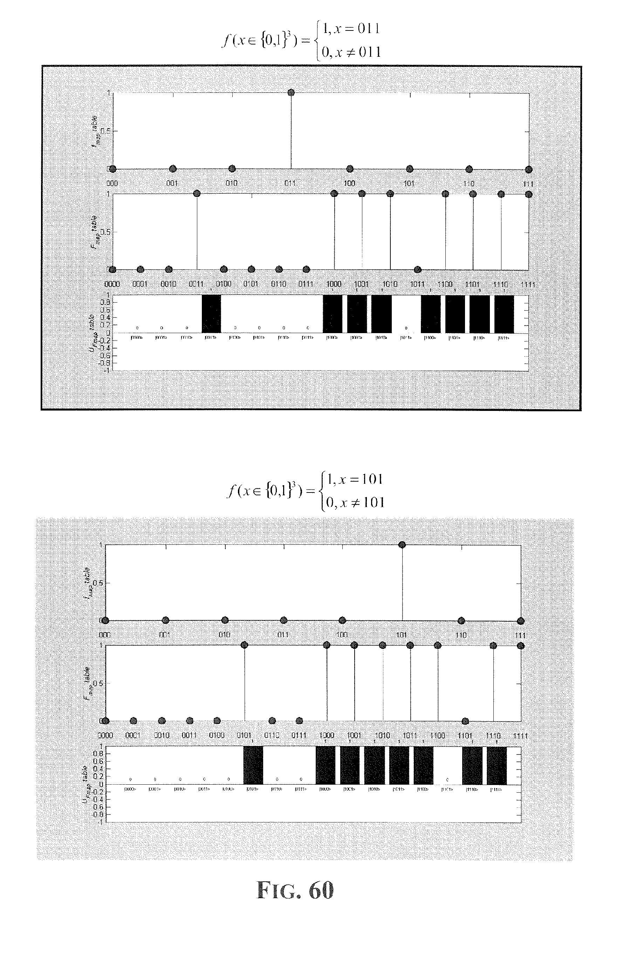

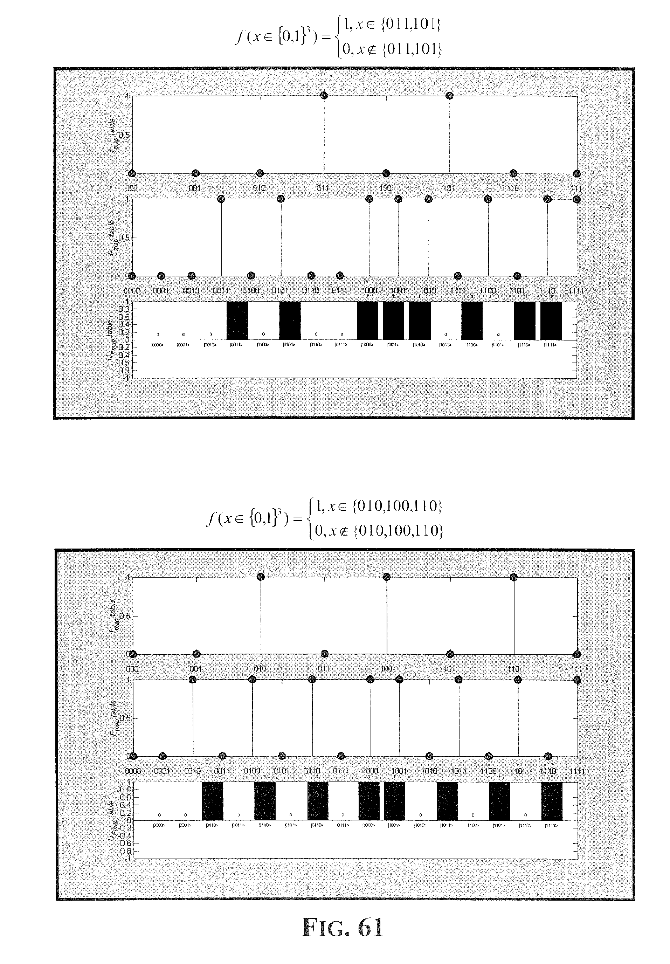

*4.4.1. Computer design process of Grover's quantum algorithm gate (Gr-QAG) and simulation results.* Let us consider the design process of *Gr-QAG* according to steps represented in Figure 58. *Step 0* as encoding process for the case of order n = 3 and answer search 1 in Figure 60 is described. For comparison the similar results for the cases of order n = 3 and answer search 2 and 3 in Figure 61 is shown.

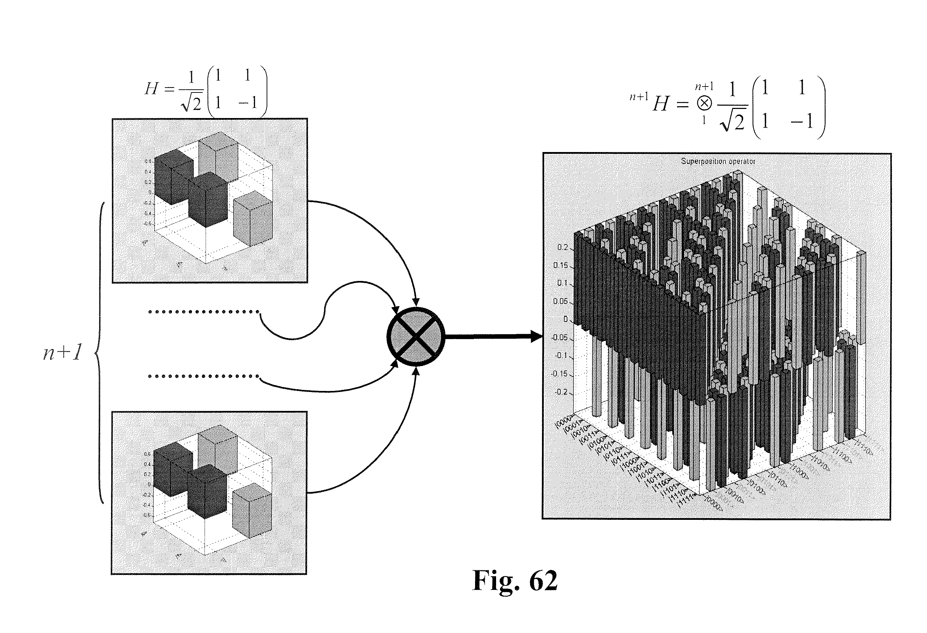

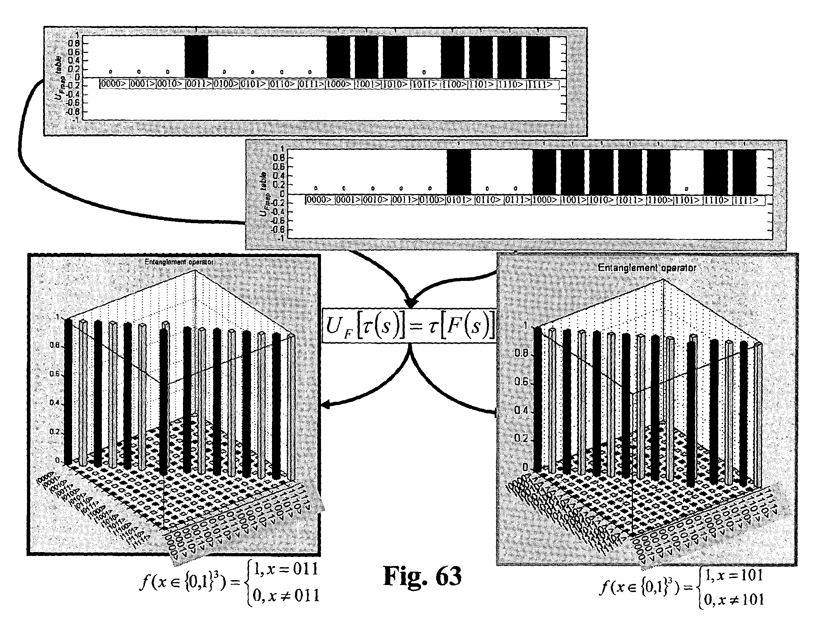

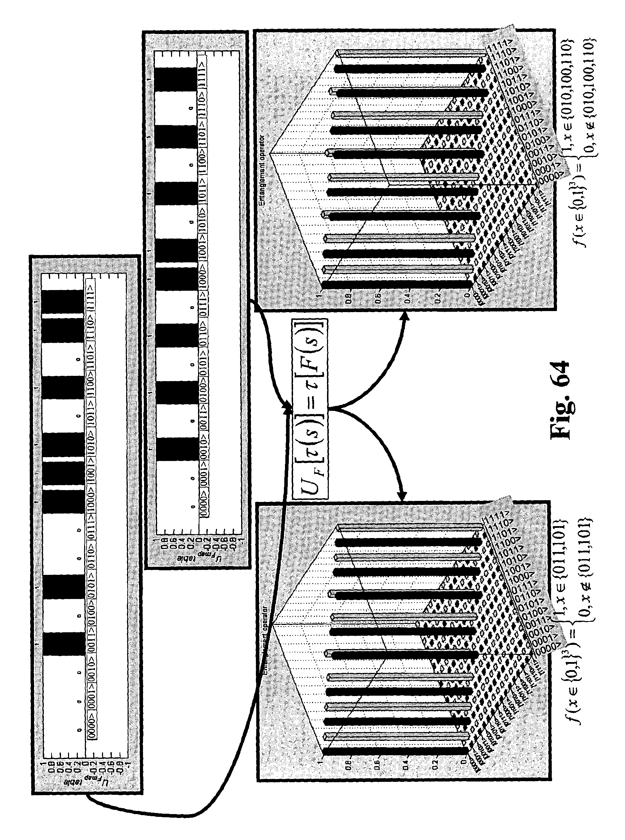

*Step 1.1* (from Figure 58) for design of superposition operator in Figure 62 is shown. Preparation of quantum entanglement (step 1.2) for the one answer search is shown in Figure 63. The cases for 2 and 3 answer search the preparation of entanglement operator in Figure 64 is shown.

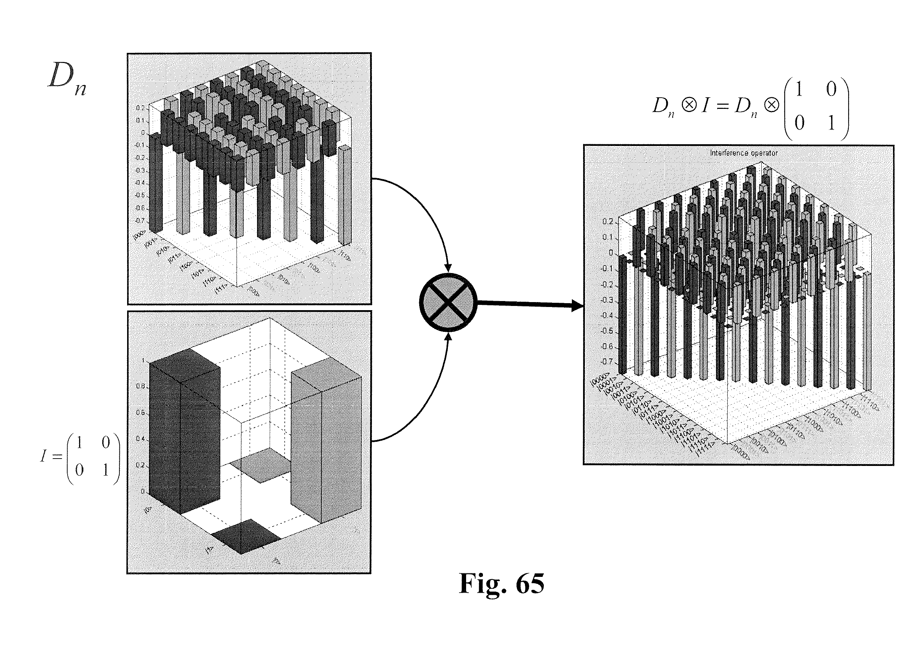

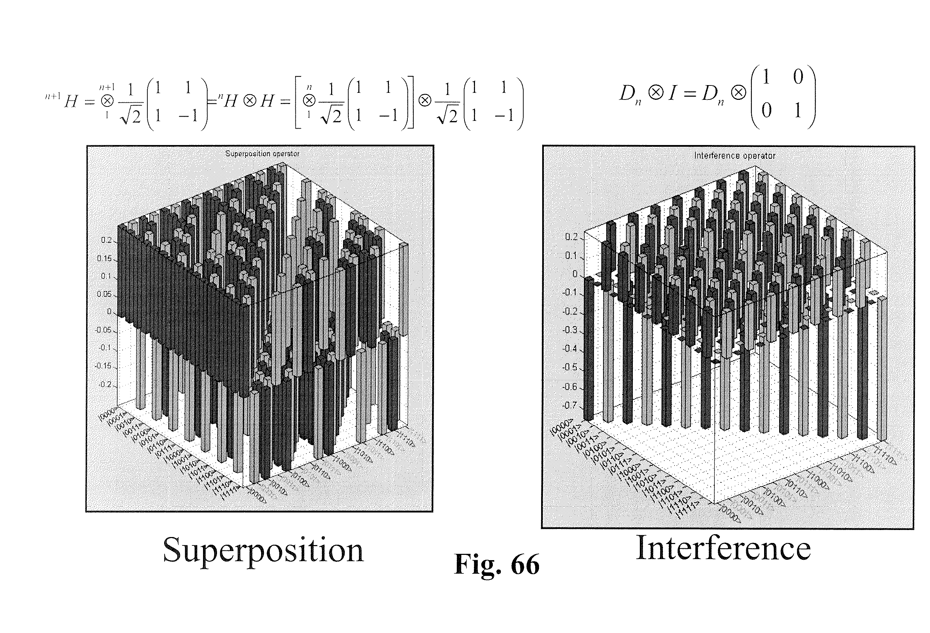

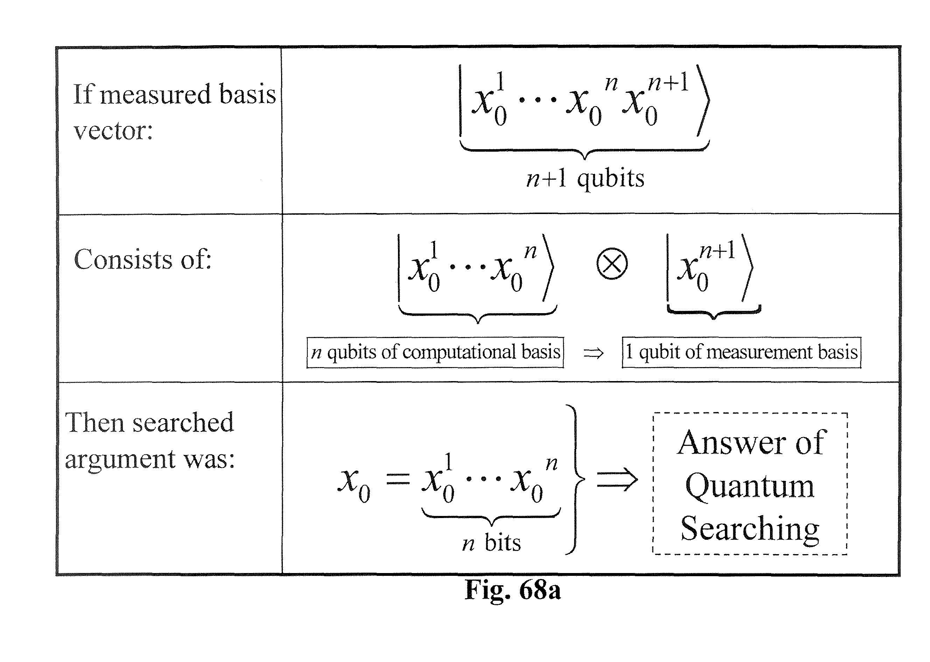

Figure 65 shows the result of interference operator design (step 1.3). Comparison between superposition and interference operators in *Gr-QAG* in Figure 66 is shown.

The superposition, entanglement and interference operators are assembled as shown hereinbefore for the Deutsch-Jozsa's quantum algorithm.

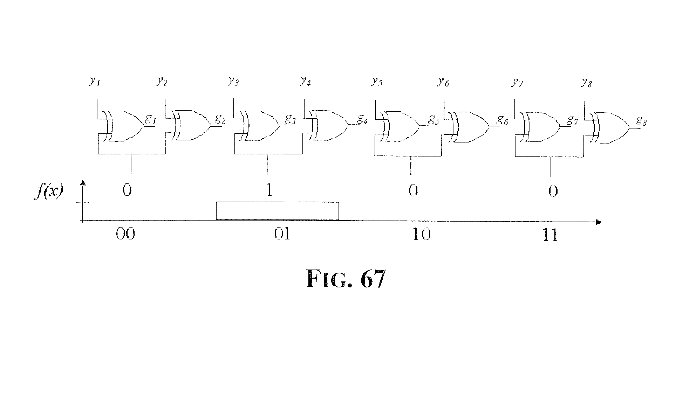

Similarly for the Deutsch-Jozsa's quantum algorithm, also the entanglement operation of a Grover's quantum algorithm may be implemented by means of XOR logic gates, as shown in Figure 67.

4.4.2. *Interpretation of measurement results in simulation of Grover's QSA-QG.* In the case of Grover's *QSA* this task is achieved (according to the results of this section) by preparing the *ancilla* qubit of the *oracle* of the transformation:

$$U_f : |x \quad a\rangle \mapsto |x \; , f(x) \oplus a\rangle$$

in the state $|a_0\rangle = \dfrac{1}{\sqrt{2}}\left(|0\rangle - |1\rangle\right)$. In this case the operator $I_{|x_0\rangle}$ is computationally equivalent to $U_f$:

$$U_f\left[| \rangle \otimes \frac{1}{\sqrt{2}}(|0\rangle |x\rangle)\right] = \left[I_{|x_0\rangle}(|x\rangle)\right] \frac{1}{\sqrt{2}}(| \rangle - |1\rangle)$$

$$= \frac{1}{\sqrt{2}}\left[I_{|x_0\rangle}(| \rangle \otimes |x\rangle) \underbrace{|0\rangle}_{ComputationResult} H\frac{1}{\sqrt{2}} \underbrace{I_{|x_0\rangle}(|x\rangle)}_{ComputationResult}\right] \otimes \underbrace{|1\rangle}_{Measurement}$$

and the operator $U_f$ is constructed from a controlled $I_{|x_0\rangle}$ and *two* one qubit

Hadamard transformations.

The result interpretation for the *Gr-QAG* according to general approach in Figure 68a is shown.

Measured basis vector consists of the tensor product between the computation qubit results and ancilla measurement qubit. In Grover's searching process ancilla qubit don't changing during the quantum computing.

*Remark.* As abovementioned, operator $U_f$, consists two Hadamard transformations. The Hadamard transformation $H$ (that modeling the constructive interference) applied on the state of the standard computational basis can be seen as implementing *a fair coin tossing.* It means that if the matrix $H = \dfrac{1}{\sqrt{2}}\begin{pmatrix} 1 & 1 \\ 1 & -1 \end{pmatrix}$ is applied to the states of the standard basis, then $H^2|0) = |1\rangle$, $H^2|1\rangle =| 0\rangle$, and therefore $H^2$ acts in measurement process of computational result as *a NOT*-operation, up to the phase sign. In this case the measurement basis separated with the computational basis (according to tensor product).

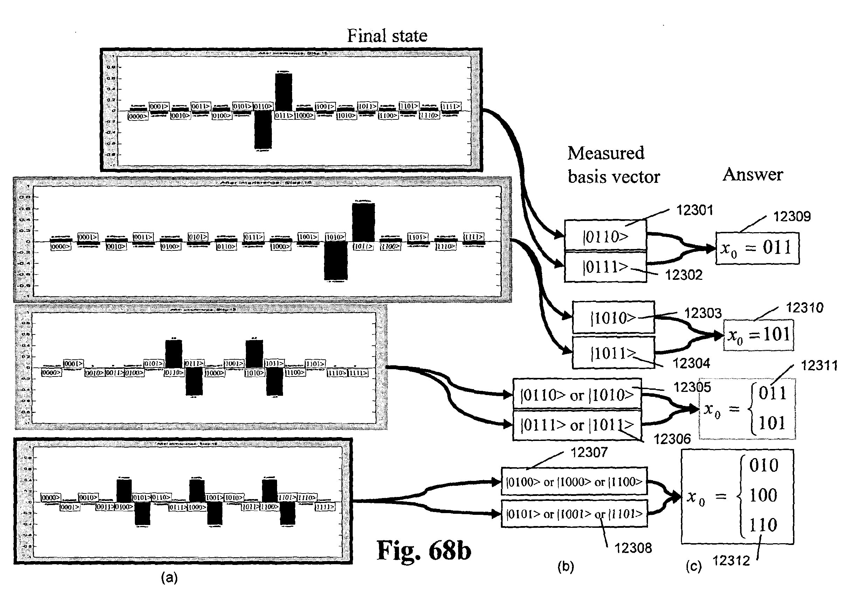

The results of simulation are shown in Figure 68b. Boxes *12301 - 12308* are shown the results of computation on classical computer with *Gr-QAG.*

*Example.* In boxes *12301* and *12302* we obtain two possibilities:

$$\left\{ \left|0 \quad 1 \right\rangle = \underbrace{\left|0 \quad 0\right\rangle}_{Result} \otimes 1 \underbrace{\left|0\right\rangle}_{measurementqubit} \right\}$$

and

$$\Updownarrow \qquad\qquad \Updownarrow$$

$$\left\{ \left|0 \quad 1 \right\rangle = \underbrace{\left|1 \quad 0\right\rangle}_{Result} \otimes 1 \underbrace{\left|1\right\rangle}_{measurementqubit} \right\}.$$

Boxes *12305* and *12306* demonstrated two searching marked states:

$$\left\{ \left|0 \quad 1\right\rangle = \left| 0 \right\rangle 0 \quad 1 \otimes \underbrace{|1\rangle \; 0}_{measurementqubit} \quad or \quad |0 = 1\rangle \; 0 \left| 1 \right\rangle \otimes 1 \underbrace{\left|0\right\rangle}_{measurementqubit} \right\}$$

and

$$\Updownarrow \qquad\qquad\qquad\qquad \Updownarrow$$

$$\left\{ \left|0 \quad 1\right\rangle = \left| 1 \right\rangle 0 \quad 1 \otimes \underbrace{|1\rangle \; 1}_{measurementqubit} \quad or \quad |0 = 1\rangle \; 1 \left| 1 \right\rangle \otimes 1 \underbrace{\left|1\right\rangle}_{measurementqubit} \right\}$$

Using simple random measurement strategy as a fair coin tossing in measurement basis $\{|0\rangle, |1\rangle\}$ we can independently from the measurement basis result received with the certainty the searching marked states.

Boxes *12309 -12312* are shown accurate results of searching of corresponding marked states.

Final result of interpretation for *Gr-QAG* application in Figure 68a is shown. The measurement results of *Gr-*

*QAG* application in computation basis {|0⟩, |1⟩} with implementing a *fair coin* tossing of measurement in Figure 68b is shown.

Figure 68b shows that for both possibilities in implementing *a fair* coin tossing of measurement process the search of answer is successful.

*4.4.3. Hardware implementations of the Grover's algorithm* are disclosed in EP 1 267 304, EP 1 383 078 and EP 1 380 991.

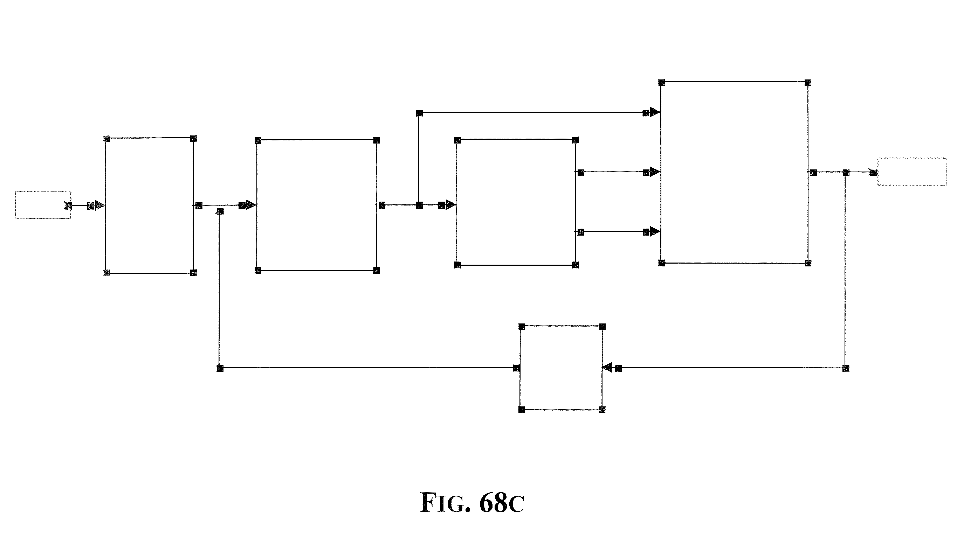

A general scheme of a hardware implementing a Grover's quantum algorithm is depicted in Figure 68c. This scheme is per se clear to skilled persons and will not describe further.

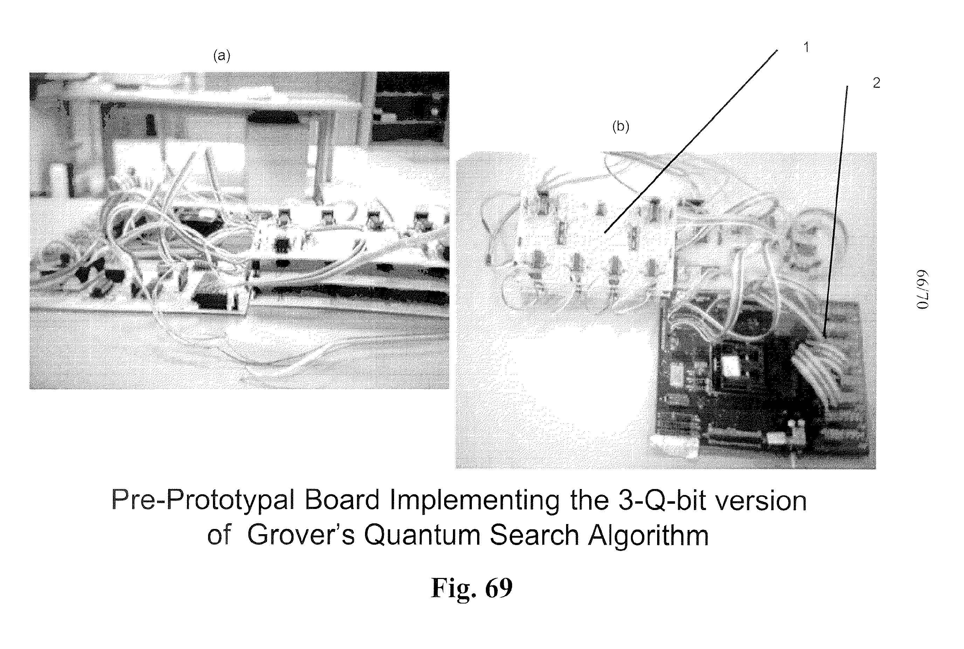

As contemplated by the method of this invention, a hardware quantum gate for any number of qubits may be obtained simply by connecting in parallel a plurality of gate for 2 qubits. As already disclosed in the above mentioned European patent applications and shown in Figure 69, that depicts a hardware device implementation if a 3-qubit version of Grover's QSA, such a hardware device may be obtained by stacking three identical modules, labeled with the numeral 1 in Figure 69b and clearly visible in Figure 69a, and a control board 2.

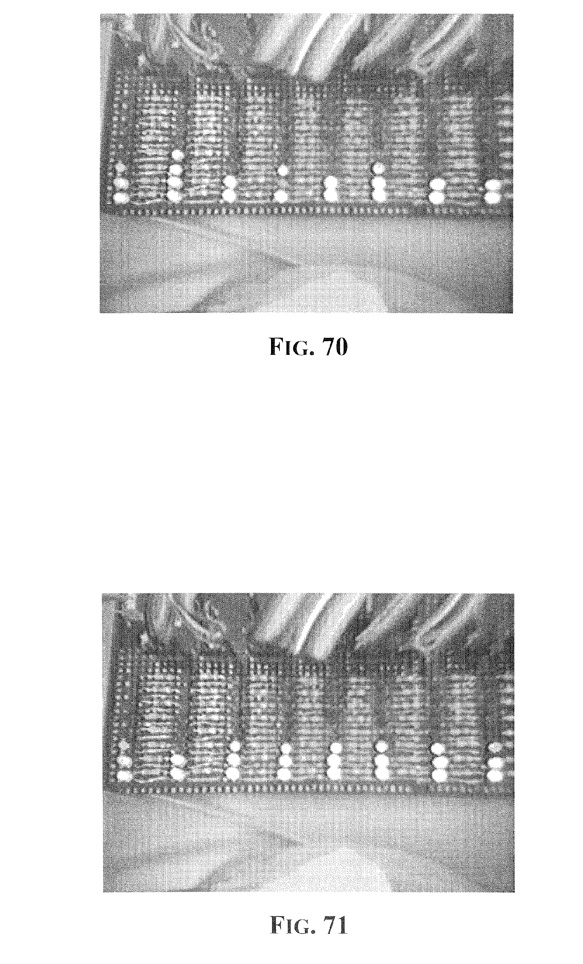

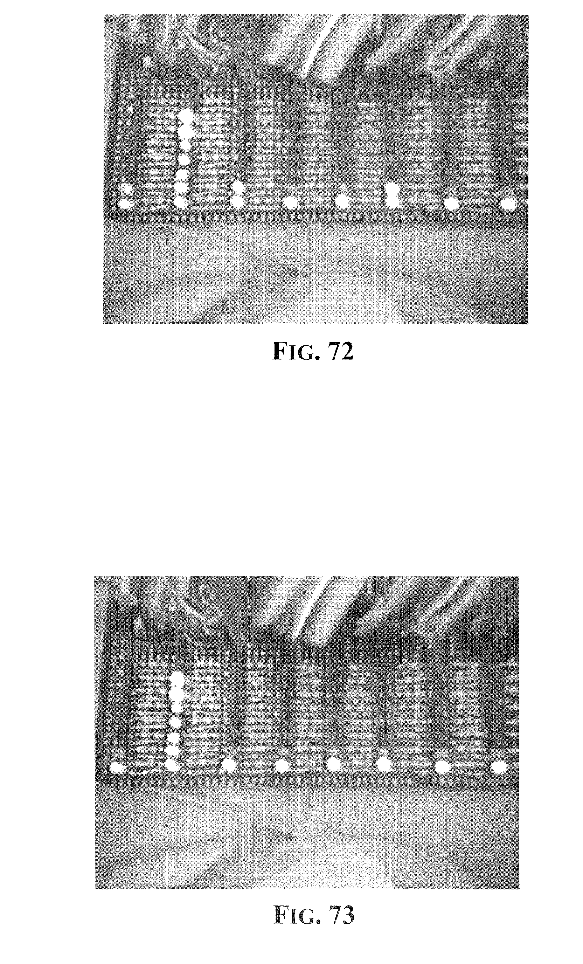

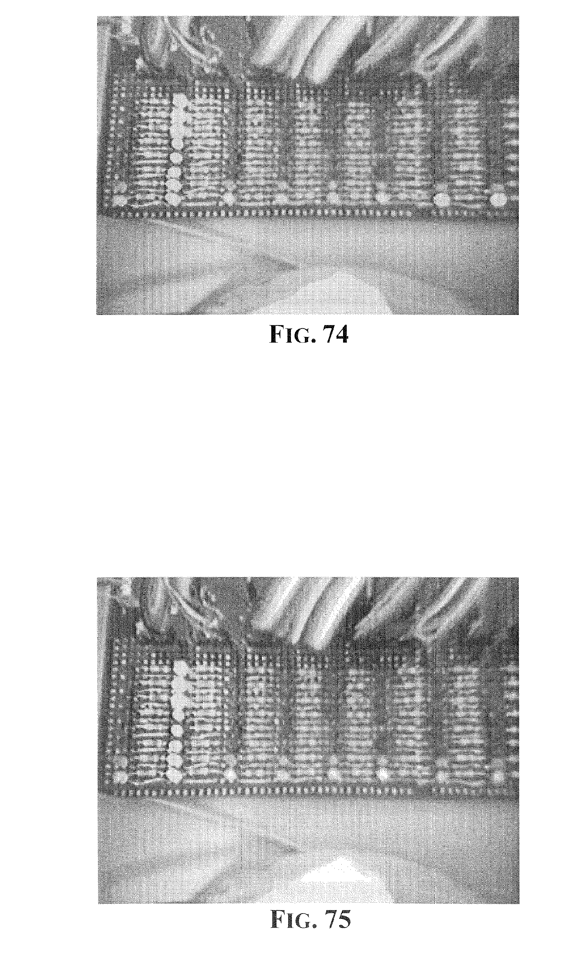

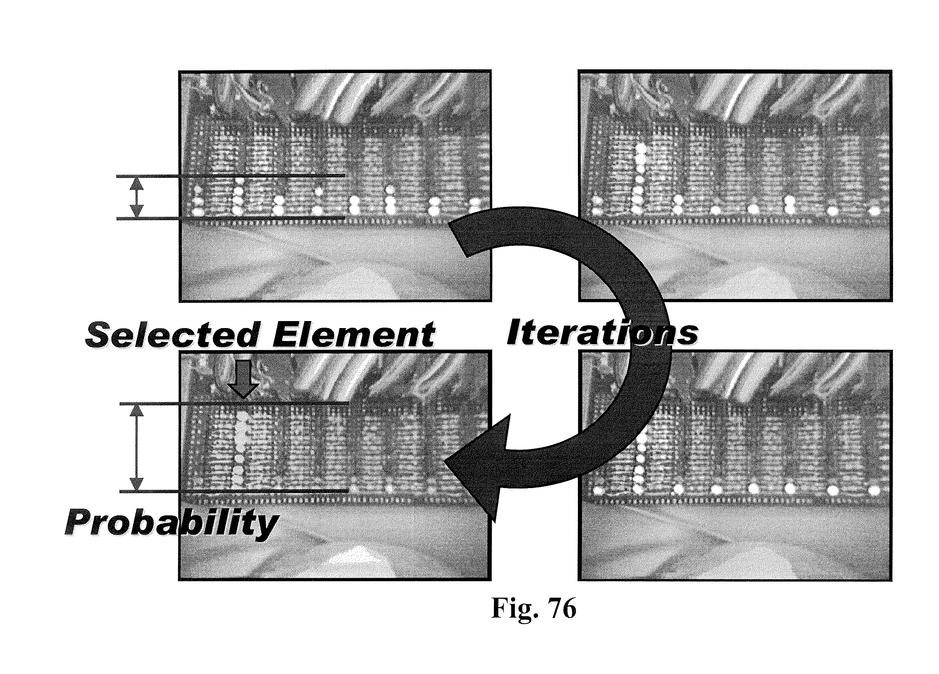

Figures 70 to 75 shows the results obtained with the prototype hardware device of Figure 69. It is evident how the probability of fmding a desired item (corresponding to the second column at left in figure) in a database increases at each iteration of the Grover's algorithm. Figure 76 summarizes the evolution of the state of the device of Figure 69.

REFERENCES

1. *Vidal G.,* "Efficient classical simulation of slightly entangled quantum computation," **Physical Review Letters,** 2003, Vol. 91, No 14, pp. 147902-1 - 147902-4.

2. *Vidal G.,* "Classical simulation of slightly entangled quantum systems and quantum computation," **Quantum Physics Archive** http://arxiv.org/abs/**arXiv**: *quant-ph/0301063v1,* 15 Jan 2003, 4 p.; "Efficient simulation of one-dimensional many-body systems," **Quantum Physics Archive** http://arxiv.org/abs/**arXiv**: *quant-ph/0310089v1,* 14 Oct 2003, 4 p.

3. *Hemaspaandra E., Hemaspaandra L.A. and Zimand M.,* "Almost-everywhere superiority for quantum polynomial time," **Information and Computation**, 2002, Vol. 175, No 2, pp. 171-181.

4. *Vianna R.O., Rabelo W.R.M. and Monken C.H.,* "The semi-classical computer," **International Journal of Quantum Information**, 2003, Vol. 1, No 2, pp. 279 - 288; also available in: **Quantum Physics Archive** http://arxiv.org/abs/**arXiv:** *quant-ph/0304085v1,* 11 Apr 2003, 4 p.

5. *Bassi A. and Chirardi G.C.,* "Quantum vs. classical computation: a proposal opening a new perspective," **Quantum Physics Archive** http://arxiv.org/abs/**arXiv**: *quant-ph/0304074v1,* 10 Apr 2003, 13 p.

6. *Klappenecker A. and Rotteler M.,* "Quantum software reusability," International Journal of Foundations of Computer Science, 2003, Vol. 14, No 5, pp. 777 - 796; also available in: **Quantum Physics Archive** http://arxiv.org/abs/**arXiv**: *quant-ph/0309121v2,* 15 Sep 2003, 20 p.; "Engineering functional quantum algorithms," **Physical Review,** 2003, Vol. A67, No 1, pp. 010302-1 - 010302-4.

7. *Goldstein D.,* "Quantum modeling," **Quantum Physics Archive** http://arxiv.org/abs/ **arXiv:** *quant-ph/0310029v1,* 4 Oct 2003, 16 p.

8. *Batty M., Braunstein S.L., Duncan A.J. and Rees S.,* "Quantum algorithms in group theory," **Quantum Physics Archive** http://arxiv.org/abs/**arXiv**: *quant-ph/0310133v1,* 21 Oct 2003, 52 p.

9. *Barnum H., Bernstein H.J. and Spector L.,* "Quantum circuits for OR and AND of XORs," **Journal of Physics: Math. Gen.,** 2000, Vol. A33, pp. 8047 - 8057.

10. *Jozsa R. and Linden N.,* "On the role of entanglement in quantum-computation speed-up," **Proceedings: Mathematical, Physical & Engineering Sciences,** 2003, Vol. 459, No 2036, pp. 2011 - 2036.

11. *Valiant L.G.,* « Quantum circuits that can be simulated classically in polynomial time, » **SIAM Journal on**

**Computing**, 2002, Vol. 31, No 4, pp. 1229 - 1254.

12. *Valiant L.G.,* « Quantum circuits that can be simulated classically in polynomial time, » **Proceedings of 33 Annual ACM Symposium on Theory of Computing** *(STOC'2001),* ACM Press, N.Y., 2001, pp. 114-123.

13. *Buhrman H., Newman I., Rohrig H. and de Wolf R.,* « Robust quantum algorithms and polynomials, » **Quantum Physics Archive** http://arxiv.org/abs/**arXiv**: *quant-ph/0309220v1,* 30 Sep 2003, 12 p.

14. *Hoyer P.,* "Introduction to recent quantum algorithms," **Lectures Notes in Computer Science** (*LNCS*), **MFCS** 2001, 2001, Vol. 2136, pp. 62 - 74.

15. *Beth T. and Rotteler M.,* "Quantum algorithms: Applicable algebra and quantum physics," In: *G. Alber et al.* (Eds), Quantum Information, **Springer Topics in Modern Physics** *(STMP),* Vol. 173, 2001, pp. 96-150.

16. *Galindo A. and Martin-Delgado M.A.,* "Information and computation: Classical and quantum aspects," **Review of Modern Physics**, 2002, vol. 74, No 2, pp.347-423.

17. *Braunstein S.l. and Pati A.K.,* "Speed-up and entanglement in quantum searching," Quantum Information and Computation, 2002, Vol. 2, No 5, pp. 399 - 409.

18. *Forcer T.M., Hey A.J.G., Ross D.A. and Smith P.G.R.,* "Superposition, entanglement and quantum computation," **Quantum Information and Computation,** 2002, Vol. 2, No 2, pp. 97 -116.

19. *Ambainis A.,* "Quantum lower bounds by quantum arguments," **Journal of Computer and System Sciences**, 2002, Vol. 64, No 4, pp. 750 - 767.

20. *Harrow A. W. and Nielsen M.A.,* "Robustness of quantum gates in the presence of noise," **Physical Review,** 2003, Vol. A68, No 1, pp. 012308-1 - 012308-13.

21. *Altafinin C.,* "On the generation of sequential unitary gates from continuous time Schrodinger equations driven by external fields," **Quantum Information** Processing, 2002, Vol. 1, No 3, pp. 207 - 223.

22. *Carpentieri M.,* "On the simulation of quantum Turing machines," **Theoretical Computer Science**, 2003, Vol. 304, No 1, pp. 103 -128.

23. *Makhlin Yu.,* "Nonlocal properties of two-qubit gates and mixed states, and the optimization of quantum computations," Quantum Information Processing, 2002, Vol. 1, No 4, pp. 243 - 251.

24. *Cybenko* G., "Reducing quantum computations to elementary unitary operations," **Computing in Science & Engineering,** 2001, Vol. 3, No 2, pp. 27-32.

25. *Viamontes G.F., Markov I.I. and Hayes J.P,* "Improving gate-level simulation of quantum circuits," **Quantum Information Processing,** 2003, Vol. 2, No 5, pp. 347 - 380; also available in: **Quantum Physics Archive** http://arxiv.org/abs/**arXiv**: *quant-ph/0309060v1,* 6 Sep 2003, 22 p.; and "Graph-based simulation of quantum computation in the density representation," **Quantum Physics Archive** http://arxiv.org/abs/**arXiv**: *quant-ph/0403114v2, 16* Mar 2004, 12 p.

26. *Gottesmann D.,* « Theory of fault-tolerant quantum computation, » Physical Review, 1998, Vol. A57, No 1, pp. 127 - 137.

27. *Nishimura H. and Ozawa M.,* « Computational complexity of uniform quantum circuit families and quantum Turing machines, » **Theoretical Computer Science,** 2002, Vol. 276, N0 2, pp. 147-181.

28. *Wootters W.K.,* «Quantum entanglement as a quantifiable resource, **» Phil. Trans. R. Soc. Lond.**, 1998, Vol. A356, pp. 1717 -1731.

29. *Roychowdhury V.P. and Vatan F., «* Quantum formulas: A lower bound and simulation,» **SIAM Journal on Computing,** 2001, Vol. 31, No 2, pp. 460 -476; also available in: **Quantum Physics Archive** http://arxiv.org/abs/**arXiv**: *quant-ph/0104053,* 10 Apr 2001, 22 p.

30. *Bartlett S.D. and Sanders B.C.,* « Requirement for quantum computation,» **Journal of Modern Optics,** 2003, vol. 15-17, pp. 2331 - 2340; also available in: **Quantum Physics Archive** http://arxiv.org/abs/ **arXiv**: *quant-ph/ 0302125v1,* 7 Feb 2003, 11 p.; "Efficient classical simulation of measurements in optical quantum information," **Quantum Physics Archive** http://arxiv.org/abs/ **arXiv:** *quant-ph/0209133v1*, 25 Sep 2002, 4 p.

31. *Moore Ch. and Nilsson M.,* "Parallel quantum computation and quantum codes," **SIAM Journal on Computing,** 2001, Vol. 31, No 3, pp. 799 - 815.

32. *Patel A.,* «Quantum algorithms and the genetic code,» **Pramana,** 2001, Vol. 56, pp. 367 - 381.

33. *Kitaev A.Yu.,* "Quantum computation: Algorithms and error correction," **Russian Mathematical Surveys**, 1997, Vol. 52, No 6, pp. 1191 -1249.

34. *Kitaev A.Yu., Shen A.H. and Vyalyi M.N.* , "**Classical and quantum computation,"** *Graduate Studies in Mathematics,* Vol.47, *American Mathematical Society* (AMS), Providence, Rhode Island, 2002 (Translated from Russian Edition, 1999)

35. *Lloyd S.,* "Almost any quantum logic gate is universal," **Physical Review Letters**, 1995, Vol. 75, No 2, pp. 346-349.

36. *Wootters W.K.,* "Entanglement of formation and concurrence," **Quantum Information and Computation,** 2001, Vol. 1, No 1, pp. 27 - 44.

37. *Somma R., Ortiz G., Knill E. and Gubernatis J.,* "**Quantum simulations of physical problems**," **International Journal of Quantum Information**, 2003, Vol. 1, No 2, pp. 189-206.

38. *Castagnoli G. and Finkelstein D.R.,* "Theory of the quantum speed-up," **Proceedings of R. Soc. Lond.** A, 2001, Vol. 457, pp. 1799 -1806.

39. *Bartlett S.D. and Sanders B.C.,* "Efficient classical simulation of optical quantum information circuits," **Physical Review Letters,** 2002, Vol. 89, No 20, pp. 207903-1 - 207903 -4; "Efficient classical simulation of continuous variable quantum information processes," *ibid,* 2002, Vol. 88, No 9, pp. 097904-1 - 097904-4.

40. *Terhal B.M. and Divincenzo D.P.,* "Classical simulation of noninteracting-fermion quantum circuits," **Physical Review,** 2002, Vol. A65, No 3, pp. 032325-1 - 032325-10.

41. *Knill E.,* « Fermionic linear optics and matchgates, » Quantum Physics **Archive http://arxiv.org/abs/arXiv:** *quant-ph/0108033v2,* 8 Aug 2001, 17 p.

42. *Heinrich S.,* « From Monte Carlo to quantum computation,» **Mathematics** and Computers in Simulation, 2003, Vol. 62, No 2, pp. 219 - 230.

43. *Vartiainen J.J., Nishanen A.O., Nakahara M. and Salomaa M.M.,* « Acceleration of quantum algorithms using three-qubit gates, » Quantum **Physics Archive** http://arxiv.org/abs/**arXiv:** *quant-ph10310165v1,* 28 Oct 2003, 10 p.

44. *Gudder S.,* «Quantum computational logic, » International Journal of Theoretical Physics, 2003, Vol. 42, No 1, pp. 39 - 47.

45. *Cabauy P. and Benioff P.,* «Cyclic networks of quantum gates, » **Physical** Review, 2003, Vol. A68, No 3, pp. 032315-1 - 032315-14.

46. *Zhou X., Leung D. and Chuang I.L.,* «Methodology for quantum logic gate construction, » **Physical Review,** 2000, Vol. A62, No 5, pp. 052316-1 - 052316-12.

47. *Bose S., Rallan L. and Vedral V.,* «Communication capacity of quantum computation, » Physical Review Letters, 2000, Vol. 85, No 25, pp. 5448 - 5451.

48. *Shende V., Prasad A., Markov I. and Hayes J.,* "Synthesis of reversible logic circuits," IEEE Transactions on Computer-Aided Design of Integrated **Circuits and Systems,** 2003, Vol. 33, No 6, pp. 714 - 725; 49. *Aho A. V. and Svore K.M.,* "Compiling quantum circuits using the palindrome transform," **Quantum Physics Archive** http:// arxi v.org/abs/**arXiv**: *quant-ph/0311008v1,* 3 Nov. 2003, 17 p.

50. *Bettelli S., Calarco T. and Serafani L.,* "Toward an architecture for quantum programming," **The European Physical Journal,** 2003, Vol. D25, No 2, pp. 181 -200.

51. *Aaronson S.,* "Multilinear formulas and scepticism of quantum computing," **Quantum Physics Archive** http:// arxiv.org/abs/ **arXiv:** *quant-ph/0311039v1,* 7 Nov 2003, 30 p.

52. *Biham E., Brassard G., Kenisberg D. and Mor T.,* "Quantum computing without entanglement," **Quantum Physics Archive** http://arxiv.org/abs/**arXiv**: *quant-ph10306182v1,* 26 Jun 2003, 18 p.

53. *Orùs R. and Latore J.L,* "Universality of entanglement and quantum computation complexity," **Quantum Physics Archive** http://arxiv.org/abs/arXiv: *quant-ph/0311017vl,* 5 Nov 2003, 30 p.; "Natural majorization of the quantum Fourier transformation in phase-estimation algorithms," Quantum Information Processing, 2002, Vol. 1, No 4, pp. 283 - 302; "Systematic analysis of majorization in quantum algorithms," Quantum Physics Archive http://arxiv.org/abs/**arXiv**: *quant-ph/0212094v1*, 16 Dec 2002, 13 p.

54. *Krishnamurthy E.V.,* "Mapping, programmability and scalability of problems for quantum speed-up," International Journal of Modern Physics, 2003, Vol. C14, No 5, pp. 587 - 600; "Integrability, entropy and quantum computation," **International Journal of Modern Physics,** 1999, Vol. C10, No 7, pp. 1205 - 1228; and "Computational power of quantum mechanics, quantum grammars and feasible computation," International Journal of Modern Physics, 1998, Vol. C9, No 2, pp. 213 - 241.

55. *Sing A. and Sing S.,* "Applied quantum search to automated test pattern generation for VLSI circuits," International Journal of Quantum Information, 2003, Vol. 1, No 1, pp. 79 - 92.

56. *Fisher K., Matuttis H.-G., Ito N. and Ishikawa M.,* "Quantum-statistical simulators for quantum circuits," International Journal of Modern Physics, 2002, Vol. C13, No 7, pp. 931 - 945; "Auxiliary field methods for the simulation of quantum computation circuits," International Journal of Modern Physics, 2002, Vol. C 13, No 7, pp. 917 - 929.

57. *Buhrman H. and de Wolf R.* "Quantum zero-error algorithms cannot be composed," Information Processing Letters, 2003, Vol. 87, No 2, pp. 79 - 84.

58. *Bae J. and Kwon Y.,* "Generalized quantum search Hamiltonian," **Physical Review**, 2002, Vol. A66, No 1, pp. 012314-1 - 012314-2; "Maximum speedup in quantum search: $O(1)$ running time," **Intern. Journal of Theoretical Physics**, 2003, Vol. 42, No 8, pp. 2069 - 2080; and "Perturbations can enhance quantum search," *ibid,* pp. 2075 - 2080; "Wavelet quantum search algorithm with partial information," **Quantum Physics Archive** http://arxiv.org/abs/ **arXiv**: *quant-ph/0303025v2,* Mar 2003, 6 p.

59. *Giovannetti V., Lloyd S. and Maccone L.,* "Quantum limits to dynamical evolution," **Physical Review,** 2002, Vol. A67, No 1, pp. 052109-1 - 052109 -8; "The role of entanglement in dynamical evolution," **Quantum Physics Archive** http://arxiv.org/abs/**arXiv**: *quant-ph/0206001v5,* 19 May 2003, 5 p.; and "The quantum speed limit," **Quantum Physics Archive** http://arxiv.org/ abs/**arXiv**: *quant-ph/0303085v1,* 13 May 2003, 6 p.

60. *Margoulis N. and Levitin L.B.,* The maximum speed of dynamical evolution," **Physica** D, 1998, Vol. D120, No 1, pp. 188 -195.

61. *Parker S. and Plenio MB.,* "Efficient factorization with a single pure qubit and *log N* mixed qubits," **Physical Review Letters**, 2000, Vol. 85, No 14, pp. 3049- 3052; and "Entanglement simulations of Shor's algorithm," Journal of Modern Optics, 2002, Vol. 49, No 8, pp. 1325 - 1353; also available in: **Quantum Physics Archive** http:// arxiv.org/abs/**arXiv**: *quant-ph/0102136,* 27 Feb 2001, 17 p.

62. *Brunet O. and Jorrand Ph.,* "Dynamic quantum logic for quantum programs," **Quantum Physics Archive** http: //arxiv.org/abs/**arXiv**: *quant-ph/0311143v1,* 20 Nov 2003, 11 p.

63. *Childs A.M., Halesgrove H.L. and Nielsen M.A.,* "Lower bounds on the complexity of simulating quantum gates," Physical Review, 2003, Vol. A68, No 5, pp. 052311-1-052311-6.

64. *Kacewicz B.,* "Randomized and quantum algorithms yield a speed-up for initial-value problems," **Quantum Physics Archive** http://arxiv.org/abs/ **arXiv:** *quant-ph/0311148v1,* 25 Nov 2003, 12 p.

65. *Shenvi N., Brown K.R. and Whaley K.B.,* "Effects of random noise oracle on search algorithm complexity," Physical Review, 2003, Vol. A68, No 5, pp. 052313-1 -052313-11.

66. *Younes A., Rowe J. and Miller J.,* "A hybrid quantum search engine: A fast quantum algorithm for multiple matches," Quantum Physics Archive http://arxiv.org/abs/**arXiv**: *quant-ph/0311171v1,* 25 Nov 2003, 26 p.; "Quantum search algorithm with more reliable behavior using partial diffusion," Quantum Physics Archive http://arxiv.org/abs/ **arXiv**: *quant-ph/0312022v1,* 2 Dec 2003, 27 p.; and "Quantum searching via entanglement and partial diffusion," Quantum **Physics Archive** http://arxiv.org/abs/ **arXiv:** *quant-ph/0406207v1,* 27 Jun 2004, 18 p.

67. *Ramos R. V.,* "Numerical algorithms for use in quantum information," **Journal of Computational Physics,** 2003, Vo. 192, No 1, pp. 95-104.

68. *Tomita A. and Nakamura K.,* "Measured quantum Fourier transform of 1024 qubits on fiber optics," **Intern. J. of Quantum Information,** 2004, Vol. 2, No 1, pp. 119-132; also available in: **Quantum Physics Archive** http://arxiv.org/abs/**arXiv**: *quant-ph/0401100v1,* 19 Jan 2004, 15 p.

69. *Kamenev D.I. et all.,* "Modeling full adder in Ising spin quantum computer with 1000 qubits using quantum maps," Quantum Physics Archive http://arxiv.org/abs/**arXiv**: *quant-ph/0403085v1,* 10 Mar 2004, 20 p.

70. *Lukac M., Perkowski M., Goi H. and etc.,* "Evolutionary approach to quantum and reversible circuits synthesis," Artificial Intelligence Review, 2003, Vol. 20, pp. 361-417.

71. *Florio G. and Picca D.,* "Quantum implementation of elementary arithmetic operations," **Quantum Physics Archive** http://arxiv.org/abs/**arXiv:** *quant-ph/0403048v1,* 10 Mar. 2004, 11 p.; and "Implementation of analytic functions with quantum gates," **Quantum Physics Archive** http://arxiv.org/abs/ **arXiv:** *quant-ph/0407079v1,* 16 Jul. 2004, 35 p.

72. *Selinger P.*, "A brief survey of quantum programming languages", **Proc. FLOPS** 2004, *LNCS,* Vol. 2998, pp. 1 - 6.

73. *Omer B.*, "Classical concepts in quantum programming," **Quantum Physics Archive** http://arxiv.org/abs/**arXiv:** *quant phl0211100v1,* 18 Nov. 2002, 11 p.

74. *Sauer M. and Sieling D.*, "Quantum branching programs and space-bounded non-uniform quantum complexity," **Quantum Physics Archive** http://arxiv.org/abs/**arXiv**: *quant-ph/0403164v1,* 23 Mar. 2004, 51 p.

75. *Sabry A.,* "Modeling quantum computing in Haskell," **ACM SIGPLAN,** *Haskel Workshop'03,* August 28, 2003, Uppsala, Sweden, 2003, pp. 39-49.

76. *Giraldi G.A., Portugal R. and Thess R.N.,* "Genetic algorithms and quantum computation," LANL **Quantum Physics Archive** http://arxiv.org/abs/**arXiv**: *cs.NE/0403003v1,* 4 Mar. 2004, 27 p.

77. *Yang Sh and Jiao L.,* "The quantum evolutionary programming," **IEEE Proc. Fifth Intern. Conference on Computational Intelligence and Multimedia Applications** (ICCIMA'03), IEEE Computer Society, 2003, pp. 0-7695/1 - 0-7695/6.

78. *Han K-H. and Kim J-H.,* "Quantum-inspired evolutionary algorithm for a class of combinatorial optimization," **IEEE Trans. on Evolutionary** Computation, 2002, Vol. 6, No 6, pp. 580 - 593; and "Quantum-inspired evolutionary algorithms with a new termination criterion, $H_\varepsilon$ gate, and two-phase scheme," **IEEE Trans. on Evolutionary Computation,** 2004, Vol. 8, No 2, pp. 156-169.

79. *Zhang G., Jin W. and Hu L.,* "A novel parallel quantum genetic algorithm," **Proc. IEEE Conference,** China, 2003**,** pp. 693-697; and "Quantum evolutionary algorithm for multi-objective optimization problems," **Proc. of the**

**2003 Intern. Symposium on Intelligent Control**, Houston, Texas, October 5-8, 2003, pp. 703-708.

80. *Hosoya A., Carlini A. and Okano S.,* "Complementarity of entanglement and interference", **Quantum Physics Archive** http://arxiv.org/abs/arXiv: *quant-ph10405116v1,* 20 May 2004, 15 p.

81. *Wang S.-A., Lu Ch.-Y., Tsai I-M and Kuo S.-Y.,* "Modified Karnaugh map for quantum Boolean circuits construction," In: Proc. **IEEE Intern. Conference, 2003,** pp. 651-654.

82. *L Rechenberg,* "Evolutionstrategie: Optimizirung technischer systeme nach prinzipien der biologischen evolution," Stuttgard, Germany: Frommann-Holzog, 1973.

83. *H.-P. Schwefel,* "Evolution and optimum seeking," N.Y.: Wiley, 1995.

**Textbooks in quantum computing and quantum algorithms**

1. *Gruska J.,* "Quantum computing," *Advanced Topics in Computer Science Series,* McGraw-Hill Companies, London, 1999.

2. *Nielsen M.A. and Chuang I.L.*, **"Quantum computation and quantum** information," *Cambridge University Press,* Cambridge, England, 2000.

3. *Hirvensalo M.*, **"Quantum computing,"** *Natural Computing Series,* Springer-Verlag, Berlin, 2001.

4. *Hardy Y. and Steeb W.-H.,* **"Classical and quantum computing with C++ and Java Simulations**," Birkhauser Verlag, Basel, 2001.

5. *Hirota O.,* "**The foundation of quantum information science: Approach to quantum computer** *(in Japanese),"* Japan, 2002.

6. *Pittenberg A.O.,* "**An introduction to quantum computing and algorithms,"** *Progress in Computer Sciences and Applied Logic,* Vol. 19, Birkhauser, 1999.

7. *Brylinski F.K. and Chen G. (Eds),* **"Mathematics of quantum computation**," *Computational Mathematics Series,* CRC Press Co., 2002.

8. *Lo H.-K., Popescu S. and Spiller T. ( Eds),* **"Introduction to quantum computing and information,"** World Scientific Publ. Co., 1998.

9. *Berman G.P., Doolen G.D., Mainieri R. and Tsifrinovich V.I.,* "**Introduction to quantum computers**," World Scientific Publ. Co., 1999.

10. *Bouwmeester D., Ekert A. and Zeilinger A. (Eds),* **"The physics of quantum information:** *Quantum cryptography, quantum teleportation, quantum computation,"* Springer-Verlag, Berlin, N.Y., 2001.

11. *Hogg T., Mochon C., Polak W. and Rieffel E.*, "Tools for quantum algorithms", **International Journal of Modern Physics,** 1999, Vol. C10, No 7, pp. 1347 - 1361.

**Claims**

1. A method of performing a quantum algorithm, comprising the steps of:

carrying out a superposition operation (2011) defined by a superposition operator, over initial vectors generating superposition vectors,
carrying out an entanglement operation (2012) defined by an entanglement operator, over a combination *(Global Information Feed-back)* of said superposition vectors and interference vectors generating entanglement vectors (R.S.),
generating third vectors (u$^*$) in function of said entanglement vectors (R.S.) and of said interference vectors,
carrying out an interference operation (2014) defined by an interference operator, over said third vectors (u$^*$)

generating said interference vectors,
carrying out a measurement operation (2016) over said interference vectors, and eventually repeating the entanglement operation as far as an algorithm termination condition is met, in which case generating a result (2017) of the quantum algorithm,
**characterized in that** it comprises the step of
determining at least one item of the group composed of said superposition operator (2011), said entanglement operator (2012), said interference operator (2014) and said third vectors for performing selection, crossover and mutation operations according to a genetic algorithm for optimizing a fitness function (2005; 2015).

2. The method of claim 1, wherein said third vectors ($u^*$) is generated by performing the following process steps:

generating fourth vectors ($\varepsilon$) by combining said interference vectors with said entanglement vectors (R.S.);
generating said third vectors ($u^*$) by processing said fourth vectors ($\varepsilon$) with a genetic algorithm for minimizing said fitness function (2015).

3. The method of claim 2, wherein said fitness function (2015) is the difference between the Shannon's entropy ($S^{Sh}$) associated to said third vectors ($u^*$) and the Von Neumann's entropy ($S^{VN}$) associated with said interference vectors.

4. The method of claim 1, wherein said superposition (2011), entanglement (2012) and interference (2014) operators are determined according to a first genetic algorithm (Level I) for optimizing a first fitness function (2005), while said third vectors ($u^*$) are generated with a genetic algorithm for minimizing a second fitness function (2015).

5. The method of claim 2, wherein said fourth vectors ($\varepsilon$) are generated by subtracting interference vectors from entanglement vectors (R.S.).

6. The method of claim 1, wherein said interference operation is the Quantum Fast Fourier Transform.

7. The method of claim 1, comprising the step of modifying according to said genetic algorithm (Level I) at least one of said superposition (2011), entanglement (2012) and interference (2014) operators after the corresponding operation has been performed.

8. A method of performing a quantum genetic search algorithm, comprising the operations of:

choosing at least a fitness function (2005);
defining properties of said fitness function with a look-up table (2009);
generating an initial set of vectors by coding (2010) said properties of the fitness function (2005) with vectors;
performing a quantum algorithm according to the method of claim 6 over said set of initial vectors.

9. A method for controlling a process (1001) by a control signal ($u^*$) for producing a corresponding output signal, comprising:

generating said control signal ($u^*$) for said process in function of the difference between a reference signal (R.S.) and the output signal of said process, and in function of a parameter adjustment signal,
generating a control information signal with a quantum soft computing optimization algorithm (103) over said output signal,
generating said parameter setting signal according to a fuzzy control algorithm (1005) in function of said control information signal and said difference ($\varepsilon$) between the reference signal and said output signal,
**characterized in that**
said quantum soft computing optimization algorithm comprises performing a quantum algorithm according to the method of claim 1 for generating said control information signal.

10. The method of claim 9, comprising the step of supplying said process also with a random signal.

11. A hardware quantum gate for performing a quantum algorithm (2001), comprising:

a superposition subsystem (2011) for carrying out a superposition operation defined by a superposition operator, over initial signals generating superposition signals,
an entanglement subsystem (2012) for carrying out an entanglement operation defined by an entanglement operator, over a combination of said superposition signals and interference signals of the hardware quantum gate, generating corresponding entanglement signals (R.S.),

a circuit for generating third signals (u*) in function of said entanglement signals (R.S.) and of interference signals, an interference subsystem (2014) for carrying out an interference operation defined by an interference operator, over said third signals (u*) generating said interference signals,

a measurement subsystem (2016) for carrying out a measurement operation over said interference signals according to said quantum algorithm, and for repeating the entanglement operation (2012) as far as an algorithm termination condition is met, in which case generating an output signal (2017),

**characterized in that** it comprises

a fifth subsystem (2002; 2013) for determining at least one item of the group composed of said superposition operator (2011), said entanglement operator (2012), said interference operator (2014) and said third signals (u*) for performing selection, crossover and mutation operations according to a genetic algorithm for minimizing a fitness function (2005; 2015).

12. The hardware quantum gate of claim 11, wherein said fifth subsystem (2013) is a wise controller input with signals ($\varepsilon$) representing the difference between said entanglement signals (R.S.) and said interference signals, generating said third signals ($u^*$) with a genetic algorithm for minimizing said fitness function (2015).

13. The hardware quantum gate of claim 11, wherein said fifth subsystem (2002) modifies according to said genetic algorithm at least one of said superposition (2011), entanglement (2012) and interference (2014) operators after the corresponding operation has been performed.

14. The hardware quantum gate of claim 11, wherein said interference subsystem (2014) performs a Quantum Fast Fourier Transform.

15. A hardware device for performing a quantum genetic search algorithm (2000), comprising:

a subsystem (2005) for choosing at least a fitness function,
a look-up table (2009) for defining properties of said fitness function;
a subsystem (2010) generating initial signals by coding said properties of the fitness function;
a hardware quantum gate of claim 14 input with said initial signals and generating a result signal corresponding to a result of the quantum genetic search algorithm.

16. A control device of a process (1001) driven by a control signal ($u^*$) for producing a corresponding output, comprising:

a classical controller (1006) generating said control signal ($u^*$) for said process (1001) in function of a signal ($\varepsilon$) representing the difference between a reference signal (R.S.) and an output signal of said process (1001), and in function of a parameter adjustment signal,
a quantum soft computing optimizer generating a control information signal with a quantum soft computing optimization algorithm (based on quantum genetic search algorithm : QGSA 1003) over said output signal,
a fuzzy controller (FC) input with said control information signal and said signal ($\varepsilon$) representing the difference between the reference signal (R.S.) and said output signal, generating said parameter adjustment signal according to a fuzzy control algorithm,
**characterized in that**
said quantum soft computing optimizer comprises

a hardware device of claim 15 input with said output signal and performing a quantum genetic search algorithm over said output signal, generating a teaching signal for a neural network (NN),
a neural network (NN) input with said teaching signal, generating said control information signal.

17. The method of claim 1, wherein said superposition or interference operation defined by a certain superposition or interference matrix, respectively, of a quantum algorithm over a first set of vectors for generating a corresponding second set of vectors, are carried out through the following steps:

for each vector of said first set, applying a Walsh-Hadamard operator (H) or an identity operator (I) to pairs of qubits of said vector, generating a corresponding pair of qubits;
generating a vector of said second set by combining said generated pairs of qubits of the vector of said second set according to the tensor product rule for obtaining said superposition (2011) or interference (2014) matrix in function of said Walsh-Hadamard (H) and identity (I) operators.

**18.** The hardware quantum gate of claim 12, wherein at least one of said superposition and interference subsystems for performing a superposition or interference operation defined by a certain superposition (2011) or interference (2014) matrix, respectively, of a quantum algorithm over input signals representing first vectors for generating output signals of corresponding second vectors, comprises

at least a Walsh-Hadamard gate and an identity gate for performing the Walsh-Hadamard (H) and the identity (I) operators, respectively, over signals representing a pair of qubits of said first vector, generating third signals corresponding to a respective pair of qubits of said second vector;
said gates being interconnected in order to combine said third signals corresponding to a respective pair of qubits, for obtaining signals representing said second vector according to a tensor product rule for obtaining said superposition (2011) or interference (2014) matrices in function of said Walsh-Hadamard (H) and identity (I) operators.

**19.** A method for simulating a quantum algorithm with a computer, comprising the steps of:

preliminarily identifying operations common to all known quantum algorithms and operations specific of the different quantum algorithms;
realizing and installing on said computer software routines for performing superposition and interference operations according to the method of claim 17;
realizing and installing on said computer a software routine for performing measurement operations over vectors generated by said software routine for performing an interference operation;
realizing and installing on said computer a software routine for calculating entropy of a superposition vector generated by said software routine for performing a superposition operation;
realizing and installing on said computer a software routine for performing specific operations of said quantum algorithm;
realizing and installing on said computer a control routine interacting with the above specified routines for simulating a certain quantum algorithm.

**20.** The hardware quantum gate of claim 12, wherein said superposition and interference subsystems are as defined in claim 18, and comprises further a digital subsystem input with said interference signals, outputting a signal representing a result of the quantum algorithm when a certain termination condition is met or directing said interference signals in input to said entanglement subsystem as far as said termination condition is met.

**21.** A method of designing a hardware quantum gate of claim 11, comprising the steps of:

determining the superposition, entanglement and interference operators of said quantum algorithm;
decomposing the superposition and interference operators as a tensor product of a plurality of Walsh-Hadamard (H) or identity (I) operators acting on pairs of qubits;
realizing a hardware subsystem according to claim 18 for carrying out a superposition operation over initial signals generating said superposition signals;
realizing a hardware subsystem for carrying out an entanglement operation defined by an entanglement operator, over a combination of said superposition signals and interference signals of the hardware quantum gate, generating corresponding entanglement signals,
realizing a hardware subsystem according to claim 18 for carrying out an interference operation defined by an interference operator, over said third signals ($u^*$) generating said interference signals;
realizing a digital subsystem input with said signals representing a set of interference vectors, outputting a signal representing a result of the quantum algorithm when a certain termination condition is met or directing said signals representing interference vectors in input to said entanglement subsystem as far as said termination condition is met.

**22.** A method of performing a genetic algorithm, comprising the operations of:

choosing a certain fitness function to be maximized or minimized,
defining a condition for stopping the algorithm when it is verified,
choosing an initial set of bit-strings,
iteratively performing the following operations:

calculating the fitness function for each bit-string of the current set;
checking whether said stopping condition is verified and in that case stopping the algorithm, otherwise carrying out selection, crossover and mutation operations over a subset of the current set of bit-strings generating a new set of bit-strings to be processed,

**characterized in that** the algorithm further comprises the following steps:

encoding each bit-string of the current set with a corresponding tensor product of qubits;
performing said selection, crossover and mutation operations by means of superposition, entanglement and interference operators of the quantum algorithm of claim 1;
the operation of calculating the fitness function for each bit-string is performed by carrying out a measurement operation according to said quantum algorithm; and
said stopping condition being defined by a corresponding condition for terminating the quantum algorithm.

23. The method of claim 22, wherein each of said bit-strings is encoded in a corresponding tensor product of qubits by

encoding each bit of a bit-string with a vector representing a superposition of two qubits;
generating said corresponding tensor product of qubits by calculating the tensor product of all said vectors encoding the bits of said bit-string.

24. The method of claim 23, wherein a bit 0 is encoded with a vector corresponding to $\frac{1}{\sqrt{2}}\left(\left|0\right\rangle+\left|1\right\rangle\right)$ and a bit 1 with a vector corresponding to $\frac{1}{\sqrt{2}}\left(\left|0\right\rangle-\left|1\right\rangle\right)$.

25. The method of claim 24, wherein said mutation operation is carried out through the steps of:

selecting one of said tensor product of qubits;
randomly selecting one of said qubit of said tensor product of qubits; and
exchanging between them the pair of probability amplitude of the chosen qubit.

26. The method of claim 22, wherein said crossover operation is carried out through the steps of:

randomly selecting two bit-strings of said set;
exchanging between them their fitness functions;
updating said two bit-strings according to their new fitness functions at least once;
exchanging back their fitness functions.

27. The method of claim 22, comprising the steps of:

encoding each bit-string with a tensor product ($|\Psi\rangle$) of a first quantum individual ($|x\rangle$) and a null qubit ($|0\rangle$);
applying unitary operators to said tensor product generating an initial population of qubits for said genetic algorithm;
applying a unitary operator ($U_f$) encoding said fitness function to said initial population, generating set of tensor products between one of said quantum individual and a second quantum individual that encodes a corresponding value of said fitness function;
performing said measurement operation for calculating said value of the fitness function; and
selecting a subset of said tensor products depending on the corresponding values of said fitness function.

28. A computer program loadable into a computer, comprising a software code for performing the steps of the method of one of claims 1 to 10, 17, 19, 21 to 27 when said code is run on said computer.

29. The quantum hardware gate of claim 12, for running quantum algorithms using a certain binary function ($f$) defined on a space having a basis of vectors of $n$ of qubits and encoded into a unitary matrix ($U_F$), composed of a superposition subsystem carrying out a superposition operation over components of input vectors for generating components of linear superposition vectors referred on a second basis of vectors of n+1 qubits, an entanglement subsystem carrying out an entanglement operation over components of said linear superposition vectors for generating components of entanglement vectors, and an interference subsystem carrying out an interference operation over components of said entanglement vectors for generating components of output vectors, said entanglement subsystem comprising

circuit means input with signals ($v_1$, ..., $v_m$) representing components of a linear superposition vector that are referred to vectors of said second basis having the first n qubits in common, outputting, for each superposition vector ($v_1$, ..., $v_m$), corresponding signals representing components of an entanglement vector ($v'_1$, ..., $v'_m$), **characterized in that** said circuit means comprise

a PROM memory the cells of which are organized in a square matrix having a number of rows equal to the number of components of a superposition vector, only the cells of said PROM, corresponding to non-zero components of the unitary matrix $(U_F)$, being programmed, said PROM generating said signals representing components of an entanglement vector ($V'_1$, ..., $V'_m$) by leaving unchanged or by flipping pairs of signals ($V_1$, ..., $v_m$) representing components of a linear superposition vector.

**30.** A method of performing a superposition or interference operation defined by a certain superposition or interference matrix, respectively, of a quantum algorithm over a first set of vectors for generating a corresponding second set of vectors, comprising the steps of:

for each vector of said first set, applying a Walsh-Hadamard operator (H) or an identity operator (I) to pairs of qubits of said vector, generating a corresponding pair of qubits;
generating a vector of said second set by combining said generated pairs of qubits of the vector of said second set according to the tensor product rule for obtaining said superposition (2011) or interference (2014) matrix in function of said Walsh-Hadamard (H) and identity (I) operators.

**31.** A hardware subsystem of a quantum gate, for performing a superposition or interference operation defined by a certain superposition (2011) or interference (2014) matrix, respectively, of a quantum algorithm over input signals representing a first set of vectors for generating output signals of a corresponding second set of vectors, comprising

at least a Walsh-Hadamard gate and an identity gate for performing the Walsh-Hadamard (H) and the identity (I) operators, respectively, over signals representing a pair of qubits of a vector of said first set, generating third signals corresponding to a respective pair of qubits of a vector of said second set;
said gates being interconnected in order to combine said third signals corresponding to a respective pair of qubits, for obtaining signals representing a vector of said second set according to a tensor product rule for obtaining said superposition (2011) or interference (2014) matrices in function of said Walsh-Hadamard (H) and identity (I) operators.

**32.** A method for simulating quantum algorithms with a computer, comprising the steps of:

preliminarily identifying operations common to all known quantum algorithms and operations specific of the different quantum algorithms;
realizing and installing on said computer software routines for performing superposition and interference operations according to the method of claim 30;
realizing and installing on said computer a software routine for performing measurement operations over vectors generated by said software routine for performing an interference operation;
realizing and installing on said computer a software routine for calculating entropy of a superposition vector generated by said software routine for performing a superposition operation;
realizing and installing on said computer a software routine for performing specific operations of said quantum algorithm;
realizing and installing on said computer a control routine interacting with the above specified routines for simulating a certain quantum algorithm.

**33.** A hardware quantum gate, comprising:

a superposition subsystem of claim 31 for performing a superposition operation of a quantum algorithm over signals representing an initial set of vectors, outputting signals representing a superposition set of vectors;
an entanglement subsystem for performing an entanglement operation over said signals representing a superposition set of vectors, generating signals representing a set of entanglement vectors;
an interference subsystem of claim 31 for performing an interference operation of a quantum algorithm over said signals representing a set of entanglement vectors, outputting signals representing a set of interference vectors;

a digital subsystem input with said signals representing a set of interference vectors, outputting a signal representing a result of the quantum algorithm when a certain termination condition is met or directing said signals representing a set of interference vectors in input to said entanglement subsystem as far as said termination condition is met.

**34.** A method of designing a hardware quantum gate for performing a quantum algorithm, comprising the steps of:

determining the superposition, entanglement and interference operators of said quantum algorithm;

decomposing the superposition and interference operators as a tensor product of a plurality of Walsh-Hadamard (H) or identity (I) operators acting on pairs of qubits;

realizing a hardware subsystem according to claim 31 for carrying out a superposition operation over an initial set of signals generating a set of superposition signals;

realizing a hardware subsystem for carrying out an entanglement operation defined by an entanglement operator, over a combination of said superposition signals and output signals of the hardware quantum gate, generating corresponding entanglement signals,

realizing a hardware subsystem according to claim 31 for carrying out an interference operation defined by an interference operator, over a third set of signals ($u^*$) generating said output signals;

realizing a digital subsystem input with said signals representing a set of interference vectors, outputting a signal representing a result of the quantum algorithm when a certain termination condition is met or directing said signals representing a set of interference vectors in input to said entanglement subsystem as far as said termination condition is met.

**35.** A quantum gate for running quantum algorithms using a certain binary function ($f$) defined on a space having a basis of vectors of n of qubits and encoded into a unitary matrix ($U_F$), composed of a superposition subsystem carrying out a superposition operation over components of input vectors for generating components of linear superposition vectors referred on a second basis of vectors of $n+1$ qubits, an entanglement subsystem carrying out an entanglement operation over components of said linear superposition vectors for generating components of entanglement vectors, and an interference subsystem carrying out an interference operation over components of said entanglement vectors for generating components of output vectors, said entanglement subsystem comprising

circuit means input with signals ($v_1, ..., v_m$) representing components of a linear superposition vector that are referred to vectors of said second basis having the first n qubits in common, outputting, for each superposition vector ($v_1, ..., v_m$), corresponding signals representing components of an entanglement vector ($v'_1, ..., v'_m$),

**characterized in that** said circuit means comprise

a PROM memory the cells of which are organized in a square matrix having a number of rows equal to the number of components of a superposition vector, only the cells of said PROM, corresponding to non-zero components of the unitary matrix ($U_F$), being programmed, said PROM generating said signals representing components of an entanglement vector ($v'_1, ..., v'_m$) by leaving unchanged or by flipping pairs of signals ($v_1, ..., v_m$) representing components of a linear superposition vector.

**36.** A method of performing a genetic algorithm, comprising the operations of:

choosing an initial population ($\left\{\psi_j^{(0)}(x)\right\}$) consisting of a pre-established number ($N$) of wave functions;

choosing a certain fitness function ($E\left[\psi_j^{(i)}\right]$) to be maximized or minimized;

defining a condition for stopping the algorithm when it is verified;
iteratively performing the following operations:

a) calculating the fitness function of all said wave functions;
b) checking whether said stopping condition is verified and in that case stopping the algorithm, otherwise creating a new population of wave functions by carrying out selection, crossover and mutation operations over a subset of the current population of wave functions and restarting from point a).

**37.** The method of claim 36, wherein said selection operation is performed by using as fitness function the following expectation function:

$$E[\psi] = \frac{\langle \psi | \hat{H} | \psi \rangle}{\langle \psi | \psi \rangle}$$

wherein $\psi(x)$ is a wave function of said initial population and $\hat{H}$ is a Hamiltonian appropriate to perform a desired selection operation.

**38.** The method of claim 36, wherein said wave functions are Gaussian-like functions.

**39.** The method of claim 36, wherein
said crossover operator is defined by the following equations:

$$\psi_1^{(n+1)}(x) = \psi_1^{(n)}(x) \cdot St(x) + \psi_2^{(n)}(x) \cdot (1 - St(x))$$

$$\psi_2^{(n+1)}(x) = \psi_2^{(n)}(x) \cdot St(x) + \psi_1^{(n)}(x) \cdot (1 - St(x))$$

where $St(x)$ is a smooth step function, $\psi_j^{(n)}(x)$ is a generic wave function at a step n of the genetic algorithm and

$\psi_j^{(n+1)}(x)$ is a generic wave function at a step n+1;
said mutation operator is defined by the following equation:

$$\psi_1^{(n+1)}(x) = \psi_1^{(n)}(x) + \psi_r(x)$$

wherein $\psi_r(x)$ is a random wave function;
said method comprising the step of normalizing every newly generated wave function.

**FIG. 1**

FIG. 2

**FIG. 3**

EP 1 672 569 A1

**FIG. 4**

EP 1 672 569 A1

```
┌──────────────┐                      ┌──────────────────┐
│ Common       │─────────────────────▶│ Algorithm –      │
│ functions    │                      │ specific functions│
└──────────────┘                      └──────────────────┘
        │                                      │
        ├─▶ Superposition building blocks      ├─▶ Entanglement encoders
        │                                      │
        ├─▶ Interference operators             ├─▶ Problem transformers
        │         │                            │
        │         ├─ Diffusion                 ├─▶ Result interpreters
        │         │                            │
        │         └─ QFT                        └─▶ Algorithm execution scripts
        │                                              │
        ├─▶ Bra-Ket functions                          ├─▶ Matlab slide show
        │                                              │         │
        ├─▶ Measurement operators                      │         └─ Deutsch
        │                                              │
        ├─▶ Entropy calculations                       └─▶ Matlab console program
        │
        └─▶ Visualization functions
                 │
                 ├─ State visualizations
                 │
                 └─ Operator visualizations
```

Quantum control algorithms

Benchmarks of QA:
- Deutsch
- Deutsch - Jozsa
- Grover
- Shor

FIG. 5

Fig. 6

SOSA:

### String of Size L=n

| 0 | 1 | 1 | 0 | 0 | 1 | . . . | 1 |
|---|---|---|---|---|---|-------|---|

QGSA: ### String of Size $L=2^n$

$$\frac{1}{\sqrt{2}}|0\rangle+|1\rangle \otimes \frac{1}{\sqrt{2}}|0\rangle-|1\rangle \otimes \frac{1}{\sqrt{2}}|0\rangle-|1\rangle \otimes \frac{1}{\sqrt{2}}|0\rangle+|1\rangle \otimes \frac{1}{\sqrt{2}}|0\rangle+|1\rangle \otimes \frac{1}{\sqrt{2}}|0\rangle-|1\rangle \otimes \quad \cdots \quad \otimes \frac{1}{\sqrt{2}}|0\rangle-|1\rangle$$

Quantum Massive Parallel Computing from Different Solution Spaces

**FIG. 7**

Cut-point

Parent 1 $\frac{1}{\sqrt{2}}|0\rangle+|1\rangle \otimes \frac{1}{\sqrt{2}}|0\rangle-|1\rangle \otimes \frac{1}{\sqrt{2}}|0\rangle-|1\rangle \otimes \frac{1}{\sqrt{2}}|0\rangle+|1\rangle \otimes \frac{1}{\sqrt{2}}|0\rangle+|1\rangle \otimes \frac{1}{\sqrt{2}}|0\rangle-|1\rangle \otimes \quad \cdots \quad \otimes \frac{1}{\sqrt{2}}|0\rangle-|1\rangle$

Parent 2 $\frac{1}{\sqrt{2}}|0\rangle+|1\rangle \otimes \frac{1}{\sqrt{2}}|0\rangle-|1\rangle \otimes \frac{1}{\sqrt{2}}|0\rangle+|1\rangle \otimes \frac{1}{\sqrt{2}}|0\rangle-|1\rangle \otimes \frac{1}{\sqrt{2}}|0\rangle-|1\rangle \otimes \frac{1}{\sqrt{2}}|0\rangle+|1\rangle \otimes \quad \cdots \quad \otimes \frac{1}{\sqrt{2}}|0\rangle+|1\rangle$

Offspring 1 $\frac{1}{\sqrt{2}}|0\rangle+|1\rangle \otimes \frac{1}{\sqrt{2}}|0\rangle-|1\rangle \otimes \frac{1}{\sqrt{2}}|0\rangle-|1\rangle \otimes \frac{1}{\sqrt{2}}|0\rangle+|1\rangle \otimes \frac{1}{\sqrt{2}}|0\rangle-|1\rangle \otimes \frac{1}{\sqrt{2}}|0\rangle+|1\rangle \otimes \quad \cdots \quad \otimes \frac{1}{\sqrt{2}}|0\rangle+|1\rangle$

Offspring 2 $\frac{1}{\sqrt{2}}|0\rangle+|1\rangle \otimes \frac{1}{\sqrt{2}}|0\rangle-|1\rangle \otimes \frac{1}{\sqrt{2}}|0\rangle+|1\rangle \otimes \frac{1}{\sqrt{2}}|0\rangle-|1\rangle \otimes \frac{1}{\sqrt{2}}|0\rangle+|1\rangle \otimes \frac{1}{\sqrt{2}}|0\rangle-|1\rangle \otimes \quad \cdots \quad \otimes \frac{1}{\sqrt{2}}|0\rangle-|1\rangle$

**FIG. 8**

select a position at random

Parent 1 $\quad \frac{1}{\sqrt{2}}(|0\rangle + |1\rangle) \otimes \frac{1}{\sqrt{2}}(|0\rangle - |1\rangle) \otimes \frac{1}{\sqrt{2}}(|0\rangle - |1\rangle) \otimes \frac{1}{\sqrt{2}}(|0\rangle + |1\rangle) \otimes \frac{1}{\sqrt{2}}(|0\rangle + |1\rangle) \otimes \frac{1}{\sqrt{2}}(|0\rangle - |1\rangle) \otimes \quad \cdots \quad \otimes \frac{1}{\sqrt{2}}(|0\rangle - |1\rangle)$

Offspring 1 $\quad \frac{1}{\sqrt{2}}(|0\rangle + |1\rangle) \otimes \frac{1}{\sqrt{2}}(|0\rangle - |1\rangle) \otimes \frac{1}{\sqrt{2}}(|0\rangle - |1\rangle) \otimes \frac{1}{\sqrt{2}}(|0\rangle - |1\rangle) \otimes \frac{1}{\sqrt{2}}(|0\rangle + |1\rangle) \otimes \frac{1}{\sqrt{2}}(|0\rangle - |1\rangle) \otimes \quad \cdots \quad \otimes \frac{1}{\sqrt{2}}(|0\rangle - |1\rangle)$

replace with a qubit at random

FIG. 9

74

**INPUT**

$f$

$\xrightarrow{\hspace{2cm}}$

**Encoder**

$f \downarrow F$ ; $F \downarrow U_F$

71

$\xrightarrow{\hspace{1cm}}$

$U_F$

**Quantum Block**

**OUTPUT**

76

Answer

$\xleftarrow{\hspace{1cm}}$

**Decoder**

75

$\xleftarrow{\hspace{1cm}}$

Basis

Vectors

Binary strings

level

$\xleftarrow{\cdots\cdots}$

Map Table and

Interpretation Spaces

$\xleftarrow{\cdots\cdots}$

Complex

Hilbert space

**FIG. 10**

FIG. 11

INPUT

2201

2202

2203

2204

2205

OUTPUT

2206

2207

FIG. 12

FIG. 13

$h_{11}=1$   1   1

$h_{12}=1$   0   0

$[1 \quad 1]^T$

1   $h_{21}=1$   1

0   $|h_{22}|=1$   0

$|0\!>$   $|0\!>$

**FIG. 14**

$h_{11}=1$   0   0

$h_{12}=1$   1   1

$[1 \quad -1]^T$

0   $h_{21}=1$   0

1   $|h_{22}|=1$   1

$|1\!>$   $|1\!>$

**FIG. 15**

$\otimes$

$$= \begin{bmatrix} 1 \\ 0 \\ 1 \\ 0 \end{bmatrix}$$

**FIG. 16**

FIG. 17

FIG. 18

FIG. 19

$$f\left(x \in \{0,1\}^{n}\right) = y \in \{0,1\}^{1}$$

Algorithm

Function $f$ is constant

Function $f$ is balanced

*Input*

*Output*

FIG. 20

| N | Definition of design step |
|---|---|
| 0 | **Step 0: Encoder**<br>Step 0.1: Injective function F building<br>Step 0.2: Preparation of map table for entanglement operator $U_f$ |
| 1 | **Step 1: Preparation of quantum operators**<br>Step 1.1: Preparation of superposition operator<br>Step 1.2: Preparation of entanglement operator using information  from step 0.2<br>Step 1.3: Preparation of interference operator<br>Step 1.4: Quantum gate assembly |
| 2 | **Step 2: Algorithm execution**<br>Step 2.1: Application of superposition operator<br>Step 2.2: Application of entanglement operator<br>Step 2.3: Application of interference operator<br>Step 2.4: Measurement and interpretation of the output |

**FIG. 21**

FIG. 22

EP 1 672 569 A1

FIG. 23

84

$$\mathbf{H \cdot I \cdot H}$$

$$\mathbf{H \cdot I \cdot H}$$

$$\mathbf{I \cdot C \cdot H}$$

INPUT  STEP  OUTPUT

FIG. 24

EP 1 672 569 A1

FIG. 25

FIG. 26

EP 1 672 569 A1

n

$|0\rangle$             $|0\rangle$

$\vdots$

$|0\rangle$             $|0\rangle$

$|1\rangle$   **C H**   $\dfrac{|0\rangle - |1\rangle}{2^{1/2}}$

INPUT       STEP       OUTPUT

FIG. 27

FIG. 28

n

|0>

|0>

|1>

$^{n+1}H$

$U_F$

$^{n}H \otimes I$

bit

bit

bit

INPUT

STEP 1

STEP 2

STEP 3

OUTPUT

**FIG. 29**

EP 1 672 569 A1

INPUT

n

$|0>$ → bit

$\vdots$

$|0>$ → bit

$|1>$ → bit

STEP

$$(^{n}H \otimes I) \cdot U_{F} \cdot (^{n+1}H)$$

OUTPUT

FIG. 30

**FIG. 31A**

**FIG. 31B**

**FIG. 31C**

**FIG. 31D**

$$f\left(x \in \{0,1\}^3\right) = 0$$

$$f\left(x \in \{0,1\}^3\right) = 1$$

FIG. 32

$$f\left(x \in \{0,1\}^3\right) = 1\big|_{x>011}\, 0\big|_{x\leq 011}$$

$$f\left(x \in \{0,1\}^3\right) = 1\big|_{x=\{010,011,110,111\}}\, 0\big|_{x=\{000,001,100,101\}}$$

FIG. 33

Fig. 34

$$f\left(x \in \{0,1\}^3\right) = 0$$

$$U_F\left[\tau(s)\right] = \tau\left[F(s)\right]$$

Fig. 35

EP 1 672 569 A1

$$f\left(x \in \{0,1\}^3\right) = 1$$

$$U_F\left[\tau(s)\right] = \tau\left[F(s)\right]$$

Fig. 36

$$U_F\big[\tau(s)\big]=\tau\big[F(s)\big]$$

$$f\big(x\in\{0,1\}^3\big)=1\big|_{x>011}0\big|_{x\leq011}$$

**Fig. 37**

EP 1 672 569 A1

$$U_F\left[\tau(s)\right] = \tau\left[F(s)\right]$$

$$f\left(x \in \{0,1\}^3\right) = \begin{array}{l} 1|_{x=\{010,011,110,111\}} \\ 0|_{x=\{000,001,100,101\}} \end{array}$$

Fig. 38

Fig. 39

$$^{n+1}H = \overset{n+1}{\underset{1}{\otimes}} \frac{1}{\sqrt{2}} \begin{pmatrix} 1 & 1 \\ 1 & -1 \end{pmatrix} = {}^nH \otimes H = \left[ \overset{n}{\underset{1}{\otimes}} \frac{1}{\sqrt{2}} \begin{pmatrix} 1 & 1 \\ 1 & -1 \end{pmatrix} \right] \otimes \frac{1}{\sqrt{2}} \begin{pmatrix} 1 & 1 \\ 1 & -1 \end{pmatrix} \qquad {}^nH \otimes I = \left[ \overset{n}{\underset{1}{\otimes}} \frac{1}{\sqrt{2}} \begin{pmatrix} 1 & 1 \\ 1 & -1 \end{pmatrix} \right] \otimes \begin{pmatrix} 1 & 0 \\ 0 & 1 \end{pmatrix}$$

Superposition

**Fig. 40**

Interference

EP 1 672 569 A1

$$f\left(x \in \{0,1\}^3\right) = 0$$

$$f\left(x \in \{0,1\}^3\right) = 1$$

$$f\left(x \in \{0,1\}^3\right) = 1\big|_{x>011}\ 0\big|_{x\leq011}$$

$$f\left(x \in \{0,1\}^3\right) = \begin{array}{l} 1\big|_{x=\{010,011,110,111\}} \\ 0\big|_{x=\{000,001,100,101\}} \end{array}$$

FIG. 41

$$f\left(x \in \{0,1\}^3\right) = 0$$

$$f\left(x \in \{0,1\}^3\right) = 1$$

FIG. 42

$$f\left(x \in \{0,1\}^3\right) = 1\big|_{x>011} \ 0\big|_{x\leq011}$$

$$f\left(x \in \{0,1\}^3\right) = 1\big|_{x=\{010,011,110,111\}} \ 0\big|_{x=\{000,001,100,101\}}$$

FIG. 43

Answer

Measured basis vector

Probability

Function

Constant

Balanced

$|\,0\cdots00>$

$|\,0\cdots01>$

$|\,0\ldots10\,>$
...
$|\,1\ldots11\,>$

$|\,0\cdots00>$

$|\,0\cdots01>$

$|\,0\ldots10\,>$
...
$|\,1\ldots11\,>$

$P=\dfrac{1}{2}$

$P=0$

$P>0$

**Fig. 44**

EP 1 672 569 A1

FIG. 45

Shor's problem is transferred into the following standard quantum problem:

| Input | $f: \{0,1\}^n \rightarrow \{0,1\}^n$ with period $r$ |
|---|---|
| **Problem** | Find $r$ |

Property of function $f$:

$$f\left(x \in \{0,1\}^n\right) = y \in \{0,1\}^n$$

Quantum Factoring Algorithm

Probabilistic Solution: Period $r$

Input → Random Searching → Output

Fig. 46

EP 1 672 569 A1

| N | Description of the step |
|---|---|
| 0 | **Step 0: Encoder**<br>Step 0.1: Injective function F building<br>Step 0.2: Preparation of map table for entanglement operator UF |
| 1 | **Step 1: Preparation of quantum operators**<br>Step 1.1: Preparation of superposition operator<br>Step 1.2: Preparation of entanglement operator using information from step 0.2<br>Step 1.3: Preparation of interference operator<br>Step 1.4: Quantum gate assembly |
| 2 | **Step 2: Algorithm execution**<br>Step 2.1: Application of superposition operator<br>Step 2.2: Application of entanglement operator<br>Step 2.3: Application of interference operator<br>Step 2.4: Repeat steps 2.2 and 2.3 **h** times<br>Step 2.5: Measurement and interpretation of the output |

FIG. 47

Fig. 48

$$H = \frac{1}{\sqrt{2}}\begin{pmatrix} 1 & 1 \\ 1 & -1 \end{pmatrix}$$

$$I = \begin{pmatrix} 1 & 0 \\ 0 & 1 \end{pmatrix}$$

$$^{n}H \otimes {^{n}I}$$

**Fig. 49**

EP 1 672 569 A1

$$U_F\big[\tau(s)\big] = \tau\big[F(s)\big]$$

**Fig. 50**

Fig. 51

Interference operator $QFT_2 \otimes^2 I$
Amplitude

Interference operator $QFT_2 \otimes^2 I$
Phase, degree

**Fig. 52**

Quantum Gate G$h=1$

Quantum Gate G$h=1$

$$G = \underbrace{QFT_2 \otimes^2 I}_{\text{Interference}} \cdot \quad U_F \quad \cdot \underbrace{{}^2 H \otimes {}^2 I}_{\text{Superposition}}$$

$$\underbrace{\phantom{QFT_2 \otimes^2 I \cdot U_F \cdot {}^2 H \otimes {}^2 I}}_{\substack{\text{Entanglement} \\ h = 1\text{times}}}$$

**Fig. 53**

EP 1 672 569 A1

$$G = \underbrace{QFT_2 \otimes^2 I}_{\text{Interference}} \cdot \quad U_F \quad \cdot \underbrace{{}^2H \otimes^2 I}_{\text{Superposition}}$$

$$\underbrace{\phantom{QFT_2 \otimes^2 I \cdot U_F \cdot {}^2H \otimes^2 I}}_{\text{Entanglement}}$$

$$h = 1\text{times}$$

**Fig. 54**

Quantum Gate G, $\hbar=2$

Quantum Gate G, $\hbar=2$

$$G = \underbrace{\underbrace{QFT_2 \otimes^2 I}_{\text{Interference}} \cdot \quad U_F}_{\text{Entanglement}} \cdot \underbrace{\underbrace{QFT_2 \otimes^2 I}_{\text{Interference}} \cdot \quad U_F}_{\text{Entanglement}} \cdot \underbrace{^2 H \otimes^2 I}_{\text{Superposition}}$$

$$\underbrace{\qquad\qquad\qquad\qquad\qquad\qquad\qquad\qquad}_{h = 2\text{times}}$$

**Fig. 55**

Quantum Gate G, *h=3*

Quantum Gate G, *h=3*

$$G = \underbrace{\underbrace{QFT_2 \otimes^2 I}_{\text{Interference}} \cdot \underbrace{U_F}_{} \cdot \underbrace{} \cdot \underbrace{\underbrace{QFT_2 \otimes^2 I}_{\text{Interference}} \cdot \underbrace{U_F}_{}}_{\text{Entanglement}} \cdot \underbrace{^2 H \otimes^2 I}_{\text{Superposition}}}_{h = 3\text{times}}$$

Fig. 56

•Input: Binary function
•Output: Find $x0$ with high
probability

$$f\left(x \in \{0,1\}^n\right) = \begin{cases} 1, & x = x_0 \\ 0, & x \neq x_0 \end{cases}$$

Property of function $f$:

$$f\left(x \in \{0,1\}^n\right) = \begin{cases} 1, x = x_0 \\ 0, x \neq x_0 \end{cases}$$

Quantum
Search
Algorithm

Probabilistic
solution: $x_0$

Input → Random Searching → Output

Fig. 57

EP 1 672 569 A1

| N | Design step definition |
|---|---|
| 0 | **Step 0: Encoder**<br>Step 0.1: Injective function F building<br>Step 0.2: Preparation of map table for entanglement operator $U_f$ |
| 1 | **Step 1: Preparation of quantum operators**<br>Step 1.1: Preparation of superposition operator<br>Step 1.2: Preparation of entanglement operator using information  from step 0.2<br>Step 1.3: Preparation of interference operator<br>Step 1.4: Quantum gate assembly |
| 2 | **Step 2: Algorithm execution**<br>Step 2.1: Application of superposition operator<br>Step 2.2: Application of entanglement operator<br>Step 2.3: Application of interference operator<br>Step 2.4: Repeat steps  2.2 and 2.3 **h** times<br>Step 2.5: Measurement and interpretation of the output |

FIG. 58

EP 1 672 569 A1

FIG. 59

$$f(x \in \{0,1\}^3) = \begin{cases} 1, x = 011 \\ 0, x \neq 011 \end{cases}$$

$$f(x \in \{0,1\}^3) = \begin{cases} 1, x = 101 \\ 0, x \neq 101 \end{cases}$$

FIG. 60

$$f\left(x \in \{0,1\}^3\right) = \begin{cases} 1, x \in \{011,101\} \\ 0, x \notin \{011,101\} \end{cases}$$

$$f\left(x \in \{0,1\}^3\right) = \begin{cases} 1, x \in \{010,100,110\} \\ 0, x \notin \{010,100,110\} \end{cases}$$

FIG. 61

$$H = \frac{1}{\sqrt{2}} \begin{pmatrix} 1 & 1 \\ 1 & -1 \end{pmatrix}$$

$$^{n+1}H = \overset{n+1}{\underset{1}{\otimes}} \frac{1}{\sqrt{2}} \begin{pmatrix} 1 & 1 \\ 1 & -1 \end{pmatrix}$$

$n+1$

Superposition operator

**Fig. 62**

EP 1 672 569 A1

Fig. 63

EP 1 672 569 A1

$$U_F[\tau(s)] = \tau[F(s)]$$

$$f(x \in \{0,1\}^3) = \begin{cases} 1, x \in \{011,101\} \\ 0, x \notin \{011,101\} \end{cases}$$

$$f(x \in \{0,1\}^3) = \begin{cases} 1, x \in \{010,100,110\} \\ 0, x \notin \{010,100,110\} \end{cases}$$

**Fig. 64**

Fig. 65

$$^{n+1}H = \overset{n+1}{\underset{1}{\otimes}} \frac{1}{\sqrt{2}}\begin{pmatrix} 1 & 1 \\ 1 & -1 \end{pmatrix} = ^n H \otimes H = \left[ \overset{n}{\underset{1}{\otimes}} \frac{1}{\sqrt{2}}\begin{pmatrix} 1 & 1 \\ 1 & -1 \end{pmatrix} \right] \otimes \frac{1}{\sqrt{2}}\begin{pmatrix} 1 & 1 \\ 1 & -1 \end{pmatrix}$$

Superposition

$$D_n \otimes I = D_n \otimes \begin{pmatrix} 1 & 0 \\ 0 & 1 \end{pmatrix}$$

Interference

**Fig. 66**

EP 1 672 569 A1

| | |
|---|---|
| If measured basis vector: | $$\underbrace{\left| x_0^1 \cdots x_0^{\;n} x_0^{\;n+1} \right\rangle}_{n+1 \text{ qubits}}$$ |
| Consists of: | $$\underbrace{\left| x_0^1 \cdots x_0^{\;n} \right\rangle}_{\boxed{n \text{ qubits of computational basis}}} \otimes \underbrace{\left| x_0^{\;n+1} \right\rangle}_{\boxed{1 \text{ qubit of measurement basis}}}$$ |
| Then searched argument was: | $$\left. x_0 = \underbrace{x_0^1 \cdots x_0^{\;n}}_{n \text{ bits}} \right\} \Rightarrow \boxed{\begin{array}{c} \text{Answer of} \\ \text{Quantum} \\ \text{Searching} \end{array}}$$ |

**Fig. 68a**

FIG. 67

FIG. 68C

Pre-Prototypal Board Implementing the 3-Q-bit version
of Grover's Quantum Search Algorithm

**Fig. 69**

FIG. 70

FIG. 71

EP 1 672 569 A1

FIG. 72

FIG. 73

134

FIG. 74

FIG. 75

Fig. 76

**European Patent Office**

## EUROPEAN SEARCH REPORT

Application Number

EP 04 10 6715

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ULYANOV S V: "Quantum soft computing in control process design: quantum genetic algorithms and quantum neural network approaches" PROCEEDINGS OF THE WORLD AUTOMATION CONGRESS (IEEE CAT. NO.04EX832C) IEEE PISCATAWAY, NJ, USA, vol. 17, 28 June 2004 (2004-06-28), pages 99-104 vol.1, XP002357333 * page 99, line 1 - page 101, line 1; figures 1,2 * ----- | 1-3,5, 11,12 | G06N1/00 |
| D,X | GIRALDI: "Genetic Algorithms and Quantum Computation"[Online] 4 March 2004 (2004-03-04), pages 1-27, XP002357334 Retrieved from the Internet: URL:arxiv.org/PS_cache/cs/pdf/0403/0403003 .pdf> [retrieved on 2004-03-04] | 36 | |
| A | * abstract * * page 3, line 28 - page 7, line 18 * * page 15, line 1 - page 20, line 26 * ----- | 1,11 | TECHNICAL FIELDS SEARCHED (IPC) G06N |
| A | NARAYANAN A ET AL: "Quantum-inspired genetic algorithms" PROCEEDINGS OF 1996 IEEE INTERNATIONAL CONFERENCE ON EVOLUTIONARY COMPUTATION (ICEC'96) (CAT. NO.96TH8114) IEEE NEW YORK, NY, USA, 20 May 1996 (1996-05-20), pages 61-66, XP002357335 ISBN: 0-7803-2902-3 * page 61, left-hand column, line 1 - page R, column 21 * ----- -/-- | 1,11,36 | |

~~The present search report has been drawn up for all claims~~

| Place of search | Date of completion of the search | Examiner |
|---|---|---|
| The Hague | 5 December 2005 | Schenkels, P |

EPO FORM 1503 03.82 (P04C01)

**European Patent Office**

## EUROPEAN SEARCH REPORT

Application Number

EP 04 10 6715

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RYLANDER: "Quantum Evolutionary Programming" PROCEEDINGS OF THE GENETIC AND EVOLUTIONARY COMPUTATION CONFERENCE (GECCO-2001), 2001, pages 1005-1011, XP002357336 * page 1005, left-hand column, line 1 - page 1008, left-hand column, line 28 * ----- | 1,11,36 | |
| A | SHUYUAN YANG ET AL: "A genetic algorithm based on quantum chromosome" 2004 7TH INTERNATIONAL CONFERENCE ON SIGNAL PROCESSING PROCEEDINGS (IEEE CAT. NO.04TH8739) IEEE PISCATAWAY, NJ, USA, vol. 2, 31 August 2004 (2004-08-31), pages 1622-1625 vol., XP002357337 ISBN: 0-7803-8406-7 * abstract * ----- | 1,11,36 | |
| | | | TECHNICAL FIELDS SEARCHED (IPC) |

~~The present search report has been drawn up for all claims~~

| Place of search | Date of completion of the search | Examiner |
|---|---|---|
| The Hague | 5 December 2005 | Schenkels, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-29, 36-39

**LACK OF UNITY OF INVENTION**
**SHEET B**

The Search Division considers that the present European patent application does not comply with the requirements of unity of invention and relates to several inventions or groups of inventions, namely:

1. claims: 1-29,36-39

   A method and apparatus of/for  performing a quantum algorithm characterized in that it implements  a genetic algorithm .
   ---

2. claims: 30-34

   A method and hardware subsystem of/for performing a superposition or interference operation by applying a Walsh-Hadamard Operator (H) or an Identity operator (I).
   ---

3. claim: 35

   A quantum gate for running quantum algorithms  characterized in that said circuit means comprises a PROM memory , the cells of which are organized in a square matrix suitable for realizing the unitary matrix.
   ---